# EUROPEAN PATENT APPLICATION

(11) **EP 0 889 432 A2**
(43) Date of publication of application: **07.01.1999**
(21) Application number: 98300597.6
(22) Date of filing: 28.01.1998
(51) Int. Cl.: G06K 9/00

(54) **Roller fingerprint image capturing system**

(30) Priority: 03.07.1997 JP 177507/97
(71) Applicant: FUJITSU LIMITED, Kawasaki-shi, Kanagawa 211-8588 (JP)
(72) Inventor: Shinzaki, Takashi, Nakahara-ku, Kawasaki-shi, Kanagawa 211 (JP); Yokoyama, Ken, Nakahara-ku, Kawasaki-shi, Kanagawa 211 (JP); Fujii, Yusaku, Nakahara-ku, Kawasaki-shi, Kanagawa 211 (JP); Tagawa, Tomohiko, Takatsu-ku, Kawasaki-shi, Kanagawa, 213 (JP); Nikaido, Takashi, Takatsu-ku, Kawasaki-shi, Kanagawa, 213 (JP)
(74) Representative: Stebbing, Timothy Charles

(57) **Abstract**

A rolled fingerprint image capturing system aiming at providing a system capable of capturing an image of a precise rolled fingerprint by a simple operation, comprises an image inputting unit for inputting in time-series the fingerprint image of the finger rolled on an input surface, a characteristic point detecting unit(7) for detecting a characteristic point of the fingerprint image from each set of frame data, a synthetic area determining unit for determining an area to be extracted for synthesis in accordance with a position of the characteristic point, an image extracting unit(10) for extractingimage data in the area from the frame data, and an image synthesizing (11) unit for synthesizing the images by rewriting the image data corresponding to the area of a synthesized frame obtained by synthesizing the data up to the frame data just anterior to the above frame data, into the image data extracted by the image extracting unit (10).

## Description

The present invention relates to a rolled fingerprint image capturing system for capturing image of a fingerprint at a high precision.

In the case of collating a fingerprint and a palm print, there has been used a system for inputting images of the fingerprint and the palm print and collating previously inputted images of the fingerprint and the palm print to the inputted images.

According to this system, as a method of inputting the images of the fingerprint and the palm print, there has been employed a method of pressing a finger and a palm coated with an ink on the surface of paper, transferring lines of rugged patterns forming the fingerprint and the palm print, and reading the rugged patterns transferred on the paper surface by use of an image scanner.

The above-described method, however, involves an indirect laborious operation of coating the ink on the finger and the palm, and strongly pressing the finger and the palm on the paper surface in order to precisely transfer the fingerprint and the palm print on the paper surface. Particularly when capturing the fingerprint of the finger, the finger is required to roll on the paper surface, at which time the finger is easy to deviate. The fingerprint therefore becomes hard to be precisely transferred on the paper surface. Then, if the fingerprint could not sharply be transferred due to the deviation of the finger etc, the finger must be recoated with the ink, and the fingerprint must be transferred on a new sheet of paper prepared.

Under such circumstances, there was requested a method of directly capturing the fingerprint and the palm print without a necessity for the ink and the paper etc. In response to this request, a fingerprint image mapping apparatus is disclosed in (1) Japanese Patent Application Publication No.60-500196. This fingerprint image mapping apparatus is an apparatus for capturing a fingerprint image of the finger by inserting the finger into a glass tube and rolling the finger while being in contact with an internal surface of the glass tube.

Proposed also is (2) a method of making a primary imaging device scan in longitudinal and lateral directions of the finger and rolling the finger synchronizing with a motion of the primary imaging device.

There is , however, a problem inherent in the apparatus (1) described above, wherein the finger easily deviates because of a part of the finger touching on the glass tube if the fingerprint image of the finger having a width smaller than an inside diameter of the glass tube is captured, and only a partial fingerprint image can be captured.

Moreover, according to the method (2), a rolling velocity of the finger must be kept constant corresponding to the motion of the primary imaging device, and it is not easy to capture the precise fingerprint image.

in view of the problems given above, a system is needed capable of precisely capturing a whole fingerprint by a simple operation.

The present invention adopts the following constructions.

According to one aspect of the present invention, a rolled fingerprint image capturing system comprises: an image inputting unit for inputting a fingerprint image of a finger which is rolled and imprinted on an input surface on a frame unit, a characteristic point detecting unit for detecting a position of a characteristic point of the fingerprint image from the frame data, a synthetic area determining unit for determining an area to be extracted for synthesization in accordance with the position of the characteristic point, an image extracting unit for extracting, from the frame data, image data in the synthetic area determined by the synthetic area determining unit, and an image synthesizing unit for rewriting image data in the area corresponding to the synthetic area of a synthesized frame obtained by synthesizing the frame data inputted before the image inputting unit inputs the frame data, into the image data extracted by the image extracting unit.

Based on the construction given above, when a fingerprint examine rolls the finger on the input surface, the fingerprint image at that time is inputted on the frame unit. Then, plural sets of frame data inputted during a period from a start of the roll to an end thereof, are synthesized corresponding to the positions of the characteristic points of the respective sets of frame data, thereby generating a rolled fingerprint image.

According to the present invention, when synthesizing the fingerprint images, the synthesizing process is executed based on the characteristic points of the fingerprint. Hence, it is possible to judge an end and an interruption of rolling of the finger on the input surface ad to finish and interrupt the process in accordance with the end and the interruption of rolling of the finger. It is therefore feasible to generate the precise impression image without executing a double process of the same fingerprint image.

Further, the rolled fingerprint image capturing system may comprise a finger rolling direction judging unit for predicting a roll advancing direction of the finger placed on the input surface in accordance with the position of the characteristic point. The synthetic area determining unit includes a synthetic fiducial position determining unit for determining a position of a boundary of the area that should be extracted from the frame data in accordance with the position of the characteristic point, and a synthetic area determining unit for deeming, as a synthetic image area, an area positioned in the roll advancing direction on the basis of the boundary position.

Furthermore, the finger rolling direction judging unit may judge whether or not the characteristic point is positioned within a half of the area on one side of the frame or a half of the area on the other side of the frame, judges that the finger roll advancing direction is set in a direction from one side toward the other side of the frame when the characteristic point is positioned within the half of area on one side of the frame, and judges that the finger roll advancing direction is set in a direction from the other side toward one side of the frame when the characteristic point is positioned in the half of area on the other side of the frame.

Moreover, the synthetic area determining unit may deem, as a synthetic area, only an area positioned within a predetermined range in the roll advancing direction on the basis of the boundary position.

in an embodiment , the rolled fingerprint image capturing system further comprises a finger width detecting unit for detecting one edge on one side in a lateral direction of the finger and an edge on the other side by scanning the frame data and deeming a distance between these edges in the lateral direction as a width of the finger. The synthetic area determining unit may determine the predetermined range in accordance with the width of the finger.

Further, if the position of the characteristic point of a second set of frame data of two sets of consecutive frame data does not move in the finger roll advancing direction on the basis of a position of a characteristic point of a first set of frame data, the synthetic fiducial position determining unit may determine a boundary position by deeming, as a characteristic point of the second set of frame data, a position in which the characteristic point of the first set of frame data moves a predetermined distance in the roll advancing direction.

Moreover, the rolled fingerprint image capturing system may comprise a finger rolling direction judging unit for predicting a roll advancing direction of the finger placed on the input surface in accordance with the position of the characteristic point, and an end-of-roll judging unit for deeming that a roll of the finger placed on the input surface is ended if the characteristic point of each set of frame data of a predetermined number of sets of frame data does not move in the finger roll advancing direction on the basis of the characteristic point of the frame data just anterior thereto.

Further, the characteristic point detecting unit may include a first characteristic point detecting unit for deeming a front edge of the finger in a longitudinal direction as a first characteristic point by scanning the frame data inputted by the fingerprint image inputting unit, and a second characteristic point detecting unit for deeming, as a second characteristic point, an edge of the finger in the lateral direction thereof in the roll advancing direction by scanning the frame data.

In this case, the synthetic fiducial position determining unit, if the first characteristic point of the second set of frame data of the two sets of consecutive frame data does not move in the finger roll advancing direction on the basis of the first characteristic point of the first set of frame data, and if the second characteristic point of the second set of frame data moves in the finger roll advancing direction on the basis of the second characteristic point of the first set of frame data, deems a value obtained by substituting a distance at which the second characteristic point of the second set of frame data moves from the second characteristic point of the first set of frame data into a predetermined function, as a distance at which the first characteristic point of the second set of frame data moves from the first characteristic point of the first set of frame data, determines a position of the first characteristic point of the second set of frame data, and thus determines a boundary position in accordance with the position of the first characteristic point determined.

Further, the characteristic point detecting unit may include a first characteristic point detecting unit for deeming a front edge of the finger in a longitudinal direction as a first characteristic point by scanning the frame data inputted by the fingerprint image inputting unit, and a second characteristic point detecting unit for deeming, as a second characteristic point, an edge of the finger in the lateral direction thereof in the roll advancing direction by scanning the frame data. In this case, the synthetic fiducial position determining unit, if the first characteristic point of the second set of frame data of the two sets of consecutive frame data does not move in the finger roll advancing direction on the basis of the first characteristic point of the first set of frame data, and if the second characteristic point of the second set of frame data moves in the finger roll advancing direction on the basis of the second characteristic point of the first set of frame data, deems a value obtained by substituting a position of the second characteristic point of the second set of frame data into a predetermined function, as a position of the first characteristic point of the second set of frame data, and thus determines a boundary position.

Preferably, the characteristic point detecting unit scans the frame data in parallel to the finger roll advancing direction, deems as a first characteristic point a position in which a pixel having a pixel value equal to or greater than a predetermined value is detected for the first time, detects a scan line with a shortest distance from the position in which the pixel having the pixel value equal to or greater than the predetermined value is detected for the first time by each scan line to a proximal edge of each scan line, and deems as a second characteristic point a position in which the pixel having the pixel value equal to or greater than the predetermined value is detected for the first time by that scan line.

Moreover, the rolled fingerprint image capturing system may further comprise an end-of-roll judging unit for deeming that a roll of the finger is ended when detecting that the first characteristic point does not exist within a predetermined area of the frame data.

Furthermore, the rolled fingerprint image capturing system may further comprise an end-of-roll judging unit for deeming that the roll of the finger is ended when detecting that the characteristic point of each set of frame data in a predetermined number of sets of consecutive frame data does not move in the finger roll advancing direction on the basis of the characteristic point of the frame data just anterior thereto.

Moreover, the rolled fingerprint image capturing system may further comprise an end-of-roll judging unit for deeming that the roll of the finger is ended when judging that the first characteristic point does not exist within the predetermined area of the frame data, and when judging that the second characteristic point of each set of frame data in the predetermined number of sets of consecutive frame data does not move in the finger roll advancing direction on the basis of the second characteristic point of the frame data just anterior thereto, or when judging that the first characteristic point of the second set of frame data in two sets of consecutive frame data does not move in the finger roll advancing direction on the basis of the first characteristic point of the first set of frame data and judging that the second characteristic point of the second set of frame data does not move in the finger roll advancing direction on the basis of the second characteristic point of the first set of frame data.

Additionally, the rolled fingerprint image capturing system may further comprise an end-of-roll judging unit for deeming that the roll of the finger is ended when judging that the first characteristic point and the second characteristic point of each set of frame data in the predetermined number of sets of consecutive frame data does not move in the finger roll advancing direction on the basis of the first characteristic and the second characteristic point of the frame data just anterior thereto.

Moreover, the rolled fingerprint image capturing system may further comprise an end-of-roll judging unit for deeming that the roll of the finger is ended when judging that the characteristic point of each set of frame data in the predetermined number of sets of consecutive frame data moves in a direction opposite to the finger roll advancing direction on the basis of the characteristic point of the frame data just anterior thereto.

Furthermore, the second characteristic point detecting unit may detect the second characteristic points of the first set of frame data and the second set of frame data as far as the first characteristic point of the second set of frame data in the two sets of consecutive frame data does not move in the finger roll advancing direction on the basis of the first characteristic point of the first set of frame data.

Moreover, the characteristic point detecting unit, when detecting the characteristic point of the frame data, may scan only an area positioned in the finger roll advancing direction on the basis of the boundary position determined by the frame data just anterior to the above frame data.

Additionally, the rolled fingerprint image capturing system may further comprise an interruption-of-roll judging unit for, when judging that the characteristic points of the two sets of consecutive frame data do not move in the roll advancing direction and judging that all the characteristic points of the predetermined number of sets of frame data containing the two sets of frame data does not move in the direction reverse to the roll advancing direction on the basis of the characteristic point of the frame data just anterior thereto, deeming that the roll of the finger is interrupted, and being set on standby for next frame data.

Reference is made, by way of example, to the accompanying drawings, in which:
FIG. 1 is a diagram schematically showing a construction of a rolled fingerprint image capturing apparatus embodying the present invention;
FIG. 2 is an explanatory view showing a rolling procedure of a finger placed on a first side surface 2a of a prism 2;
FIG. 3 is a diagram illustrating a hardware construction of an image processing circuit;
FIG. 4 is a block diagram showing a construction of the image processing circuit according to functions;
FIG. 5 is an explanatory view (1) showing a method of detecting a vertical peak point;
FIG. 6 is an explanatory view (1) showing a method of judging a finger roll advancing direction;
FIG. 7 is an explanatory view (2) showing a method of judging the finger roll advancing direction;
FIG. 8 is an explanatory view showing an image synthesizing process in a case where a vertical line passing through a vertical peak point serves as a synthetic fiducial position;
FIG. 9 is an explanatory view (1) showing a frame data extracting procedure;
FIG. 10 is an explanatory view (2) showing the frame data extracting procedure;
FIG. 11 is an explanatory view showing a frame data synthesizing procedure;
FIG. 12 is a diagram showing an image processing flow in an embodiment 1;
FIG. 13 is a diagram showing a roll advancing direction judging flow;
FIG. 14 is an explanatory view (1) showing a procedure of determining the synthetic fiducial position;
FIG. 15 is an explanatory view (2) showing a procedure of determining the synthetic fiducial position;
FIG. 16 is an explanatory view (1) showing a method of detecting a horizontal peak point;
FIG. 17 is a view showing an example of the frame data when the finger is not correctly placed on the first side surface 2a of the prism 2;
FIG. 18 is an explanatory view showing a procedure of transferring a first set of frame data;
FIG. 19 is a diagram showing another embodiment of an optical unit;
FIG. 20 is a block diagram illustrating a construction of the image processing circuit according to functions in an embodiment 2;
FIG. 21 is an explanatory view (2) showing a method of detecting the horizontal peak point;
FIG. 22 is an explanatory view (3) showing the method of detecting the horizontal peak point;
FIG. 23 is a diagram showing an image processing flow in the embodiment 2;
FIG. 24 is an explanatory view (3) showing a procedure of determining the synthetic fiducial position;
FIG. 25 is an explanatory view (4) showing a procedure of determining the synthetic fiducial position;
FIG. 26 is an explanatory view (2) showing a method of detectingthe vertical peak point;
FIG. 27 is an explanatory view (4) showing a method of detecting the horizontal peak point;
FIG. 28 is an explanatory view (5) showing a method of detecting the horizontal peak point;
FIG. 29 is an explanatory view (3) showing the frame data extracting procedure;
FIG. 30 is an explanatory view showing a method of detecting a width of the finger;
FIG. 31 is an explanatory view (1) showing a method of detecting the vertical peak point in an embodiment 5;
FIG. 32 is an explanatory view showing a method of detecting the vertical peak point in the embodiment 5;
FIG. 33 is a diagram showing an image processing flow in the embodiment 5;
FIG. 34 is a diagram showing an image processing flow in an embodiment 6;
FIG. 35 is an explanatory view showing a method of detecting the vertical peak point and the horizontal peak point by one scanning process;
FIG. 36 is a diagram illustrating a construction of' the image processing circuit according to functions in an embodiment 7;
FIG. 37 is a diagram showing a image processing flow in the embodiment 7;
FIG. 38 is a diagram showing an image processing flow in an embodiment 8;
FIG. 39 is a view illustrating an example in which the vertical peak point moves in a direction reverse to the roll advancing direction;
FIG. 40 is a diagram showing an image processing flow in an embodiment 9;

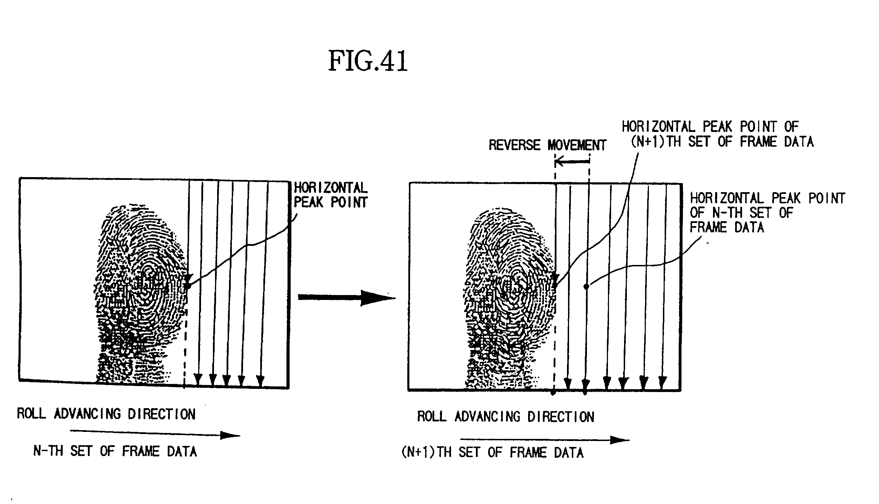

FIG. 41 is a view illustrating an example in which the horizontal peak point moves in the direction reverse to the roll advancing direction;
FIG. 42 is a diagram showing an image processing flow in an embodiment 10;
FIG. 43 is a diagram illustrating a construction of the image processing circuit according to functions in an embodiment 11;
FIG. 44 is a diagram showing an image processing flow in an embodiment 11;
FIG. 45 is a diagram showing an image processing flow in an embodiment 12;
FIG. 46 is a block diagram showing a construction of the image processing circuit according to functions in an embodiment 13;
FIG. 47 is a diagram showing an image processing flow in an embodiment 13;
FIG. 48 is a diagram showing an image processing flow in an embodiment 14;
FIG. 49 is an explanatory view showing a method of scanning second and subsequent sets of frame data;
FIG. 50 is a diagram showing a processing flow when executing an image inputting process by the optical unit and a synthesizing process by the image processing circuit in real time;
FIG. 51 is a diagram showing a processing flow when the synthesizing process is executed by he image processing circuit after the optical unit has finished the image inputting process; and
FIG. 52 is a diagram showing a processing flow when a synthesized image subjected to the synthesizing process is displayed in real time on a screen.

Illustrative embodiments of the present invention will hereinafter be described with reference to the accompanying drawings.

### <Embodiment 1>

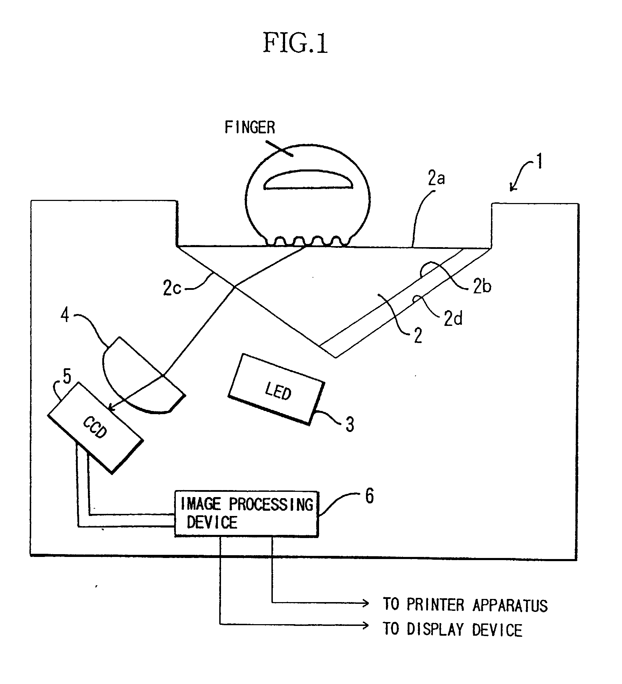

FIG. 1 illustrates a construction of a rolled fingerprint image capturing apparatus to which a rolled fingerprint image capturing method according to the present invention is applied.

The rolled fingerprint image capturing apparatus in the embodiment 1 is constructed of an optical unit consisting of a prism 2 formed in a triangular column shape, a light emitting diode (LED) 3, a condenser lens 4 and a CCD imaging device 5, and of an image processing circuit 6.

The optical unit actualizes an image input mechanism according to the present invention, wherein an object placed on a first side surface 2a among three side surfaces of the prism 2 is irradiated with an optical signal from the LED 3, at which time the optical signal enters the prism 2 from a second side surface 2c of the prism 2. Then, the optical signal is reflected by a contact portion between the object and the first side surface 2a and emerges from the second side surface 2c of the prism 2. The optical signal emerging from the prism 2 is incident on the CCD imaging device 5 via the condenser lens 4.

Note that a third side surface 2b of the prism 2 is coated with a non-reflection coating 2d to prevent an incidence of the optical signal upon the CCD imaging device 5, which is irregularly reflected within the prism 2.

Then, the CCD imaging device 5 is constructed of a photo-electric converting element array for accumulating electric charges corresponding to an intensity of the incident light beam, an electricity accumulation element array having the same areal size as the photo-electric converting element array, an electric charge transferring element for transferring the electric charges accumulated in the photo-electric converting element array to the electricity accumulation element array, and an electric charge transferring element for outputting, per horizontal line, the electric charges transferred to the electricity accumulation element array.

In the thus constructed optical unit, when a finger is placed on the first side surface 2a of the prism 2, only protruded lines of rugged patterns forming a fingerprint of the finger come into contact with the first side surface 2a, and hence only the optical signals reflected by the protruded lines fall upon the CCD imaging device 5 via the condenser lens 4 from the prism 2.

Then, the electric charges are accumulated along the protruded lines of the fingerprint in the photo-electric converting element array of the CCD imaging device 5. Signals outputted from the CCD imaging device 5 change into analog image signal representing an impression of the fingerprint.

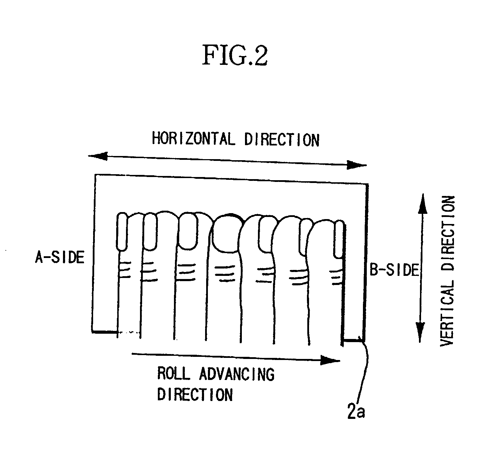

Moreover, as shown in FIG. 2, when the finger is rolled and imprinted in a lateral direction on the first side surface 2a, the optical unit inputs in a time-series manner an image of the impression of the fingerprint imprinted on the first side surface 2a in accordance with the finger rolling. The thus inputted impression image thereof is transmitted to the image processing circuit 6 on a frame unit.

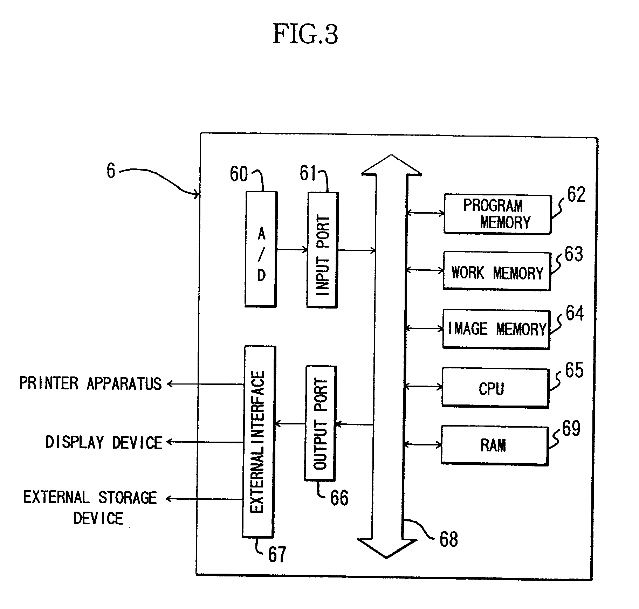

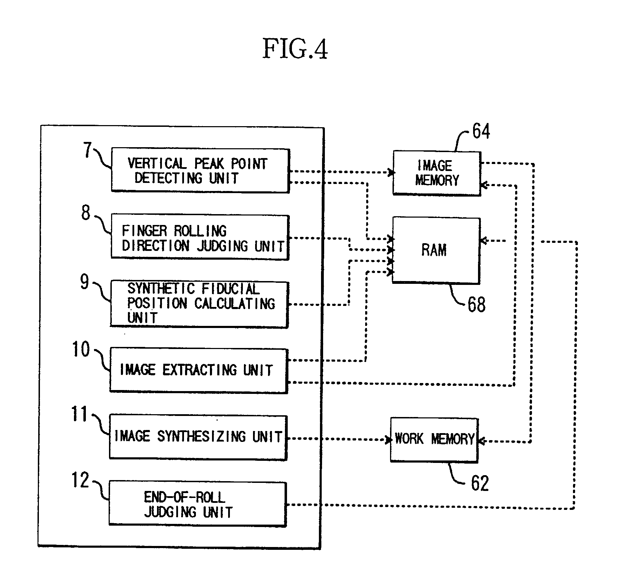

Next, a construction of the image processing circuit 6 will be explained with reference to FIGS. 3 and 4.

FIG. 3 shows a construction of hardware of the image processing circuit 6. This image processing circuit 6 includes an input port 61, a program memory 62, a work memory 63, an image memory 64, a RAM (Random Access Memory) 68, a CPU (Central Processing Unit) 65, and an output port 66, which are all connected to each other through a bus 68.

Then, an A/D converter (A/D) 60 is connected to the input port 61, and an external interface circuit 67 is connected to the output port 66.

Connected also to the image processing circuit 6 are an input device such as a mouse and a keyboard etc, an output device such as a printer and a display etc, and an external storage device such as an optical disk and magnetic disk etc.

The input device is a device for a user of the present apparatus to input various items of data and commands, and is connected to the external interface circuit 67 within the image processing circuit 6.

The output device is a device for outputting the fingerprint image processed by the image processing circuit 6, and is connected to the external interface circuit 67 within the image processing circuit 6.

Moreover, the external storage device is a device for storing the fingerprint image processed by the image processing circuit 6, and is connected to the external interface circuit 67 within the image processing circuit 6.

Next, the A/D converter 60 within the image processing circuit 67 quantizes and samples the analog image signals transmitted from the CCD imaging device 5 on the frame (picture) unit, and outputs these signals as two-dimensional digital image signals. Note that the A/D converter 60 should execute the sampling and quantization with respect to (Xmax X Ymax) pieces of sampling points (pixels) arrayed in matrix on the analog image.

The image memory 64 has at least one frame memory area that is to be stored with frame data outputted from the A/d converter 60.

The program memory 62 stores a software program that should be executed by the CPU 65.

The work memory 63 is used for processing the frame data stored in the image memory 64 in accordance with a predetermined condition.

The RAM 69 stores an arithmetic result etc of the CPU 65.

The CPU 65, when switching ON a power supply, operates based on a bootstrap loader stored in the program memory 62. The CPU 65, after checking each memory, reads an operation system stored in the program memory 62 into work memory 63. Subsequently, the CPU 65 reads an application program operating on the operating system out of the program memory 62 into the work memory 63. Then, the CPU 65 control the respective units in accordance with the application program, and, as a result, each unit functions as an image processing circuit.

Given herein is an explanation of a function of the image processing circuit actualized by the CPU 65 controlling the respective units in accordance with the application program.

FIG. 4 is a block diagram showing a construction of the image processing circuit 6 according to functions thereof.

The image processing circuit 6 includes a vertical peak point detecting unit 7, a finger rolling direction judging unit 8, a synthetic fiducial position calculating unit 9, an image extracting unit 10, an image synthesizing unit 11, and an end-of-roll judging unit 12.

The vertical peak point detecting unit 7 scans the frame data stored in the image memory 64, and detects, as a first characteristic point, such a pixel that a coordinate value in the vertical direction in the image area representing the rugged patterns of the fingerprint (which pixel is hereinafter referred to as a vertical peak point). Then, the vertical peak point detecting unit 7 indicates the RAM 69 to store a coordinate value (hereinafter termed an X-coordinate value: S) of the vertical peak point in the horizontal direction and a coordinate value (hereinafter termed a Y-coordinate value: T) in the vertical direction.

Note that the vertical peak point detecting unit 7 is set to detect the vertical peak point from the pixels having density values above a predetermined threshold value, and is constructed not to mistakenly detect a noise image such as a remaining fingerprint mark and a dust on the first side surface 2a of the prism 2.

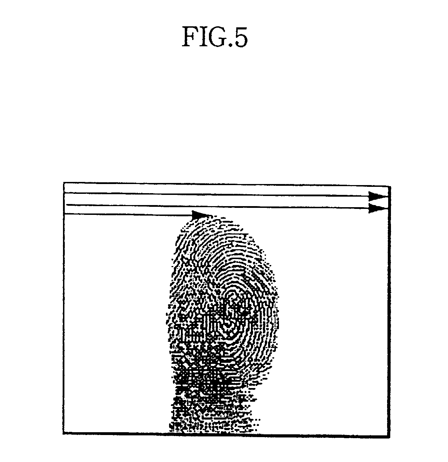

For example, the vertical peak point detecting unit 7, as shown in FIG. 5, scans the frame data sequentially from the uppermost row in the horizontal direction, then judges as a vertical peak point, a position in which the pixel having the density value above the threshold value is detected at first, and indicates the RAM 69 to store the X-Y coordinate values * (S, T) of the vertical peak point.

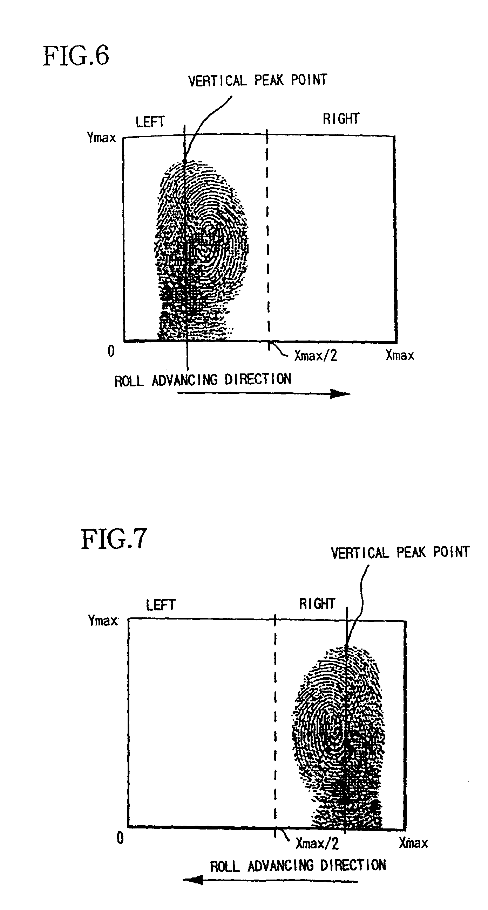

The finger rolling direction judging unit 8, referring to the X-Y coordinate values : (S, T) of the vertical peak point that are stored in the RAM 69, judges whether the vertical peak point is positioned in a left half area of the frame or in a right half area of the frame. For instance, one frame is composed of (Xmax X Ymax) pieces of pixels, and therefore the finger rolling direction judging unit 8, if the X-coordinate value: S of the vertical peak point is smaller than Xmax/2 as shown in FIG. 6, judges that the vertical peak point is positioned in the left half area of the frame. The finger rolling direction judging unit 8 then, if the X-coordinate value : S of the vertical peak point is larger than Xmax/2 as shown in FIG. 7, judges that the vertical peak point is positioned in the right half area of the frame.

Subsequently, the finger rolling direction judging unit 8, when judging that the vertical peak point is positioned in the left half area of the frame, determines that the finger is placed on the left half area of the first side surface 2a of the prism 2 and rolls from a left side to a right side of the first side surface 2a. Further, the finger rolling direction judging unit 8, when judging that the vertical peak point is positioned in the right half area of the frame, determines that the finger is placed on the right half area of the first side surface 2a and rolls from the right side to the left side of the first side surface 2a. The thus judged finger roll advancing directions are stored in the RAM 69.

Next, the synthetic fiducial position calculating unit 9 calculates a fiducial position (a synthetic fiducial position) serving as being fiducial when synthesizing two sets of frame data in accordance with the X-coordinate value : S of the vertical peak point and the roll advancing directions that are stored in the RAM 69. The two sets of frame data connoted herein indicate latest frame data (hereinafter referred to as first frame data) received by the image processing circuit 6, and frame data (hereinafter termed second frame data) obtained by synthesizing images from the frame data received at first by the image processing circuit 6 from the CCD imaging device 5 up to the frame data received just before the first frame data.

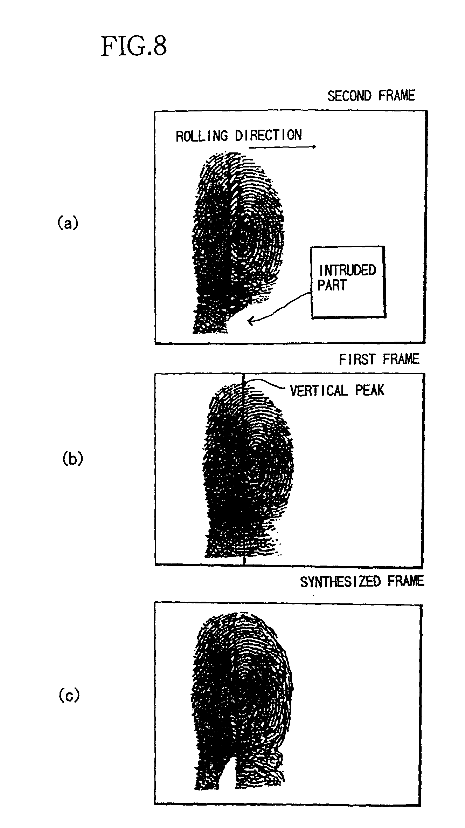

Herein, the synthetic fiducial position may be set on a vertical line : X = S passing through the X-coordinate value : S of the vertical peak point, but an optimal synthetic fiducial position might deviate from the vertical line : X = S, depending on the finger imprint condition and the finger configuration etc. For example, a large non-contact portion exists at a proximal part of the fingerprint image in the second frame fingerprint image (see FIG. 8(a)), and a reduced non-contact portion at the proximal part of the fingerprint image can be seen in the first frame fingerprint image (see FIG. 8(b)). In this case, when synthesizing the first frame and the second frame with the vertical line passing through the vertical peak point of the first frame fingerprint image serving as a synthetic fiducial position, as shown in FIG. 8(c), it follows the non-contact portion of the second frame is left in the synthesized image. In such a case, it is required that the synthetic fiducial position be set in a position where the vertical peak is offset.

Then, in accordance with the embodiment 1, the synthetic fiducial position calculating unit 9 determines an offset quantity of the synthetic fiducial position, wherein the finger position (the position of the vertical peak point) serves as a parameter. To be specific, the synthetic fiducial position calculating unit 9 sets, as the synthetic fiducial position, a position : X = S + d(S) in which the vertical line : X = S passing through the vertical peak point is offset rightward and leftward by a predetermined number of pixels : d(S).

The number of pixels : d(S) is a value determined corresponding to the finger position (the vertical peak point X-coordinate value : S), and is a negative value if the X-coordinate value : S of the vertical peak point is in the left half area of the frame. An absolute value of d(S) becomes larger as it gets more proximal to the left side of the frame (as the X-coordinate value : S of the vertical peak point becomes smaller). Further, d(S) becomes a positive value if the X-coordinate value : S of the vertical peak point is in the right half area of the frame, and the absolute value of d(S) becomes larger as it gets more proximal to the right side of the frame (as the X-coordinate value : S of the vertical peak point becomes larger).

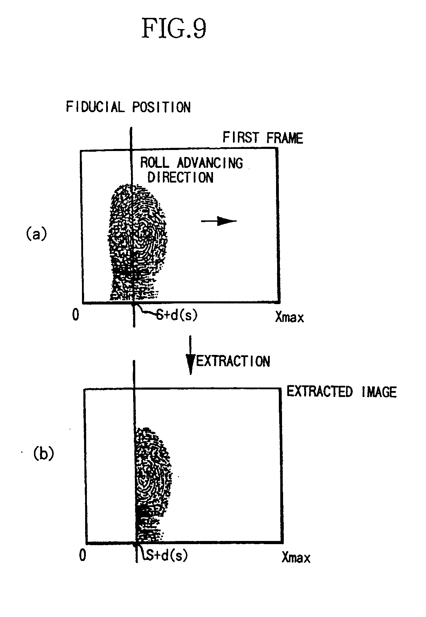

Next, the image extracting unit 10 extracts an image positioned toward the roll advancing direction on the basis of the synthetic fiducial position. More specifically, the image extracting unit 10, when the finger roll advancing direction is a direction from the left side toward the right side of the frame, extracts an image (see FIG. 9(b)) positioned rightward on the basis of the synthetic fiducial position (S + d(S)) out of the first frame data (see FIG. 9(a)).

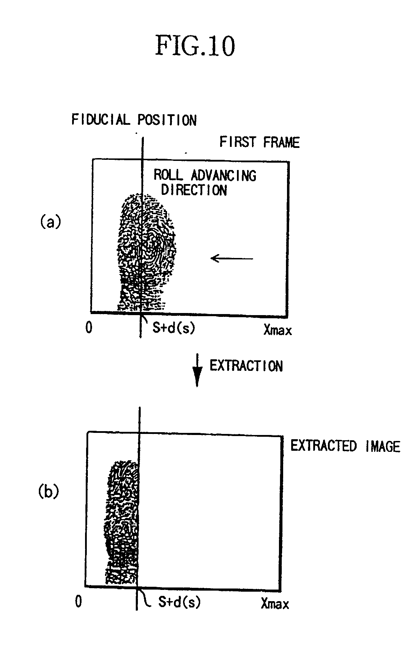

Further, the image extracting unit 10, when the finger roll advancing direction is a direction from the right side toward the left side of the frame, extracts an image (see FIG. 10(b)) positioned leftward on the basis of the synthetic fiducial position (S + d(S)) out of the first frame data (see FIG. 10(a)).

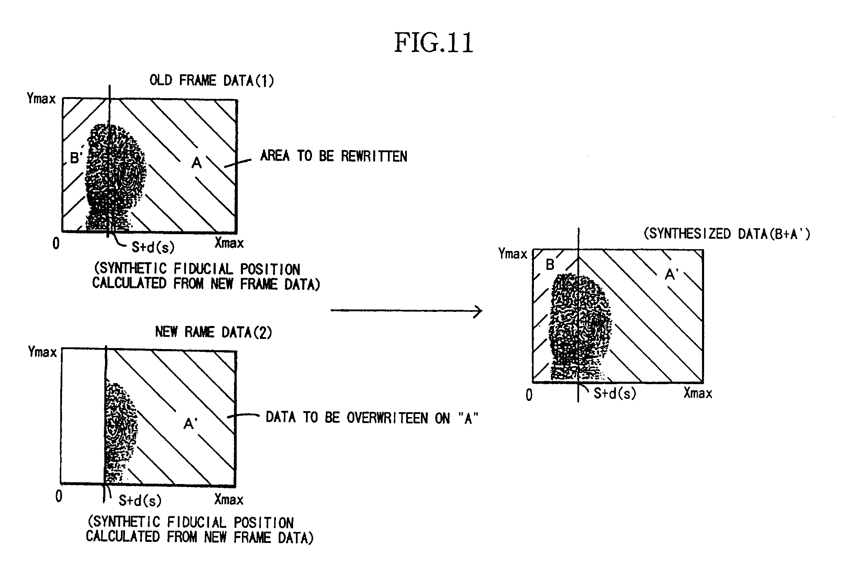

Subsequently, the image synthesizing unit 11, as illustrated in FIG. 11, rewrites the image (the image in an area A of the frame data (1) in FIG. 11) positioned toward the finger roll advancing direction on the basis of the synthetic fiducial position (the synthetic fiducial position calculated from the first frame data) in the second frame data (the frame data (1) in FIG. 11), with the image in an area A' of the frame data (2) in FIG. 11) extracted by the image extracting unit 10 from the frame data (the frame data (2) in FIG. 11).

As a result, the synthesized data consists of an image (an image in an area B of the frame data (1) in FIG. 11) positioned on the opposite side to the finger roll advancing direction on the basis of the synthetic fiducial position with respect to the image constituting the second frame data, and an image (an image in an area A' of the frame data (2) in FIG. 11) positioned in the finger roll advancing direction on the basis of the synthetic fiducial position with respect to the image constituting the first frame data.

Next, the end-of-roll judging unit 12, when judging that the X-coordinate value : S of the vertical peak point does not advance in the roll advancing direction with respect to a predetermined number of sets of consecutive frame data, deems that the finger has finished rolling, and, after transmitting the second frame data stored in the work memory 63 to the external storage device, makes the processes of the respective units come to an end.

The predetermined number of sets of frame data may be determined, wherein a rolling velocity of the finger and the number of frames received by the image processing circuit 6 per unit time serves as parameters, or alternatively a predetermined threshold value may also be set.

Operations of the rolled fingerprint image capturing apparatus 1 will hereinafter be described.

To start with, the rolled fingerprint image capturing apparatus 1, when a user of the present apparatus inputs a fingerprint image take-in start command through the input device, applies a drive voltage to the LED 3 and the CCD imaging device 5 of the optical unit. Then, the optical unit starts inputting a fingerprint image of the finger which is rolled and imprinted on the first side surface 2a of the prism 2, and transmits the inputted image data to the image processing circuit 6.

Herein, when the finger placed on the first side surface 2a of the prism 2 is any one of four fingers excluding the thumb, a thumb-sided part of the finger is at first imprinted on the first side surface 2a and rolled while being imprinted thereon in a direction opposite to the thumb, in which case the finger skin is hard to slip sideways on the first side surface 2a. Further, when the finger placed on the first side surface 2a of the prism 2 is the thumb, a thumb-sided part of the index finger is at first imprinted on the first side surface 2a and rolled while being imprinted thereon in a direction opposite to the index finger, in which case the finger skin is hard to slip sideways on the first side surface 2a.

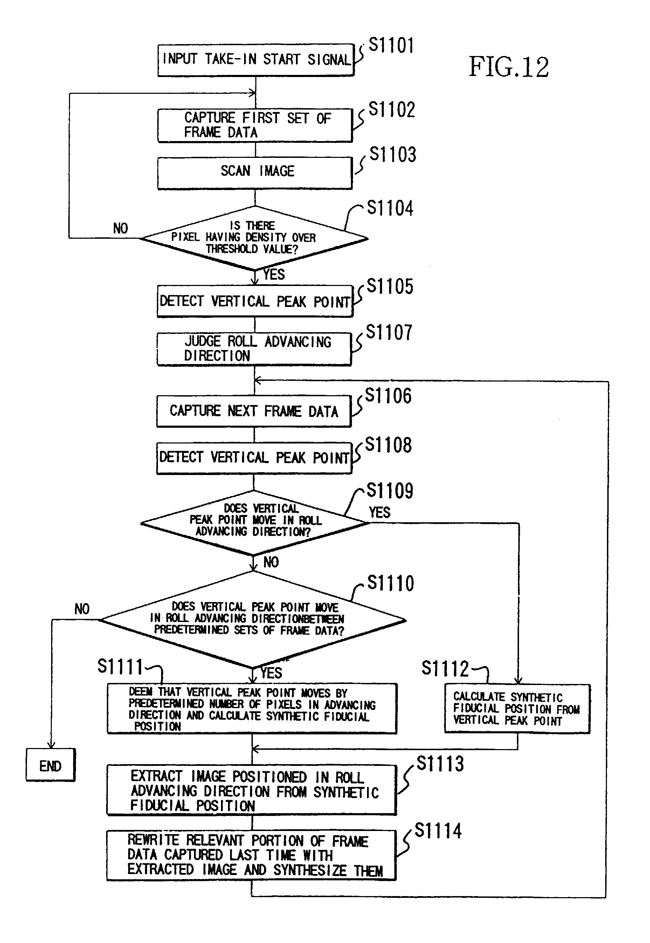

Then, in the image processing circuit 6, the CPU 65 operates in accordance with an image processing flow shown in FIG. 12.

The CPU 65, to begin with, upon an input of the fingerprint image take-in start signal through the input device (S1101), receives a first set of frame data from the CCD imaging device 5 via the A/D converter 60 and the input port 61, and indicates the image memory 64 to store the same frame data (S1102).

Next, the CPU 65 scans the frame data stored in the image memory 64 (S1103), and judges whether or not the pixels having density values above the predetermined threshold value exist within the frame data (S1104).

When judging in S1104 that the pixels having the density values above the threshold value exist within the frame data, the CPU 65, proceeding to S1105, detects a pixel (the vertical peak point) having the maximum Y-coordinate value from the pixels having the density values above the threshold value, and indicates the RAM 69 to store X-Y coordinate values : (S1, T1) of the vertical peak point in a predetermined area thereof.

Further, when judging in S1104 that the pixels having the density values above the threshold value do not exist within the frame data, the CPU 65 re-executes the processes in S1102 and subsequent steps.

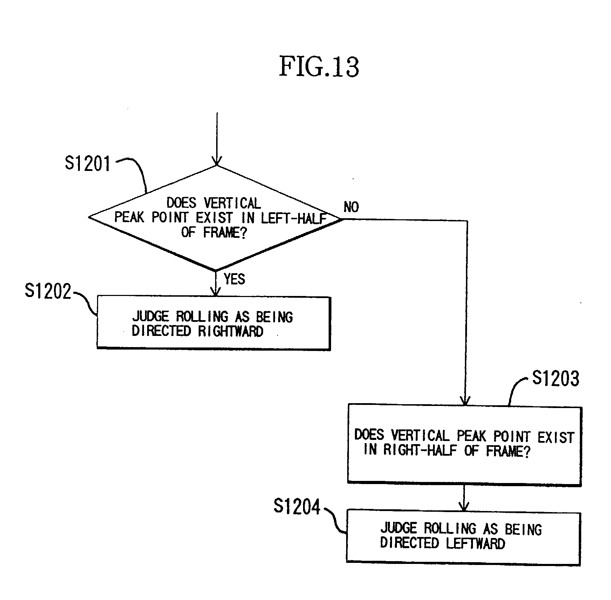

The CPU 65, after finishing the process in S1105 and proceeding to S1106, reads the X-Y coordinate values : (S1, T1) of the vertical peak point that are stored in the predetermined area of the RAM 69, and then executes a roll advancing direction judging flow shown in FIG. 13.

In the roll advancing direction judging flow, the CPU 65, at first judges whether or not an X-coordinate value : S1 of the vertical peak point is smaller than Xmax/2, i.e., whether or not the vertical peak point is positioned in the left half area of the frame (S1201).

When judging in S1201 that the vertical peak point is positioned in the left half area of the frame, the CPU 65 proceeds to S1202, wherein the CPU 65 judges that the finger is placed on the left half area of the first side surface 2a of the prism 2 and rolls from left to right on the first side surface 2a. Then, the CPU 65 indicates the RAM 69 to store a result (data showing the direction from left to right) of the judgement made in S1202 in a predetermined area thereof.

While on the other hand, the CPU 65, when judging that the vertical peak point does not exist in the left half area of the frame, proceeds to S1203, wherein the CPU 65 judges that the vertical peak point exists in the right half area of the frame.

Subsequently, the CPU 65 moves forward to step S1204 and judges therein that the finger is placed on the right half area of the first side surface 2a of the prism 2 and rolls from right to left on the first side surface 2a. Then, the CPU 65 indicates the RAM 69 to store a result (data showing a direction from right to left) of the judgement made in S1204 in a predetermined area thereof.

Herein, returning to the image processing flow in FIG. 12, the CPU 65 transfers the first set of frame data stored in the image memory 64 to the work memory 63, then receives the second set of frame data from the CCD imaging device 5, and indicates the image memory 64 to store the same frame data (S1107).

Subsequently, the CPU 65 detects the vertical peak point by scanning the second set of frame data, and indicates the RAM 69 to store X-Y coordinate values : (S1, T1) of the detected vertical peak point in a predetermined area thereof (S1108).

Next, the CPU 65 reads from the RAM 69 the X-coordinate value : S1 of the vertical peak point of the first set of frame data, the X-coordinate value : S2 of the vertical peak point of the second set of frame data, and the data showing the finger roll advancing direction. Then, the CPU 65 judges based on the vertical peak point of the first set of frame data whether or not the vertical peak point of the second set of frame data moves in the finger roll advancing direction (S1109).

When judging in S1109 that the vertical peak point of the second set of frame data moves in the roll advancing direction, the CPU 65 proceeds to S1112, wherein the CPU 65 calculates a synthetic fiducial position : X = S2 + d(S2) by use of the X-coordinate value : S2 of the vertical peak point of the second set of frame data and indicates the RAM 69 to store this fiducial position.

While on the other hand, when judging in S1109 that the vertical peak point of the second set of frame data does not move in the roll advancing direction, the CPU 65 proceeds to S1110 and judges therein whether or not the vertical peak point moves in the roll advancing direction with respect to the predetermined number of sets of consecutive frame data.

Then, when judging in S1110 that the vertical peak point moves in the roll advancing direction with respect to the predetermined number of sets of consecutive frame data, the CPU 65 proceeds to S1111 and deems therein that the vertical peak point of the second set of frame data has moved by a predetermined number of pixels in the roll advancing direction from the vertical peak point of the first set of frame data. Subsequently, the CPU 65 calculates the synthetic fiducial position : X = S2 + d(S2) by using the X-coordinate value : S2 of the vertical peak point that has been deemed to be moved, and gets the RAM 69 stored with this position.

Incidentally, the CPU 65 may deem in Sllll that the synthetic fiducial position instead of the vertical peak point moves by a predetermined number of pixels.

The CPU 65, after finishing the execution of the process in Sllll or S1112, proceeds to S1113 and extracts therein an image positioned in the area in the finger roll advancing direction on the basis of the synthetic fiducial position : X = S2 + d(S2) out of the second set of frame data stored in the image memory 64.

Then, the CPU 65 proceeds to S1114 and rewrites therein, into the image read in S1113, the image positioned in the area in the finger roll advancing direction on the basis of the synthetic fiducial position : X = S2 + d(S2) with respect to the first set of frame data stored in the work memory 62.

Subsequently, the CPU 65, returning to S1107, clears the second set of frame data stored in the image memory 64, receives a next set of frame data (a third set of frame data) from the CCD imaging device 5, and indicates the image memory 64 to store the same frame data.

Next, with respect to the third set of frame data, the CPU 65 executes the same process as the process relative to the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, when judging in S1110 that the vertical peak point does not move in the roll advancing direction with respect to the predetermined number of sets of consecutive frame data, judges that the input process of the fingerprint image through the optical unit is ended, and, after transmitting the synthetic image data stored in the work memory 63 to the external storage device, finishes the execution of the image processing flow.

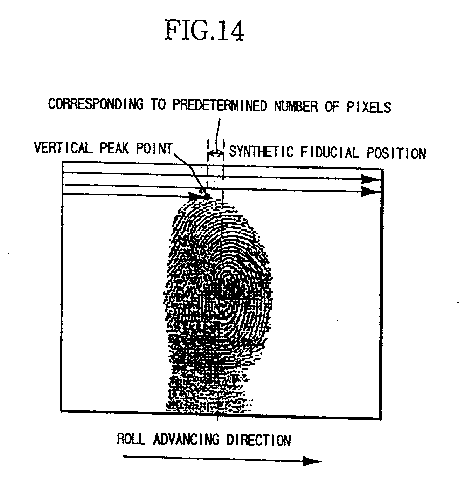

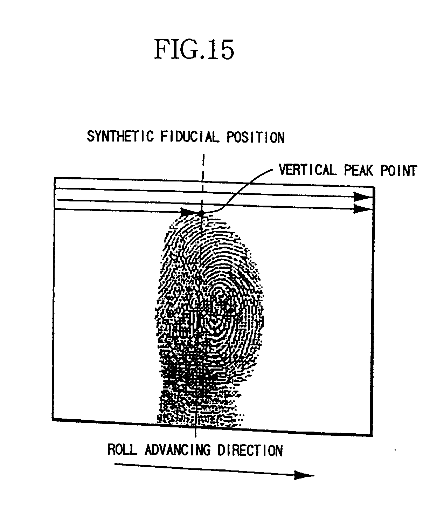

Note that the synthetic fiducial position may be, as illustrated in FIG. 14, set either in a position in which the X-coordinate value of the vertical peak point is moved by a predetermined number of pixels in the roll advancing direction, or to the same X-coordinate value as the vertical peak point as shown in FIG. 15.

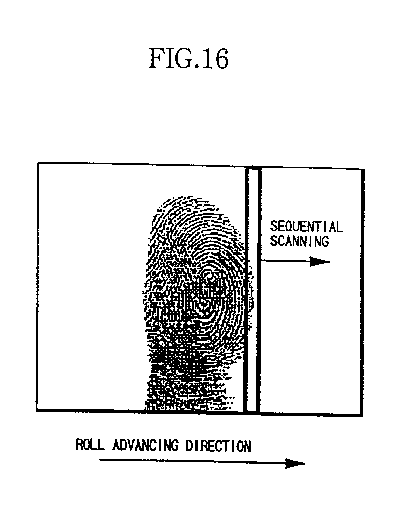

Further, as a method of detecting the X-coordinate value of the vertical peak point, there has been discussed the method of detecting the position of the vertical peak point itself by scanning the frame sequentially from the uppermost row in the horizontal direction in the embodiment 1. It may be, however, adopted that, as shown in FIG. 16, the frame is scanned in the vertical direction (on the column unit), the number of pixels having the density values above the threshold value is counted per column, and an X-coordinate value of the column containing the maximum number of pixels having the density values above the threshold value is deemed as an X-coordinate value of the vertical peak point.

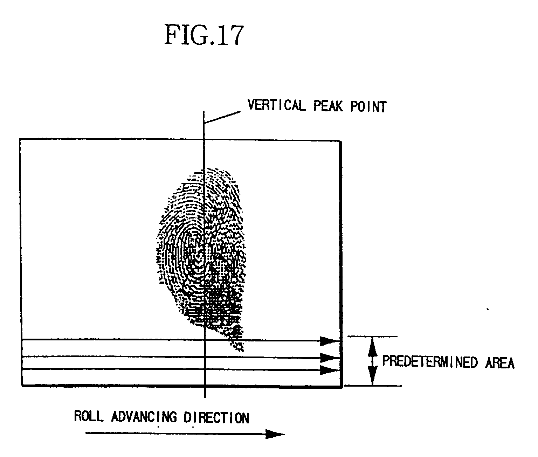

Moreover, when scanning the frame data, as shown in FIG. 17, if the pixel at the lowest edge of the frame, i.e., the pixel having the minimum Y-coordinate value among the pixels having the density values above the threshold value is not detected within a range of a predetermined number of rows from the lowest row of the frame, the CPU 65 may deem that the finger is not correctly placed on the first side surface 2a of the prism 2. In this case, the image processing circuit 6 may be provided with an alarm sound generator and an alarm lamp etc, and an alarm sound is emitted, or the alarm lamp is lit up when judging that the finger is not correctly placed on the first side surface 2a of the prism 2.

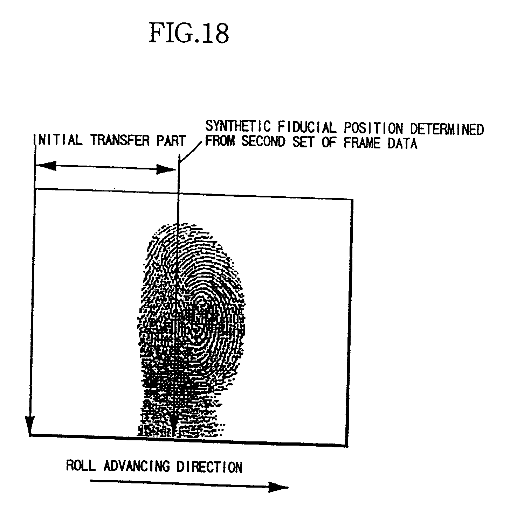

Moreover, when the image memory 64 is stored with the second set of frame data in S1107 in the image processing flow, the first set of frame data is not transferred to the work memory 63, and the first and second sets of frame data may be transferred to the work memory 63 when the image memory 64 is stored with the third set of frame data. On this occasion, with respect to the first set of frame data is, as illustrated in FIG. 18, only the image positioned in the area in the direction opposite to the roll advancing direction on the basis of the synthetic fiducial position : X = S2 + d(S2) that is determined from the second set of frame data.

As discussed above, the rolled fingerprint image capturing apparatus in accordance with the embodiment 1, is capable of capturing the image of the rolled fingerprint simply by arbitrarily rolling the finger on the first side surface 2a of the prism 2, and hence the operations burdened on the user of the present apparatus as well as on a fingerprint examinee can be simplified.

Further, in accordance with the embodiment 1, the rolling direction of the finger is predicted, and the processing is implemented based on the pixel (the vertical peak point) representing the uppermost point of the finger. This makes it feasible to easily judge that the rolling of the finger is stopped in the process of capturing the fingerprint or when finishing the capturing process and to prevent the image of the same part of the finger from being captured double.

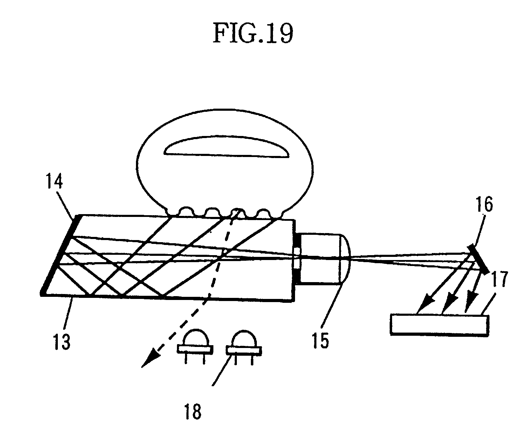

Note that the optical unit based on the prism optical system constructed of the prism 2, the light emitting diode (LED) 3, the condenser lens 4 and the CCD camera 5 has been exemplified as the image inputting mechanism in accordance with the embodiment 1 of the present invention. The optical unit is not, however, confined to this construction but may be the one based on a transparent flat plate optical system constructed of, e.g., as illustrated in FIG. 19, a light guide flat plate 13, an LED 18 for irradiating an object with the light beam which is placed on an upper surface of the light guide plate 13, a reflecting mirror 14 bonded to one side surface of the light guide plate 13, a condenser lens 15 attached to the other side surface of the light guide plate 13, and a mirror 16 for making an optical signal emerging from the condenser lens 15 incident on a light receiving member of a CCD imaging device 17, or may also be the one constructed to recognize a configuration of the object pressed on a inspection plate and the one constructed to recognize the configuration from a temperature distribution on the inspection plate.

In short, the optical unit may be so constructed as to be capable of recognizing the rugged patterns of the fingerprint of the finger, following after the rolling of the finger.

### <Embodiment 2>

A second embodiment of the rolled fingerprint image capturing apparatus to which the rolled fingerprint image capturing method according to the present invention is applied, will be described with reference to the drawings. Herein, only a construction different from the first embodiment discussed above will be explained.

The first embodiment has dealt with the example of utilizing the X-coordinate values of the vertical peak point as the parameter for determining the synthetic fiducial position and the parameter for judging the end of rolling. In the embodiment 2, however, there will be explained an example of utilizing a second characteristic point (a horizontal peak point) according to the present invention as a parameter.

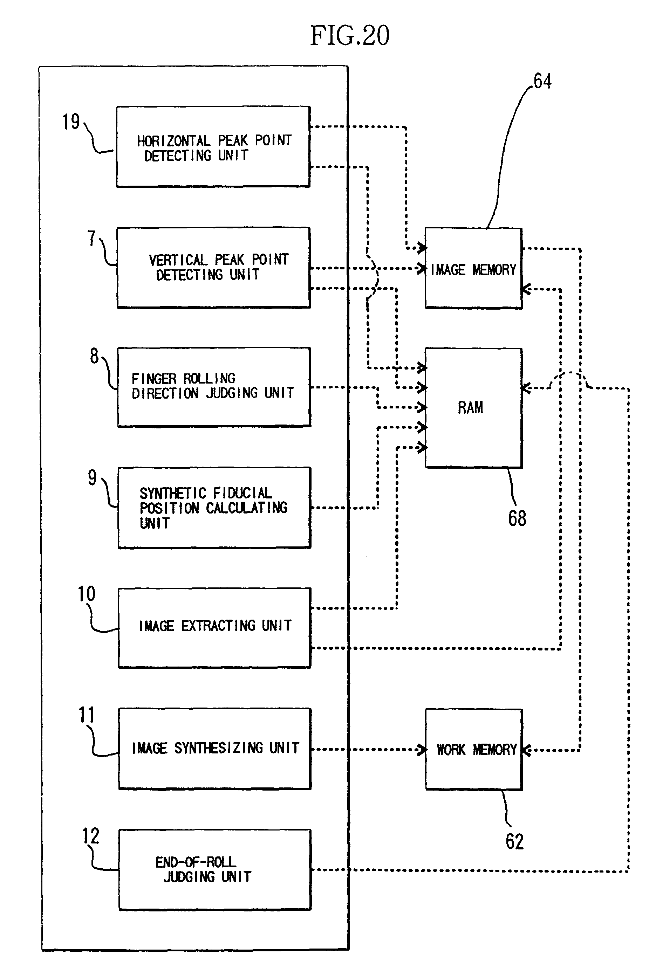

FIG. 20 is a block diagram showing a construction of the image processing circuit 6 according to functions thereof in the embodiment 2.

The image processing circuit 6 includes the vertical peak point detecting unit 7, the finger rolling direction judging unit 8, the synthetic fiducial position calculating unit 9, the image extracting unit 10, the image synthesizing unit 11, the end-of-roll judging unit 12 and, in addition, a horizontal peak point detecting unit 19.

The horizontal peak point detecting unit 19 scans the frame data stored in the image memory 64 sequentially from the right or left column in the vertical direction, and detects, as a second characteristic point, a pixel (a horizontal peak point) positioned at an edge of the image area representing the rugged patterns of the fingerprint in the finger roll advancing direction. Then, the horizontal peak point detecting unit 19 indicates the RAM 69 to store X- and Y-coordinate values of the horizontal peak point.

Note that the horizontal peak point detecting unit 19 is set to detect the horizontal peak point from the pixels having density values above a predetermined threshold value, and is constructed not to mistakenly detect the noise image such as the remaining fingerprint mark and the dust on the first side surface 2a of the prism 2.

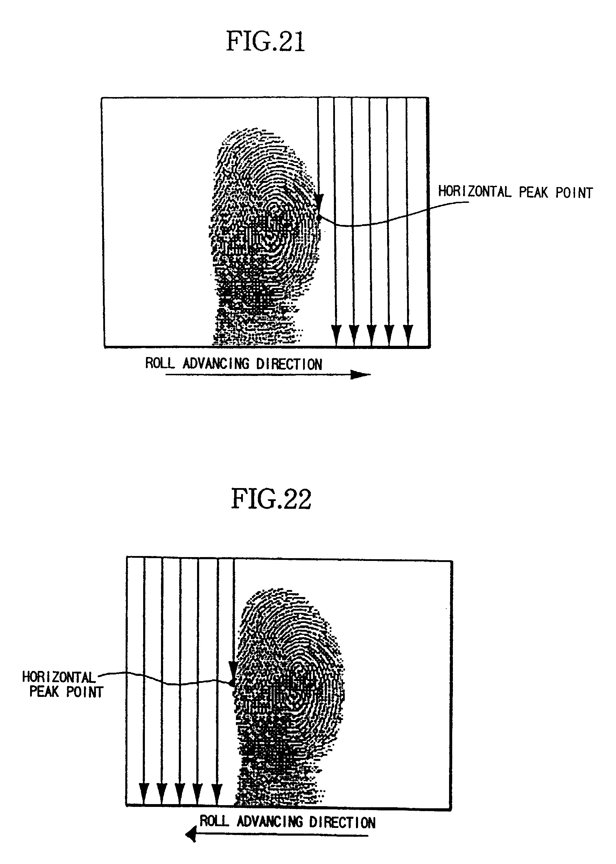

The horizontal peak point as defined above becomes, as illustrated in FIG. 21, a pixel (having the maximum X-coordinate value) positioned at the rightmost edge among the pixels having the density values over the predetermined threshold value when the finger roll advancing direction is set from left to right. Further, when the finger rolls from right to left, the horizontal peak point becomes, as shown in FIG. 22, a pixel (having the minimum X-coordinate value) positioned at the leftmost edge among the pixels having the density values over the predetermined threshold value.

Then, when the finger roll advancing direction is set from left to right, the horizontal peak point detecting unit 19 scans the frame data in the vertical direction sequentially from the right column, and judges, as a horizontal peak point, a position in which the pixel having the density value above the threshold value is detected for the first time. Then, the horizontal peak point detecting unit 19 indicates the RAM 69 to store X-Y coordinate values : (U, V) of the horizontal peak point.

Further, when the finger roll advancing direction is set from the right side to the left side of the frame, the horizontal peak point detecting unit 19 keeps scanning the frame data sequentially from the left column, and judges, as the horizontal peak point, a position in which the pixel having the density value above the threshold value is detected for the first time. Then, the horizontal peak point detecting unit 19 indicates the RAM 69 to store X-Y coordinate values : (U, V) of the horizontal peak point.

Next, the synthetic fiducial position calculating unit 9 calculates a synthetic fiducial position serving as being fiducial when synthesizing the latest frame data (hereinafter referred to as the first frame data) with frame data (hereinafter termed the second frame data) obtained by synthesizing data from a first set of frame data to frame data just before the first frame data in accordance with the X-coordinate value : U of the horizontal peak point that is stored in the RAM 69 and the data indicating the finger roll advancing direction.

In this case, the synthetic fiducial position calculating unit 9 sets, as the synthetic fiducial position, a vertical line : X = U + e, into which a vertical line : X = U passing through the horizontal peak point is offset by a predetermined-number-of-pixels : e in the direction reverse to the roll advancing direction.

The predetermined-number-of-pixels e is a value : e(U) determined, wherein the X-coordinate value of the horizontal peak point serves as a parameter. This value is so set as to become a negative value when the finger roll advancing direction is set from the left side to the right side of the frame and become a positive value when the finger roll advancing direction is set from the right side to the left side of the frame.

Next, the end-of-roll judging unit 12 judges the rolling of the finger placed on the first side surface 2a of the prism 2 comes to an end in accordance with the X-coordinate value of the horizontal peak point that is stored in the RAM 69. For example, the end-of-roll judging unit 12, when judging that the X-coordinate of the horizontal peak points of a predetermined number of sets of consecutive frame data do not advance in the roll advancing direction, deems that the rolling of the finger terminates, and, after transmitting the synthetic image data stored in the work memory 63 to the external storage device, finishes the processes of the respective units.

Operations of the rolled fingerprint image capturing apparatus 1 will be explained.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger rolled on the first side surface 2a of the prism 2, and transmits the inputted image data to the image processing circuit 6.

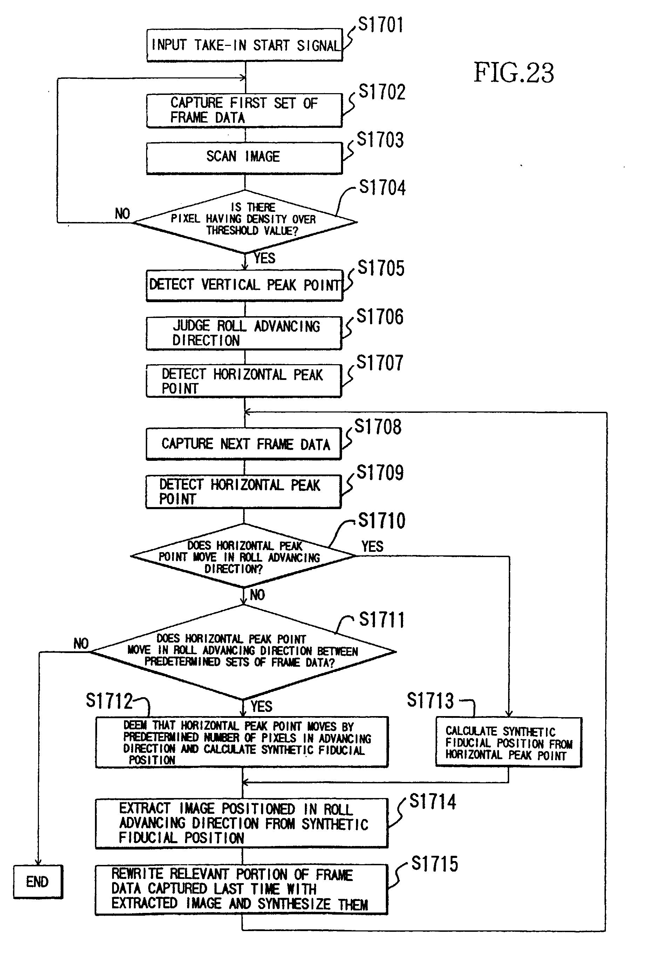

At this time, in the image processing circuit 6, the CPU 65 executes an image processing flow shown in FIG. 23.

The CPU 65, upon an input of the fingerprint image take-in start signal through the input device (S1701), receives a first set of frame data from the CCD imaging device 5 via the A/D converter 60 and the input port 61, and indicates the image memory 64 to store the same frame data (S1702).

Next, the CPU 65 scans the first set of frame data stored in the image memory 64 (S1703), and judges whether or not the pixels having density values above the predetermined threshold value exist within the frame data (S1704).

When judging in S1704 that the pixels having the density values above the threshold value do not exist within the frame data, the CPU 65 deems that the finger is not yet placed on the first side surface 2a of the prism 2, and re-executes the process in S1702 and subsequent processes.

Further, when judging in S1704 that the pixels having the density values above the threshold value exist within the frame data, the CPU 65, proceeding to S1705, detects a pixel (the vertical peak point) having the maximum Y-coordinate value from the pixels having the density values above the threshold value, and indicates the RAM 69 to store X-Y coordinate values : (S1, T1) of the vertical peak point in a predetermined area thereof.

The CPU 65, after finishing the process in S1705, proceeds to S1106 and reads therein the X-Y coordinate values : (S1, T1) of the vertical peak point that are stored in the predetermined area of the RAM 69. Then, the CPU 65 executes the roll advancing direction judging flow explained in the embodiment 1 discussed above, judges the finger roll advancing direction, and indicates the RAM 69 to store a result of judgement (data showing the roll advancing direction) in a predetermined area thereof.

Next, the CPU 65 refers to the data showing the roll advancing direction that is stored in the RAM 69, and, when the roll advancing direction is set from left to right, as stated in the discussion of FIG. 21, scans the frame data sequentially from the right column in the vertical direction, thus detecting, as a horizontal peak point, a pixel having the density value above the predetermined threshold value and positioned at the front edge in the roll advancing direction.

Further, when the roll advancing direction is set from right to left, the CPU 65, as stated in the discussion of FIG. 22, scans the frame data sequentially from the left column in the vertical direction and detects, as the horizontal peak point, the pixel (the horizontal peak point) having the density value above the predetermined threshold value and positioned at the front edge in the roll advancing direction.

The X-Y coordinate values : (U1, V1) of the thus detected horizontal peak point are stored in a predetermined area of the RAM 69 (S1707).

Herein, the CPU 65 transfers the first set of frame data stored in the image memory 64 to the work memory 63, then receives the second set of frame data from the CCD imaging device 5, and indicates the image memory 64 to store the same frame data (S1708).

Subsequently, the CPU 65 detects the horizontal peak point by scanning the second set of frame data stored in the image memory 64, and indicates the RAM 69 to store the X-Y coordinate values : (U1, V1) of the detected horizonal peak point in a predetermined area thereof (S1709).

Then, the CPU 65 reads from the RAM 69 the X-coordinate value : U1 of the horizontal peak point of the first set of frame data, the X-coordinate value : U2 of the horizontal peak point of the second set of frame data, and the data showing the finger roll advancing direction. Then, the CPU 65 judges based on the horizontal peak point of the first set of frame data whether or not the horizontal peak point of the second set of frame data moves in the finger roll advancing direction (S1710).

When judging in S1710 that the horizontal peak point of the second set of frame data moves in the roll advancing direction, the CPU 65 proceeds to S1713, wherein the CPU 65 calculates a synthetic fiducial position : X = U2 + e(U2) by use of the X-coordinate value : U2 of the horizontal peak point of the second set of frame data and indicates the RAM 69 to store this fiducial position in a predetermined area thereof.

While on the other hand, when judging in S1710 that the horizontal peak point of the second set of frame data does not move in the roll advancing direction, the CPU 65 proceeds to S1711 and judges therein whether or not the horizontal peak point moves in the roll advancing direction with respect to the predetermined number of sets of consecutive frame data.

Then, when judging in S1711 that the horizontal peak point moves in the roll advancing direction with respect to the predetermined number of sets of consecutive frame data, the CPU 65 proceeds to S1712 and deems that the horizontal peak point of the second set of frame data has moved by a predetermined number of pixels in the roll advancing direction from the horizontal peak point of the first set of frame data.

Then, the CPU 65 calculates the synthetic fiducial position : X = U2 + e(U2) by using the X-coordinate value : U2 of the horizontal peak point that has been deemed to be moved, and indicates the RAM 69 to store this position in a predetermined area thereof.

The CPU 65, after finishing the execution of the process in S1712 or S1713, proceeds to S1714 and reads therein an image positioned in the area in the finger roll advancing direction on the basis of the synthetic fiducial position : X = U2 + e(U2) out of the second set of frame data stored in the image memory 64.

Next, the CPU 65 proceeds to S1715 and updates therein the image positioned in the area in the finger roll advancing direction on the basis of the synthetic fiducial position : X = U2 + e(U2) to the image read in S1714 with respect to the first set of frame data stored in the work memory 62.

Subsequently, the CPU 65, returning to S1708, clears the second set of frame data stored in the image memory 64, receives a third set of frame data from the CCD imaging device 5, and indicates the image memory 64 to store the same frame data.

Then, with respect to the third set of frame data, the CPU 65 executes the same process as the process for the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, when judging in S1711 that the horizontal peak point does not move in the roll advancing direction with respect to a predetermined number (greater than 1) of sets of consecutive frame data, judges that the roll of the finger placed on the firs side surface 2a of the prism 2 is ended and that the input process of the fingerprint image through the optical unit is ended. At this time, the CPU 65, after transmitting the synthetic image data stored in the work memory 63 to the external storage device, finishes the execution of the image processing flow.

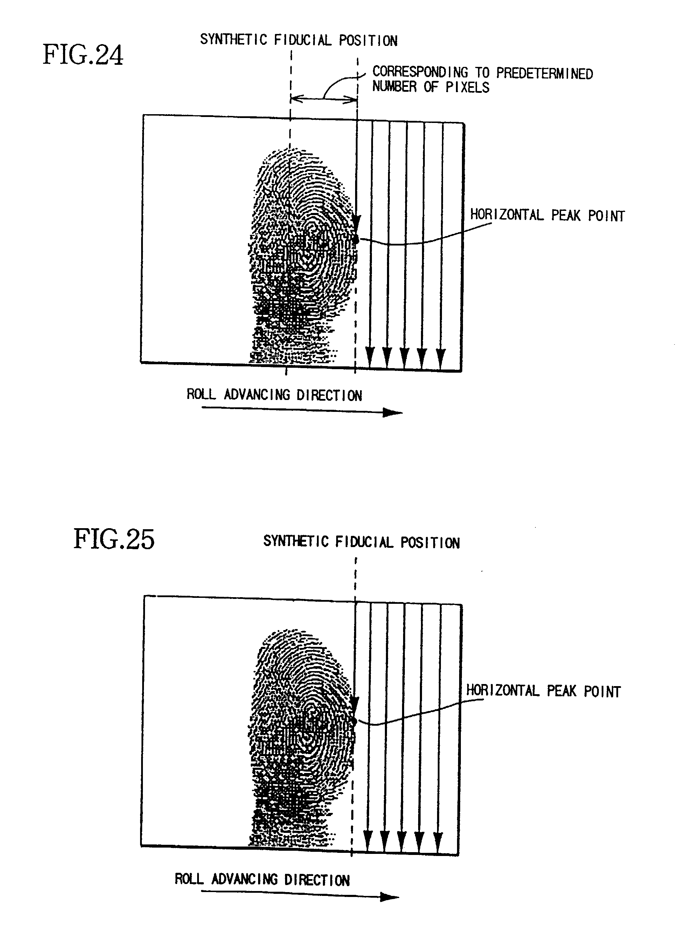

Note that the synthetic fiducial position may be, as illustrated in FIG. 24, set either in a position in which the X-coordinate value of the horizontal peak point is moved by a predetermined number of pixels in the direction opposite to the roll advancing direction, or to the same X-coordinate value as the horizontal peak point as shown in FIG. 25.

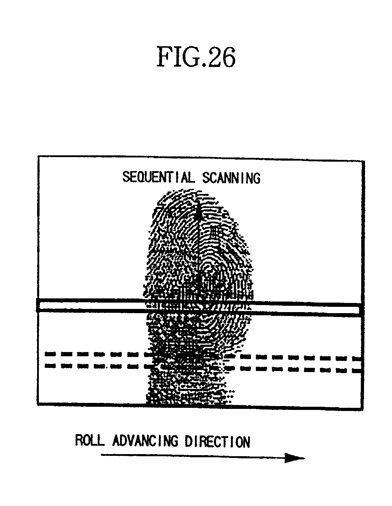

Further, as a method of detecting the horizontal peak point, there has been discussed the method of scanning the frame in the vertical direction (on the column unit) in the embodiment 2. It may be, however, adopted that, as shown in FIG. 26, the frame is scanned in the horizontal direction (on the row unit), the number of pixels having the density values above the threshold value is counted per row, and the pixel positioned at the edge in the roll advancing direction among the rows containing the maximum number of pixels having the density values above the threshold value may be deemed as the horizontal peak point.

The rolled fingerprint image capturing apparatus described above is capable of obtaining the same effects as those in the embodiment 1 discussed above.

### <Embodiment 3>

A third embodiment of the rolled fingerprint image capturing apparatus to which the rolled fingerprint image capturing method according to the present invention is applied, will be described with reference to the drawings. Herein, only a construction different from the second embodiment discussed above will be explained.

According to the second embodiment, among the pixels constituting the frame data, the pixel having the density equal to or greater than the threshold value and positioned at the foremost edge in the finger roll advancing direction, is defined as the horizontal peak point. In accordance with the third embodiment, however, a pixel having the density equal to or greater than the a predetermined threshold value and positioned at the rearmost edge in the finger roll advancing direction, is defined as a horizontal peak point.

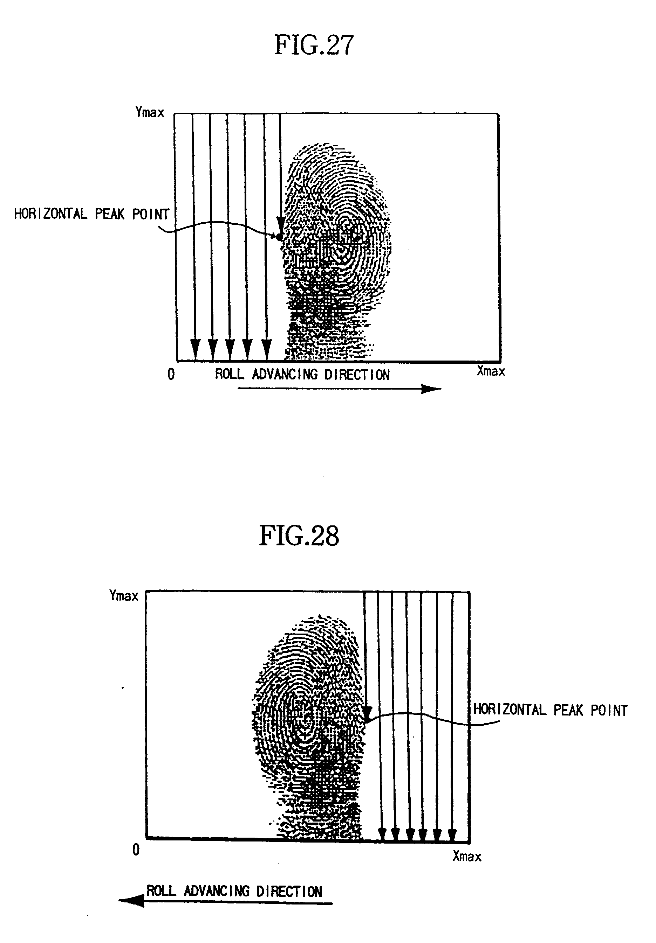

Then, the horizontal peak point detecting unit 19 of the image processing circuit 6, when the finger roll advancing direction is set, e.g., from left to right, as shown in FIG. 27, scans the frame data sequentially from the left column in the vertical direction and detects, as a horizontal peak point, the pixel having the density value above the predetermined threshold value and (the pixel having the minimum X-coordinate value) positioned at the leftmost edge.

Further, the horizontal peak point detecting unit 19, when the finger roll advancing direction is set from right to left, as shown in FIG. 28, scans the frame data sequentially from the right column in the vertical direction and detects, as the horizontal peak point, the pixel having the density value above the predetermined threshold value and (the pixel having the maximum X-coordinate value) positioned at the rightmost edge.

X-Y coordinate values (P, Q) of the thus detected horizontal peak point are stored in a predetermined area of the RAM 69.

Then, the synthetic fiducial position calculating unit 9 calculates a synthetic fiducial position serving as being fiducial when synthesizing the latest frame data (hereinafter called the first frame data) with frame data (hereinafter termed the second frame data) obtained by synthesizing data from a first set of frame data to frame data just before the first frame data in accordance with the X-coordinate value : P of the horizontal peak point that is stored in the RAM 69 and the data indicating the finger roll advancing direction.

In this case, the synthetic fiducial position calculating unit 9 sets, as the synthetic fiducial position, a vertical line : X = P + f, into which a vertical line : X = P passing through the horizontal peak point is offset by a predetermined number of pixels in the finger roll advancing direction.

The above value f is a value : f(P) determined, wherein the X-coordinate value: P of the horizontal peak point serves as a parameter. This value is so set as to become a positive value when the finger roll advancing direction is set from, e.g., the left side to the right side of the frame and become a negative value when the finger roll advancing direction is set from the right side to the left side of the frame.

Next, the end-of-roll judging unit 12, when judging that the X-coordinate of the horizontal peak point of the second set of frame data does not advance in the roll advancing direction with respect to a predetermined number of sets of consecutive frame data, judges that the rolling of the finger is ended, and finishes the processes of the respective units described above.

Other configurations are the same as those in the second embodiment discussed above, and the explanations thereof are omitted.

Even if the definition of the horizontal peak point is thus changed, it is feasible to obtain the same action and the effects as those in the second embodiment.

### <Embodiment 4>

A fourth embodiment of the rolled fingerprint image capturing apparatus to which the rolled fingerprint image capturing method according to the present invention is applied, will be described with reference to the drawings. Herein, only a construction different from the first through third embodiments discussed above will be explained.

The first to third embodiments have dealt with the example of extracting the whole image positioned in the area in the finger roll advancing direction on the basis of the synthetic fiducial position with respect to the image constituting the first frame data when synthesizing the latest frame data (hereinafter referred to as the first frame data) with the frame data (hereinafter termed the second frame data) obtained the data from the first set of frame data to the frame data just anterior to the first frame data. In accordance with the fourth embodiment, however, there will be described an example of extracting only the image positioned in the area within a predetermined range, in which the synthetic fiducial position serves as a starting point.

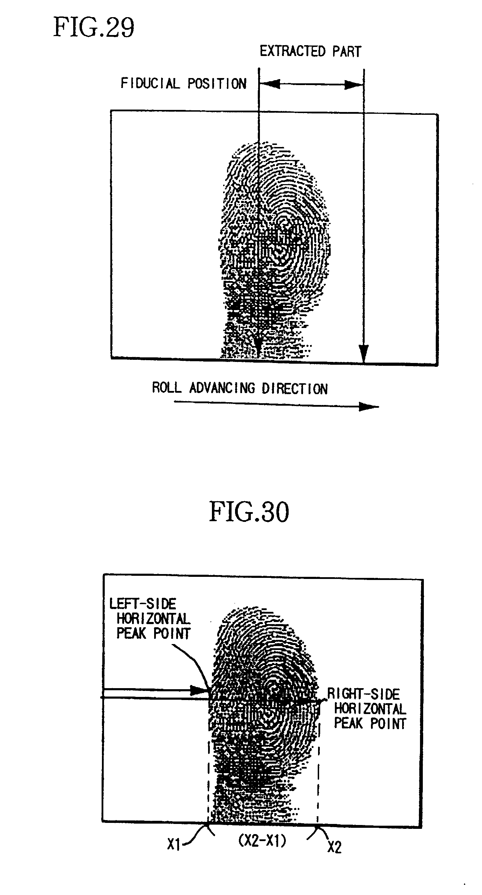

The image extracting unit 10 of the image processing circuit 6, extracts, as shown in FIG. 29, only an image positioned in the area within a predetermined range in the roll advancing direction on the basis of the synthetic fiducial position with respect to the image constituting the first frame data.

The predetermined range may be determined corresponding to a width of the finger. Detected in this case are a pixel having the density value above the predetermined threshold value and positioned at the leftmost edge and a pixel having the density value above the predetermined threshold value and positioned at the rightmost edge among the pixels constituting the frame data, and the finger width should be, as shown in FIG. 30, a difference in the X-coordinate value between these two pixels.

Then, the image synthesizing unit 11 rewrites the image positioned in the area within the predetermined range in the image constituting the second frame data, into the image extracted from the first frame data.

Thus, in accordance with the fourth embodiment, it is feasible to reduce the image extracted from the first frame data and the image to be rewritten with respect to the second frame data, and, as a result, a time required for the synthetic process can be reduced in the comparison with such a process that the entire image positioned in the area in the roll advancing direction on the basis of the synthetic fiducial position is extracted from the first frame data, and the whole image positioned in the area in the roll advancing direction on the basis of the synthetic fiducial position of the second frame data is rewritten into the image extracted from the first frame data.

### <Embodiment 5>

A fifth embodiment of the rolled fingerprint image capturing apparatus to which the rolled fingerprint image capturing method according to the present invention is applied, will be described with reference to the drawings. Herein, only a construction different from the first embodiment discussed above will be explained.

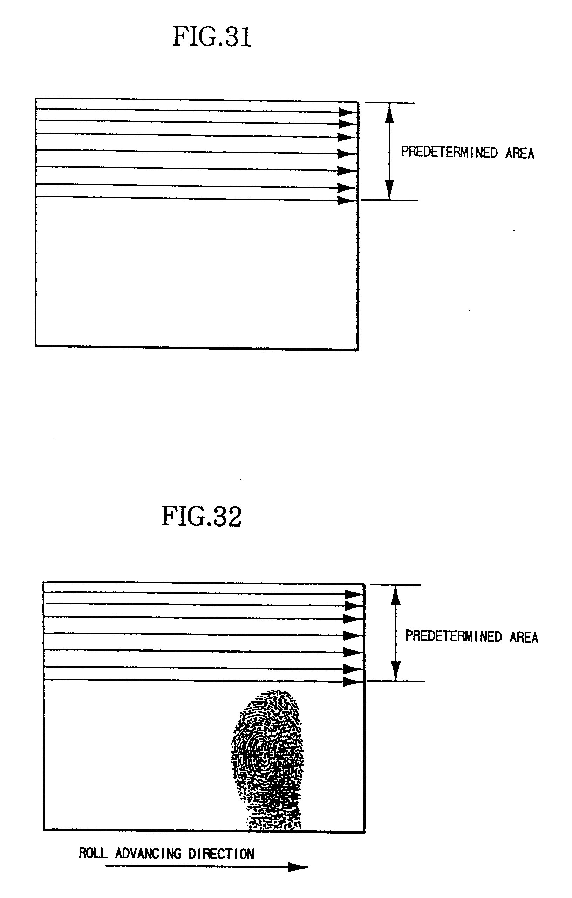

The vertical peak point detecting unit 7 of the image processing circuit 6 in the fifth embodiment, detects a vertical peak point by executing the same process as the one in the first embodiment discussed above with respect to the frame data (the first set of frame data) received for the first time from the CCD imaging device 5. With respect to the second set of frame data and subsequent frame data, only the pixels positioned with a predetermined range among the pixels constituting the frame data are to be scanned. For instance, the vertical peak point detecting unit 7, as illustrated in FIG. 31, scans the frame data by a predetermined number or rows from the uppermost row in the horizontal direction.

Corresponding thereto, the end-of-roll judging unit judges that the rolling of the finger placed on the first side surface 2a of the prism 2 comes to an end in a case where the vertical peak point detecting unit 7 was, as illustrated in FIG. 32, unable to detect the vertical peak point within the predetermined area in addition to the case of detecting that the vertical peak point does not move in the roll advancing direction with respect to the predetermined number of sets of consecutive frame data.

Operations of the rolled fingerprint image capturing apparatus 1 in this embodiment will hereinafter be described.

To start with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger rolled on the first side surface 2a of the prism 2, and transmits the inputted image data to the image processing circuit 6.

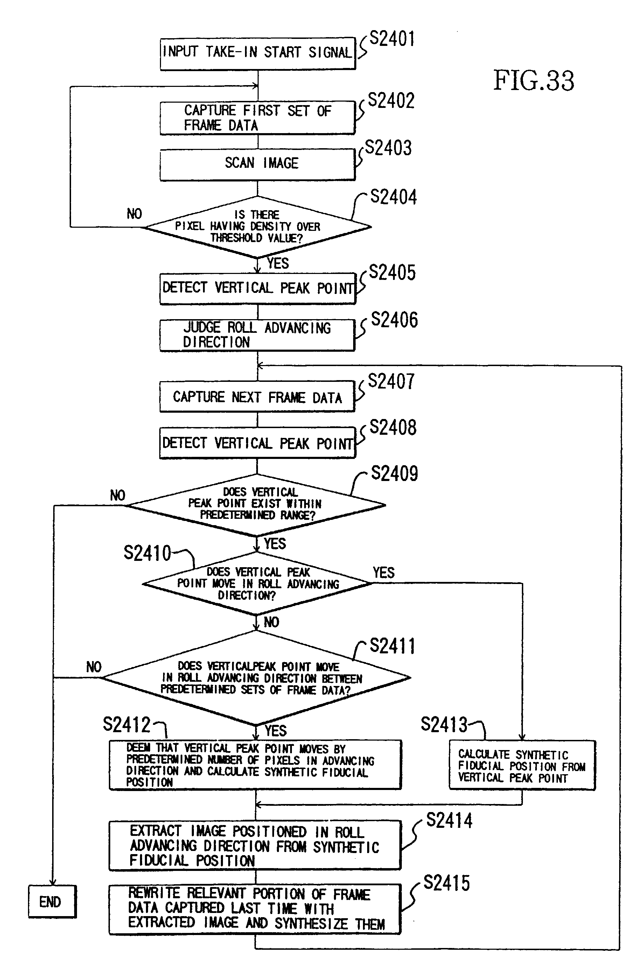

At this time, in the image processing circuit 6, the CPU 65 operates in accordance with an image processing flow shown in FIG. 33.

The CPU 65, to begin with, upon an input of the fingerprint image take-in start signal through the input device (S2401), receives the first set of frame data from the CCD imaging device 5 via the A/D converter 60 and the input port 61, and indicates the image memory 64 to store the same frame data (S2402).

Next, the CPU 65 scans the frame data stored in the image memory 64 (S2403), and judges whether or not the pixels having density values above the predetermined threshold value exist within the frame data (S2404).

When judging in S2404 that the pixels having the density values above the threshold value do not exist within the frame data, the CPU 65 deems that the finger is not yet placed on the first side surface 2a of the prism 2, and re-executes processes in S2404 and in subsequent steps.

Then, when judging in S2404 that the pixels having the density values above the threshold value exist within the frame data, the CPU 65, proceeding to S2405, detects a pixel (the vertical peak point) having the maximum Y-coordinate value from the pixels having the density values above the threshold value, and indicates the RAM 69 to store X-Y coordinate values : (S1, T1) of the vertical peak point in a predetermined area thereof.

Next, the CPU 65 proceeds to S2406 and judges therein a finger roll advancing direction from the X-Y coordinate values : (S1, T1) of the vertical peak point that are stored in the predetermined area of the RAM 69, and indicates the RAM 69 to store the data showing the roll advancing direction in a predetermined area thereof.

Then, the CPU 65 transfers the frame data stored in the image memory 64 to the work memory 63, then receives the second set of frame data from the CCD imaging device 5, and indicates the image memory 64 to store the same frame data (S2407).

Subsequently, the CPU 65 scans only the image positioned in the area within a predetermined range with respect to the image constituting the second set of frame data (S2408), and judges whether or not the pixel (the vertical peak point) having the density value equal to or greater than the threshold value exits within the predetermined range (S2409).

When judging in S2409 that the vertical peak point does not exist within the predetermined range, the CPU 65 deems that the finger placed on the first side surface 2a of the prism 2 finishes rolling, and indicates the external storage device to store the synthetic image data stored in the work memory 62, and the processing thus comes to an end.

While on the other hand, when judging in S2409 that the vertical peak point exists within the predetermined range, the CPU 65 indicates the RAM 69 to store X-Y coordinate values : (S2, T2) of the vertical peak point in a predetermined area thereof, and reads from the RAM 69 the X-coordinate value : S1 of the vertical peak point of the first set of frame data, the X-coordinate value : S2 of the vertical peak point of the second set of frame data, and the data showing the finger roll advancing direction. Then, the CPU 65 judges based on the vertical peak point of the first set of frame data whether or not the vertical peak point of the second set of frame data moves in the finger roll advancing direction (S2410).

When judging in S2410 that the vertical peak point of the second set of frame data moves in the roll advancing direction, the CPU 65 proceeds to S2413, wherein the CPU 65 calculates a synthetic fiducial position : X = S2 + d(S2) by use of the X-coordinate value : S2 of the vertical peak point of the second set of frame data and indicates the RAM 69 to store this fiducial position in the predetermined area thereof.

While on the other hand, when judging in S2410 that the vertical peak point of the second set of frame data does not move in the roll advancing direction, the CPU 65 proceeds to S2411 and judges-therein whether or not the vertical peak point moves in the roll advancing direction with respect to the predetermined number of sets of consecutive frame data.

When judging in S2411 that the vertical peak point moves in the roll advancing direction with respect to the predetermined number of sets of consecutive frame data, the CPU 65 proceeds to S2412 and deems therein that the vertical peak point of the second set of frame data has moved by a predetermined number of pixels in the roll advancing direction from the vertical peak point of the first set of frame data. The CPU 65 then calculates the synthetic fiducial position : X = S2 + d(S2) by using the X-coordinate value : S2 of the vertical peak point that has been deemed to be moved, and indicates the RAM 69 to store this position in a predetermined area.

The CPU 65, after finishing the execution of the process in S2413 or S2412, proceeds to S2414 and extracts therein an image positioned in the area in the finger roll advancing direction on the basis of the synthetic fiducial position out of the second set of frame data stored in the image memory 64.

Then, the CPU 65 proceeds to S2415 and rewrites therein, into the image extracted in S2414, the image positioned in the area in the finger roll advancing direction on the basis of the synthetic fiducial position : X = S2 + d(S2) with respect to the first set of frame data stored in the work memory 62.

Subsequently, the CPU 65, returning to S2407, clears the second set of frame data stored in the image memory 64, receives a third set of frame data from the CCD imaging device 5, and indicates the image memory 64 to store the same frame data.

Then, with respect to the third set of frame data, the CPU 65 executes the same process as the process relative to the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, when judging in S2409 that the vertical peak point does not exist within the predetermined range or that the vertical peak point does not move in the roll advancing direction respect to the predetermined number of sets of consecutive frame data, judges that the input process of the fingerprint image through the optical unit is ended, and, after transmitting the synthetic image data stored in the work memory 63 to the external storage device, finishes the execution of the image processing flow.

As described above, the rolled fingerprint image capturing apparatus in the fifth embodiment is capable of decreasing the time required for scanning the frame data simply because of scanning only the pixels positioned within the predetermined range when detecting the vertical peak points of the second set of frame data and subsequent frame data.

### <Embodiment 6>

The image processing circuit 6 in accordance with an embodiment 6 utilizes both of the vertical and horizontal peak points as parameters for judging the end of rolling of the finger placed on the first side surface 2a of the prism 2.

Namely, the end-of-roll judging unit 12 of the image processing circuit 6, if a vertical peak point of an N-th set of frame data does not move in the finger roll advancing direction on the basis of a vertical peak point of an (N-1)th set of frame data, judges whether or not a horizontal peak point moves in the roll advancing direction with respect to the predetermined number of sets of consecutive frame data. If the horizontal peak point moves in the roll advancing direction, the end-of-roll judging unit 12 deems that the rolling of the finger placed on the first side surface 2a of the prism 2 is continuing. Whereas if the horizontal peak point does not move, the judging unit 12 deems that the rolling of the finger placed on the first side surface of the prism 2 is ended.

Operations of the rolled fingerprint image capturing apparatus 1 in this embodiment will hereinafter be described.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger rolled on the first side surface 2a of the prism 2, and transmits the inputted image data to the image processing circuit 6.

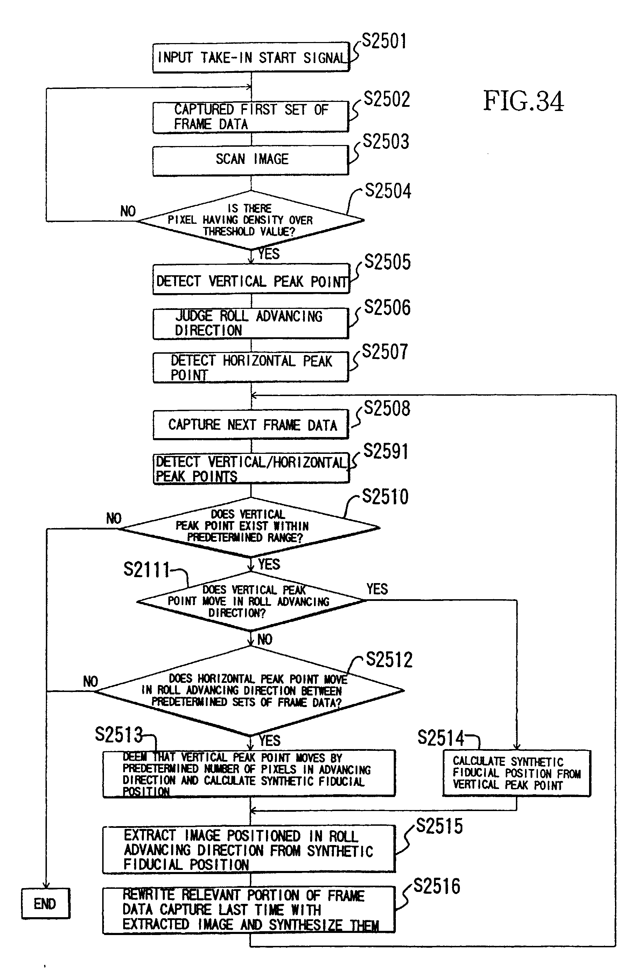

At this time, in the image processing circuit 6, the CPU 65 executes an image processing flow shown in FIG. 34.

The CPU 65, at the first onset, upon an input of the fingerprint image take-in start signal through the input device (S2501), receives a first set of frame data from the CCD imaging device 5 via the A/D converter 60 and the input port 61, and indicates the image memory 64 to store the same frame data (S2502).

Next, the CPU 65 scans the first set of frame data stored in the image memory 64 (S2503), and judges whether or not the pixels having density values above the predetermined threshold value exist within the frame data (S2504).

When judging in S2504 that the pixels having the density values above the threshold value do not exist within the frame data, the CPU 65 reexecute the processes in S2502 and subsequent steps.

While on the other hand, when judging in S2504 that the pixels having the density values above the threshold value exist within the frame data, the CPU 65, proceeding to S2505, detects a pixel (the vertical peak point) having the maximum Y-coordinate value from the pixels having the density values above the threshold value, and indicates the RAM 69 to store X-Y coordinate values : (S1, T1) of the vertical peak point in a predetermined area thereof.

The CPU 65, after finishing the process in S2505, proceeds to S2506, in which the CPU 65 judges a finger roll advancing direction from the X-Y coordinate values : (S1, T1) of the vertical peak point that are stored in the predetermined area of the RAM 69, and indicates the RAM 69 to store the data showing the roll advancing direction.

Subsequently, the CPU 65, proceeding to S2507, refers to the data showing the roll advancing direction in the RAM 69, and, when the roll advancing direction is set from left to right, scans the first set of frame data stored in the image memory 64 sequentially from the right column in the vertical direction, thus detecting a pixel (the horizontal peak point) having the density value above the predetermined threshold value and positioned at the front edge in the roll advancing direction. When the roll advancing direction is set from right to left, the CPU 65 scans the first set of frame data stored in the image memory 64 sequentially from the left column in the vertical direction, thus detecting a pixel (the horizontal peak point) having the density value above the predetermined threshold value and positioned at the front edge in the roll advancing direction. The CPU 65 then indicates the RAM 69 to store the X-Y coordinate values : (U1, V1) in a predetermined area thereof.

Next, the CPU 65 transfers the first set of frame data stored in the image memory 64 to the work memory 63, then receives the second set of frame data from the CCD imaging device 5, and indicates the image memory 64 to store the same frame data (S2508).

Subsequently, the CPU 65 detects the horizontal peak point and the vertical peak point by scanning the second set of frame data (S2509). At this time, the CPU 65 judges whether or not the vertical peak point exists within the predetermined range (S2510). The CPU 65, when judging that the vertical peak point does not exist within the predetermined range, deems that the rolling of the finger placed on the first side surface 2a of the prism 2 is ended, and indicates the external storage device to store the synthetic image data stored in the work memory 62, thus finishing the processing.

While on the other hand, when judging in S2510 that the vertical peak point exists within the predetermined range, the CPU 65 indicates the RAM 69 to store in a predetermined area the X-Y coordinate values (S2, T2) of the vertical peak point and the X-Y coordinate values : (U2, V2) of the horizontal peak point; the CPU 65 then reads from the RAM 69 the X-coordinate value : S1 of the vertical peak point of the first set of frame data, the X-coordinate value : S2 of the vertical peak point of the second set of frame data, and the data showing the finger roll-advancing direction; and the CPU 65 subsequently judges whether or not the vertical peak point of the second set of frame data moves in the finger roll advancing direction on the basis of the vertical peak point of the first set of frame data (S2511).

When judging in S2511 that the vertical peak point of the second set of frame data moves in the roll advancing direction, the CPU 65 proceeds to S2514, wherein the CPU 65 calculates a synthetic fiducial position : X = S2 + d(S2) by use of the X-coordinate value : S2 of the vertical peak point of the second set of frame data and indicates the RAM 69 to store this fiducial position in a predetermined area thereof.

While on the other hand, when judging in S2511 that the vertical peak point of the second set of frame data does not move in the roll advancing direction, the CPU 65 proceeds to S2512 and judges therein whether or not the horizontal peak point moves in the roll advancing direction with respect to the predetermined number of sets of consecutive frame data.

When judging in S2512 that the horizontal peak point does not move in the roll advancing direction with respect to the predetermined number of sets of consecutive frame data, the CPU 65 deems that the roll of the finger placed on the first side surface 2a of the prism 2 is ended, and indicates the external storage device to store the synthetic image data stored in the work memory 62, thus finishing the processing.

While on the other hand, when judging in S2512 that the horizontal peak point moves in the roll advancing direction with respect to the predetermined number of sets of consecutive frame data, the CPU 65, proceeding to S2513, deems that the vertical peak point of the second set of frame data moves by a predetermined number of pixels in the roll advancing direction from the vertical point of the first set of frame data. Then, the CPU 65 calculates the synthetic fiducial position : X = S2 + d(S2) by use of the X-coordinate value : S2 of the vertical peak point deemed as being moved, and indicates the RAM 69 to store this fiducial position in a predetermined area thereof.

Herein, the predetermined number of pixels may be a preset fixed value or may be the number of pixels by which the horizontal peak point moves from the first set of frame data to the second set of frame data.

The CPU 65, after finishing the execution of the process in S2514 or S2513, proceeds to S2515 and extracts therein an image positioned in the area in the finger roll advancing direction on the basis of the synthetic fiducial position out of the second set of frame data stored in the image memory 64.

Subsequently, the CPU 65 proceeds to S2516 and rewrites therein, into the image extracted in S2515, the image positioned in the area in the finger roll advancing direction on the basis of the synthetic fiducial position : X = S2 + d(S2) with respect to the first set of frame data stored in the work memory 62.

Subsequently, the CPU 65, returning to S2508, clears the second set of frame data stored in the image memory 64, receives a third set of frame data from the CCD imaging device 5, and indicates the image memory 64 to store the same frame data.

Then, with respect to the third set of frame data, the CPU 65 executes the same process as the process relative to the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Further, the CPU 65, when judging in S2150 that the vertical peak point does not exist with the predetermined range or judging that the horizontal peak point does not move in the roll advancing direction with respect to the predetermined number of sets of consecutive frame data, judges that the roll of the finger placed on the first side surface 2a of the prism 2 is ended, and, after transmitting the synthetic image data stored in the work memory 63 to the external storage device, finishes the execution of the image processing flow.

Note that the CPU 65, when detecting the vertical peak point and the horizontal peak point of the second set of frame data and subsequent frame data in S2509, horizontally scans the frame data in the direction opposite to the finger roll advancing direction, may deem as the vertical peak point the position in which the pixel having the density value equal to or greater than the threshold value is detected for the first time, and may deem as th horizontal peak point the pixel positioned at the front edge in the roll advancing direction in the line having the shortest distance (the number of pixels having the density values less than the threshold value) from a proximal edge of the scanning line up to the position where the pixel having the density value above the threshold value is detected.

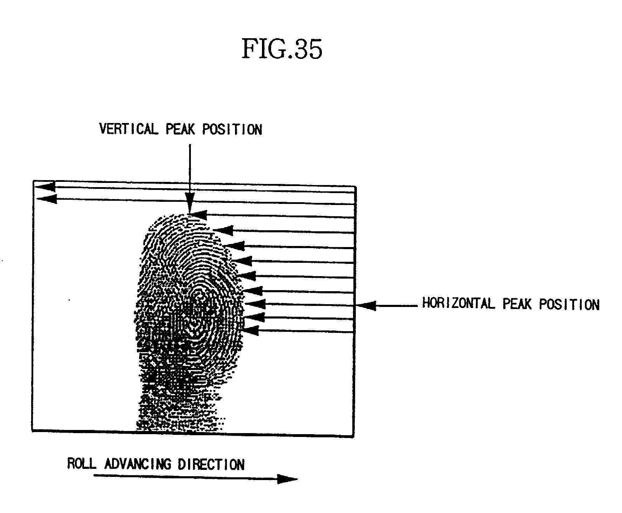

For instance, when the finger roll advancing direction is set from the left side to the right side of the frame, the CPU 65, as shown in FIG. 35, scans the frame data sequentially from the uppermost row thereof toward the left side from the right side, and deems as the vertical peak point the position in which the pixel having the density value above the threshold value is detected for the first time. Next, the CPU 65, after finishing the scan down to the lowest row of the frame, determines the row having the minimum number of pixels (the number of pixels having the density values less than the threshold value) scanned in a range from the right edge of the frame to the position where the pixel above the threshold value is detected for the first time. Then, the CPU 65 deems, as the horizontal peak point, the pixel (having the maximum X-coordinate value) positioned in the rightmost position among the pixels positioned on the above-determined row and having the density values over the threshold value.

As discussed above, according to the embodiment 6, it is feasible to judge the finger roll advancing direction from the movement of the horizontal peak point even if there occurs such an event that the vertical peak point is directed reversely in spite of the fact that the finger rolls in the advancing direction depending on, e.g., finger shapes and imprinting conditions etc by making use of the vertical peak point and the horizontal peak point as the parameters for judging the end of rolling of the finger. A much more precise judgement about the end of rolling can be thereby made.

### <Embodiment 7>

The sixth embodiment discussed above has dealt with the example in which the synthetic fiducial position is determined by deeming that the vertical peak point moves by the predetermined number of pixels in the roll advancing direction in the case where the vertical peak point does not move in the roll advancing direction between the two sets of consecutive frame data as well as in the case where the horizontal peak point moves in the roll advancing direction between the predetermined number of sets of frame data. In accordance with the embodiment 7, however, there will be stated an example in which a movement quantity of the vertical peak point is determined based on a quantity (a variation in the X-coordinate value of the horizontal peak point) with which the horizontal peak point moves in the roll advancing direction between the predetermined number of sets of consecutive frame data.

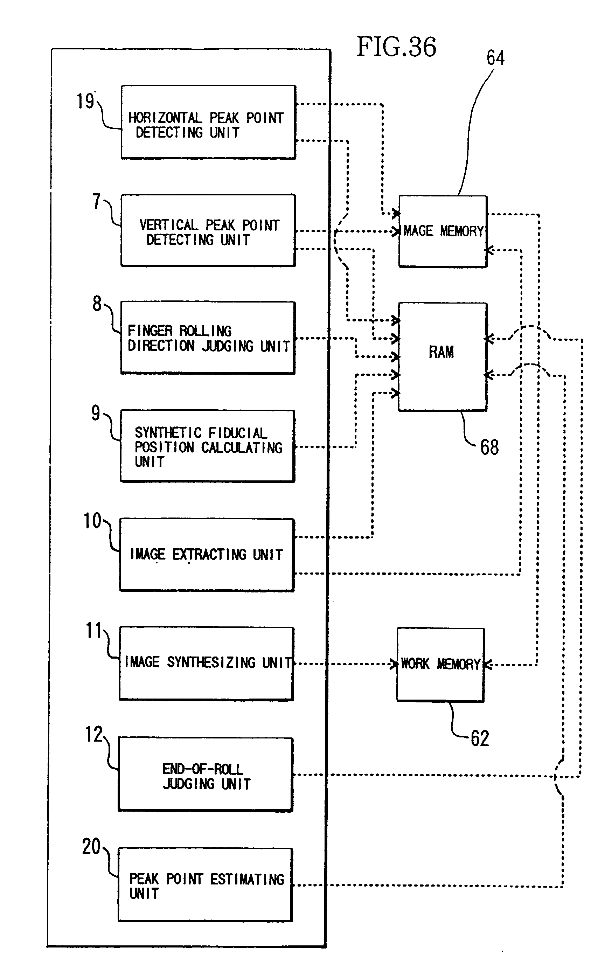

FIG. 36 is a block diagram showing a construction of the image processing circuit 6 according to functions thereof.

The image processing circuit 6 includes the horizontal peak point detecting unit 19, the vertical peak point detecting unit 7, the finger rolling direction judging unit 8, the synthetic fiducial position calculating unit 9, the image extracting unit 10, the image synthesizing unit 11, the end-of-roll judging unit 12 and, in addition, a peak point estimating unit 20.

When the image processing circuit 6 inputs an N-th (: a natural number) set of frame data, the peak point estimating unit 20, in a case where a vertical peak point of the N-th set of frame data does not move in the roll advancing direction from a vertical peak point of frame data (an (N-1)th set of frame data) inputted just anterior to the N-th set of frame data and where a horizontal peak point moves in the roll advancing direction with respect to a predetermined number of sets of frame data containing the N-th set of frame data, obtains a quantity ΔU with which the horizontal peak point moves in the roll advancing direction between the predetermined number of sets of frame data, subsequently obtains an average movement quantity ΔUh of the horizontal peak point from the quantity ΔU, deems that the vertical peak point of the N-th set of frame data advances by the average movement quantity ΔUh from the vertical peak point of the (N-1)th set of frame data, and calculates an X-coordinate value : SN of the vertical peak point of the N-th set of frame data.

In this case, the synthetic fiducial position calculating unit 9 calculates a synthetic fiducial position : X = SN + d(SN) by use of the X-coordinate value : SN of the vertical peak point of the N-th set of frame data that has been calculated by the peak point estimating unit 20.

Operations of the rolled fingerprint image capturing apparatus 1 in this embodiment will be explained.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger which is rolled and imprinted on the first side surface 2a of the prism 2, and transmits the inputted image data to the image processing circuit 6.

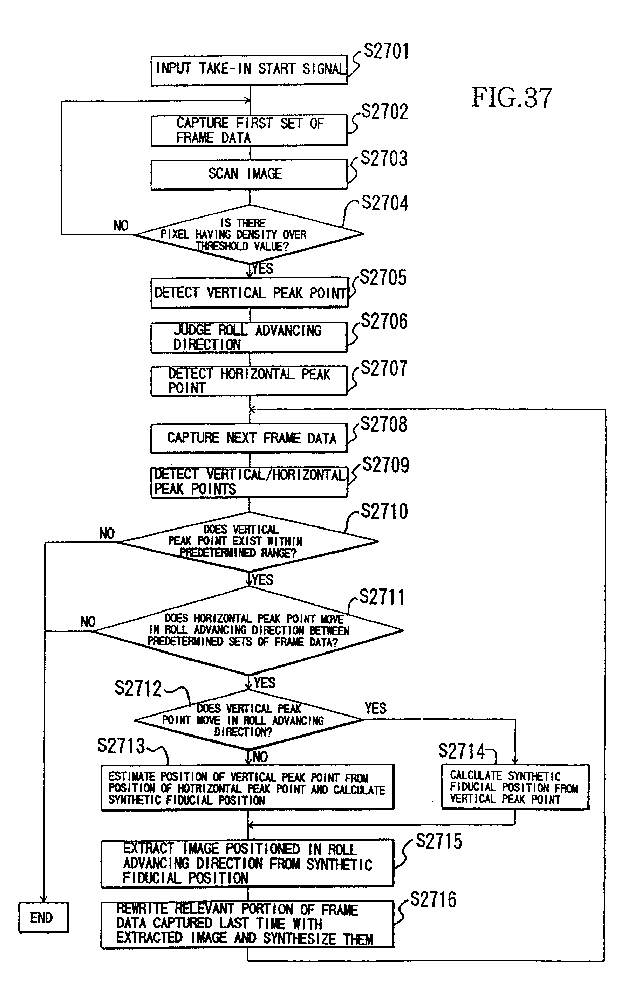

At this time, in the image processing circuit 6, the CPU 65 executes an image processing flow shown in FIG. 37.

The CPU 65, to start with, upon an input of the fingerprint image take-in start signal through the input device (S2701), receives a first set of frame data from the CCD imaging device 5 via the A/D converter 60 and the input port 61, and indicates the image memory 64 to store the same frame data (S2702).

Next, the CPU 65 scans the first set of frame data stored in the image memory 64 (S2703), and judges whether or not the pixels having density values above the predetermined threshold value exist within the frame data (S2704).

When judging in S2704 that the pixels having the density values above the threshold value do not exist within the frame data, the CPU 65 re-executes the processes in S2702 and subsequent steps.

While on the other hand, when judging in S2704 that the pixels having the density values above the threshold value exist within the frame data, the CPU 65, proceeding to S2705, detects X-Y coordinate values : (S1, T1) of the vertical peak point by scanning the first set of frame data, and indicates the RAM 69 to store these values in a predetermined area thereof.

Then, the CPU 65, proceeding to S2706, judges the finger roll advancing direction from the X-Y coordinate values : (S1, T1) of the vertical peak point that are stored in the predetermined area of the RAM 69, and indicates the RAM 69 to store the data showing the roll advancing direction in a predetermined area.

Subsequently, the CPU 65, proceeding to S2707, detects X-Y coordinate values : (U1, V1) of the horizontal peak point by scanning the first set of frame data, and indicates the RAM 69 to store the same values in a predetermined area thereof.

Next, the CPU 65 transfers the first set of frame data stored in the image memory 64 to the work memory 63, then receives the second set of frame data from the CCD imaging device 5, and indicates the image memory 64 to store the same frame data (S2708).

Subsequently, the CPU 65 detects the horizontal peak point and the vertical peak point by scanning the second set of frame data (S2709). On this occasion, the CPU 65 judges whether or not the vertical peak point of the second set of frame data exists within a predetermined range (S2710). The CPU 65, when judging that the vertical peak point does not exist within the predetermined range, deems that the rolling of the finger placed on the first side surface 2a of the prism 2 is ended, and indicates the external storage device to store the synthetic image data stored in the work memory 62, thus finishing the processing.

While on the other hand, when judging in S2710 that the vertical peak point exists within the predetermined range, the CPU 65 indicates the RAM 69 to store in a predetermined area the X-Y coordinate values (S2, T2) of the vertical peak point and the X-Y coordinate values : (U2, V2) of the horizontal peak point, and proceeds to S2711.

In S2711, the CPU 65 judges whether or not the horizontal peak point moves in the roll advancing direction between the predetermined sets of frame data.

When judging in S2711 that the horizontal peak point does not move in the roll advancing direction between the predetermined sets of frame data, the CPU 65 deems that the roll of the finger placed on the first side surface 2a of the prism 2 is ended, and indicates the external storage device to store the synthetic image data stored in the work memory 62, thus finishing the processing.

While on the other hand, when judging in S2711 that the horizontal peak point moves in the roll advancing direction between the predetermined number of sets of consecutive frame data, the CPU 65, proceeding to S2712, reads from the RAM 69 the X-coordinate value : S1 of the vertical peak point of the first set of frame data, the X-coordinate value : S2 of the vertical peak point of the second set of frame data, and the data showing the finger roll advancing direction. Then, the CPU 65 judges whether or not the vertical peak point of the second set of frame data moves in the finger roll advancing direction from the vertical peak point of the first set of frame data.

When judging in S2712 that the vertical peak point of the second set of frame data moves in the roll advancing direction, the CPU 65 proceeds to S2714, wherein the CPU 65 calculates a synthetic fiducial position : X = S2 + d(S2) by use of the X-coordinate value : S2 of the vertical peak point of the second set of frame data and indicates the RAM 69 to store this fiducial position in a predetermined area thereof.

While on the other hand, when judging in S2712 that the vertical peak point of the second set of frame data does not move in the roll advancing direction, the CPU 65, proceeding to S2713, calculates the average movement quantity ΔUh of the horizontal peak point from the quantity ΔU with which the horizontal peak point moves between the predetermined number of sets of frame data, and deems that the vertical peak point of the second set of frame data moves by the average movement quantity ΔUh in the roll advancing direction from the vertical peak point of the first set of frame data. The CPU 65 then calculates the X-coordinate value of the vertical peak point deemed as being moved. Subsequently, the CPU 65 calculates the synthetic fiducial position : X = S2 + d(S2) by using the X-coordinate value : S2 of the vertical peak point, and indicates the RAM 69 to store this position in a predetermined area.

Next, the CPU 65, after finishing the execution of the process in S2713 or S2714, proceeds to S2715 and extracts therein an image positioned in the area in the finger roll advancing direction on the basis of the synthetic fiducial position out of the second set of frame data stored in the image memory 64.

Then, the CPU 65 proceeds to S2716 and rewrites therein, into the image extracted in S2715, the image positioned in the area in the finger roll advancing direction on the basis of the synthetic fiducial position with respect to the first set of frame data stored in the work memory 62.

Subsequently, the CPU 65, returning to S2708, clears the second set of frame data stored in the image memory 64, receives a third set of frame data from the CCD imaging device 5, and indicates the image memory 64 to store the same frame data.

Furthermore, with respect to the third set of frame data, the CPU 65 executes the same process as the process relative to the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, when judging in S2710 that the vertical peak point does not exist within the predetermined range, or when judging in S2711 that the horizontal peak point does not move in the roll advancing direction respect to the predetermined number (greater than 1) of sets of consecutive frame data, the CPU 65 deems that the rolling of the finger placed on-the first side surface 2a of the prism 2 is ended, and, after transmitting the synthetic image data stored in the work memory 63 to the external storage device, finishes the execution of the image processing flow.

As described above, in accordance with the embodiment 7, it is feasible to determine the movement of the vertical peak point, i.e., the movement quantity of the synthetic fiducial position from the movement quantity of the horizontal peak point and to set the synthetic fiducial position in an optimal position even if there occurs such an event that the vertical peak point is directed reversely in spite of the fact that the finger rolls in the advancing direction depending on the finger shapes and the imprinting conditions etc.

Note that the embodiment 7 has dealt with the example of estimating the movement quantity of the vertical peak point from the movement quantity of the horizontal peak point. The movement quantity (of the synthetic fiducial position) of the vertical peak point may be, however, determined in accordance with the movement quantity of the horizontal peak point and a width of the finger.

Moreover, the embodiment 7 has deal with the example in which the movement quantity of the vertical peak point is determined from the movement quantity of the horizontal peak point. The movement quantity of the synthetic fiducial position may also be, however, determined directly from the movement quantity of the horizontal peak point.

Further, in the case of using the X-coordinate value of the horizontal peak point as the parameter for determining the synthetic fiducial position, the movement quantity of the horizontal peak point may be calculated based on the quantity with which the vertical peak point moves between the predetermined number of sets of frame data.

### <Embodiment 8>

In the-seventh embodiment discussed above, as the conditions for judging the end of rolling of the finger placed on the first side surface 2a of the prism 2, there have been given a point (1) wherein the vertical peak point is not detected within the predetermined range of the frame, and a point (2) wherein the horizontal peak point does not move in the roll advancing direction between the predetermined number of sets of frame data. In accordance with an embodiment 8, however, in addition to the condition (2), there will be explained an example of showing a condition (3) that neither the vertical peak point not the horizontal peak point advances in the roll advancing direction between the two sets of consecutive frame data.

In this case, when judging that the vertical peak point does not exist with a predetermined range of the frame, that the horizontal peak point does not move in the roll advancing direction between the predetermined number of sets of frame data or that neither the vertical peak point nor the horizontal peak point moves in the roll advancing direction between the latest frame data (the N-th set of frame data) and the frame data (the (N-1)th set of frame data) inputted just anterior thereto, the end-of-roll judging unit 12 of the image processing circuit 6 deems that the rolling of the finger placed on the first side surface 2a of the prism 2 is ended.

Corresponding thereto, when judging that the vertical peak point does not move in the roll advancing direction between the N-th set of frame data and the (N-1)th set of frame data while the horizontal peak point moves in the roll advancing direction, the synthetic fiducial position calculating unit 9 deems that the vertical peak point of the N-th set of frame data moves by a predetermined number of pixels in the roll advancing direction, and calculates a synthetic fiducial position : X = SN + d(SN) by use of an X-coordinate value : SN of the vertical peak point deemed as being moved.

Operations of the rolled fingerprint image capturing apparatus 1 in this embodiment will be explained.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger rolled on the first side surface 2a of the prism 2, and transmits the inputted image data to the image processing circuit 6.

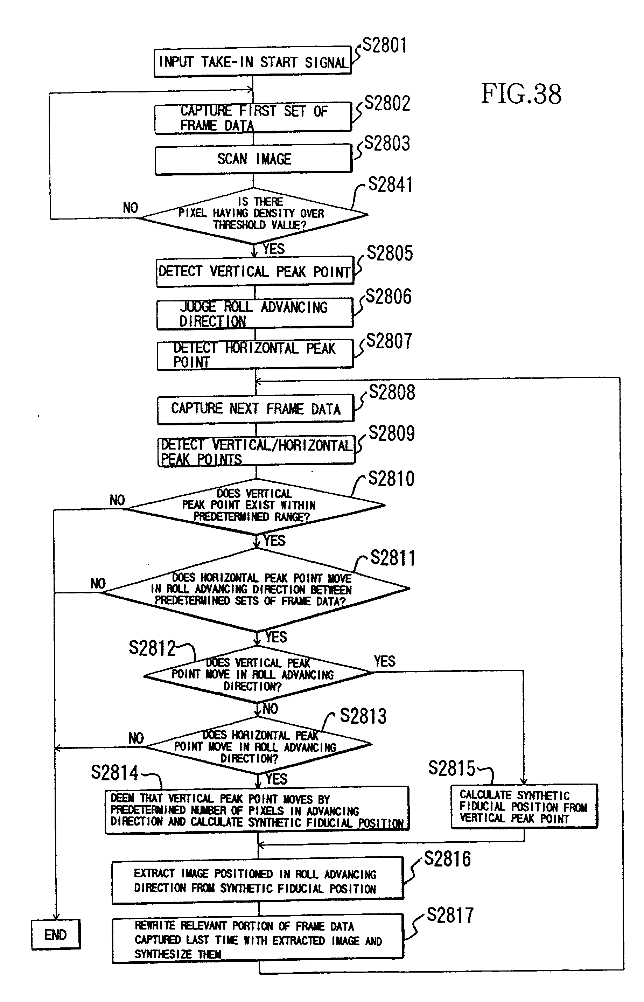

At this time, in the image processing circuit 6, the CPU 65 executes an image processing flow shown in FIG. 38.

The CPU 65, to start with, upon an input of the fingerprint image take-in start signal through the input device (S2801), receives a first set of frame data from the CCD imaging device 5 via the A/D converter 60 and the input port 61, and indicates the image memory 64 to store the same frame data (S2802).

Next, the CPU 65 scans the first set of frame data stored in the image memory 64 (S2803), and judges whether or not the pixels having density values above. the predetermined threshold value exist within the frame data (S2804).

When judging in S2804 that the pixels having the density values above the threshold value do not exist within the frame data, the CPU 65 re-executes the processes in S2802 and subsequent steps.

While on the other hand, when judging in S2804 that the pixels having the density values above the threshold value exist within the frame data, the CPU 65, proceeding to S2805, detects X-Y coordinate values : (S1, T1) of the vertical peak point by scanning the frame data, and indicates the RAM 69 to store these values in a predetermined area thereof.

Then, the CPU 65, proceeding to S2806, judges the finger roll advancing direction from the X-Y coordinate values : (S1, T1) of the vertical peak point that are stored in the predetermined area of the RAM 69, and indicates the RAM 69 to store the data showing the roll advancing direction in a predetermined area thereof.

Subsequently, the CPU 65, proceeding to S2807, detects X-Y coordinate values : (U1, V1) of the horizontal peak point by scanning the first set of frame data, and indicates the RAM 69 to store the same values in a predetermined area thereof.

Next, the CPU 65 transfers the first set of frame data stored in the image memory 64 to the work memory 63, then receives the second set of frame data from the CCD imaging device 5, and indicates the image memory 64 to store the same frame data (52808).

Subsequently, the CPU 65, proceeding to S2809, detects the horizontal peak point and the vertical peak point by scanning the second set of frame data, and indicates the RAM 69 to store the X-Y coordinate values : (S2, T2) of the vertical peak point and the X-Y coordinate values : (U2, V2) fot eh horizontal peak point in a predetermined area. On this occasion, the CPU 65 judges whether or not the vertical peak point of the frame data exists within a predetermined range (S2810).

The CPU 65, when judging in S2810 that the vertical peak point does not exist within the predetermined range, deems that the rolling of the finger placed on the first side surface 2a of the prism 2 is ended, and indicates the external storage device to store the synthetic image data stored in the work memory 62, thus finishing the processing.

While on the other hand, when judging in S2810 that the vertical peak point exists within the predetermined range, the CPU 65 proceeds to S2811 and judges therein whether or not the horizontal peak point moves in the roll advancing direction between the predetermined number of sets of frame data.

When judging in S2811 that the horizontal peak point does not move in the roll advancing direction between the predetermined sets of frame data, the CPU 65 deems that the rolling of the finger placed on the first side surface 2a of the prism 2 is ended, and indicates the external storage device to store the synthetic image data stored in the work memory 62, thus finishing the processing.

While on the other hand, when judging in S2811 that the horizontal peak point moves in the roll advancing direction between the predetermined number of sets of consecutive frame data, the CPU 65, proceeding to S2812, reads from the RAM 69 the X-coordinate value : S1 of the vertical peak point of the first set of frame data, the X-coordinate value : S2 of the vertical peak point of the second set of frame data, and the data showing the finger roll advancing direction. Then, the CPU 65 judges whether or not the vertical peak point of the second set of frame data moves in the finger roll advancing direction from the vertical peak point of the first set of frame data.

When judging in S2812 that the vertical peak point of the second set of frame data moves in the roll advancing direction, the CPU 65 proceeds to S2814, wherein the CPU 65 calculates the synthetic fiducial position : X = S2 + d(S2) by use of the X-coordinate value : S2 of the vertical peak point of the second set of frame data and indicates the RAM 69 to store this fiducial position in a predetermined area thereof.

While on the other hand, when judging in S2812 that the vertical peak point of the second set of frame data does not move in the roll advancing direction, the CPU 65, proceeding to S2813, judges whether or not the horizontal peak point of the second set of frame data moves in the roll advancing direction on the basis of the horizontal peak point of the first set of frame data.

When judging in S2813 that the horizonal peak point of the second set of frame data moves in the roll advancing direction, the CPU 65 deems that the rolling of the finger placed on the first side surface 2a of the prism 2 is ended, and indicates the external storage device to store the synthetic image data stored in the work memory 62, thus finishing the processing.

While on the other hand, when judging in 52813 that the horizontal peak point of the second set of frame data moves in the roll advancing direction, the CPU 65, proceeding to S2814, deems that the vertical peak point of the second set of frame data moves by a predetermined number of pixels in the roll advancing direction from the vertical peak point of the first set of frame data, and calculates the synthetic fiducial position : X = S2 + d(S2) by use of the X-coordinate value : S2 of the vertical peak point deemed as being moved. Then, the CPU 65 indicates the RAM 69 to stored this position in a predetermined area thereof.

The CPU 65, after finishing the execution of the process in S2814 or S2815, proceeds to S2816 and extracts therein an image positioned in the area in the finger roll advancing direction on the basis of the synthetic fiducial position out of the second set of frame data stored in the image memory 64.

Next, the CPU 65 proceeds to S2817 and rewrites therein, into the image extracted in S2815, the image positioned in the area in the finger roll advancing direction on the basis of the synthetic fiducial position with respect to the first set of frame data stored in the work memory 62.

Then, the CPU 65, returning to S2808, clears the second set of frame data stored in the image memory 64, receives a third set of frame data from the CCD imaging device 5, and indicates the image memory 64 to store the same frame data.

Furthermore, with respect to the third set of frame data, the CPU 65 executes the same process as the process relative to the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Moreover, when judging in S2810 that the vertical peak point does not exist within the predetermined range, or when judging in S2811 that the horizontal peak point does not move in the roll advancing direction between the predetermined number of sets of frame data, or when judging in S2812 and S2813 that neither the vertical peak point nor the horizontal peak point moves in the roll advancing direction-wit respect to the two sets of consecutive frame data, the CPU 65 deems that the rolling of the finger placed on the first side surface 2a of the prism 2 is ended and, after transmitting the synthetic image data stored in the work memory 63 to the external storage device, finishes the execution of the image processing flow.

According to the embodiment 8 discussed above, it is feasible to judge the finger roll advancing direction even if there occurs such an event that the vertical or horizontal peak point is directed reversely in spite of the fact that the finger rolls in the advancing direction depending on finger shapes and imprinting conditions etc. As a result, the end-of-roll judgement can be made more precisely than in the seventh embodiment discussed above.

### <Embodiment 9>

In the first embodiment, when judging the end of rolling of the finger placed on the side surface 2a of the prism 2, the condition is that the vertical peak point does not move in the roll advancing direction between the predetermined number of sets of frame data. In accordance with an embodiment 9, however, there will be exemplified such a condition that the vertical peak point continuously moves in the direction opposite to the roll advancing direction between the predetermined number of sets of frame data.

In this case, the end-of-roll judging unit 12 of the image processing circuit 6 compares an X-coordinate value :SN of the vertical peak point of the latest frame data (an N-th (: a natural number) set of frame data) with an X-coordinate value : SN-1 of the vertical peak point of the frame data (an (N-1)th set of frame data) inputted just anterior thereto, and judges whether or not the vertical peak point moves in the direction opposite to the roll advancing direction.

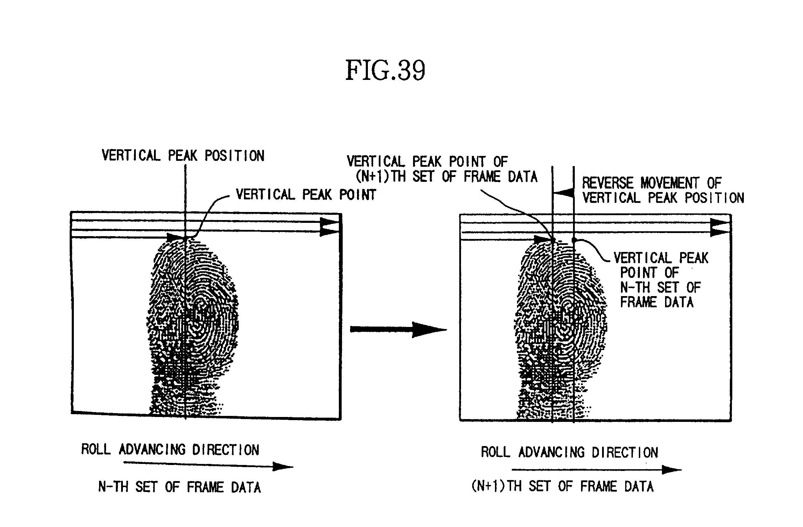

For instance, the end-of-roll judging unit 12, when the finger roll advancing direction is set from the left side to the right side of the frame, as shown in FIG. 39, compares the X-coordinate value :SN of the vertical peak point of the N-th set of frame data with the X-coordinate value : SN-1 of the vertical peak point of the (N-1)th set of frame data, and, if SN-1 > SN, judges that the vertical peak point of the N-th set of frame data moves in the direction opposite to the roll advancing direction.

Then, the end-of-roll judging unit 12, when judging that the vertical peak point of the N-th set frame data, as described above, moves in the direction opposite to the roll advancing direction, judges whether or not the vertical peak point moves reversely between the predetermined number of sets of frame data containing the N-th set of frame data.

The end-of-roll judging unit 12, when judging that the vertical peak point continuously moves reversely between the predetermined number of sets of frame data, deems that the roll of the finger placed on the first side surface 2a of the prism 2 is ended, and, after transmitting the synthetic image data stored in the work memory 63 to the external storage device, finishes the processes of the respective units described above.

Other configurations are the same as those in the first embodiment discussed above.

Operations of the rolled fingerprint image capturing apparatus 1 in accordance with the embodiment 9 will hereinafter be described.

To start with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting the fingerprint image of the finger rolled on the first side surface 2a of the prism 2, and transmits the inputted image data to the image processing circuit 6.

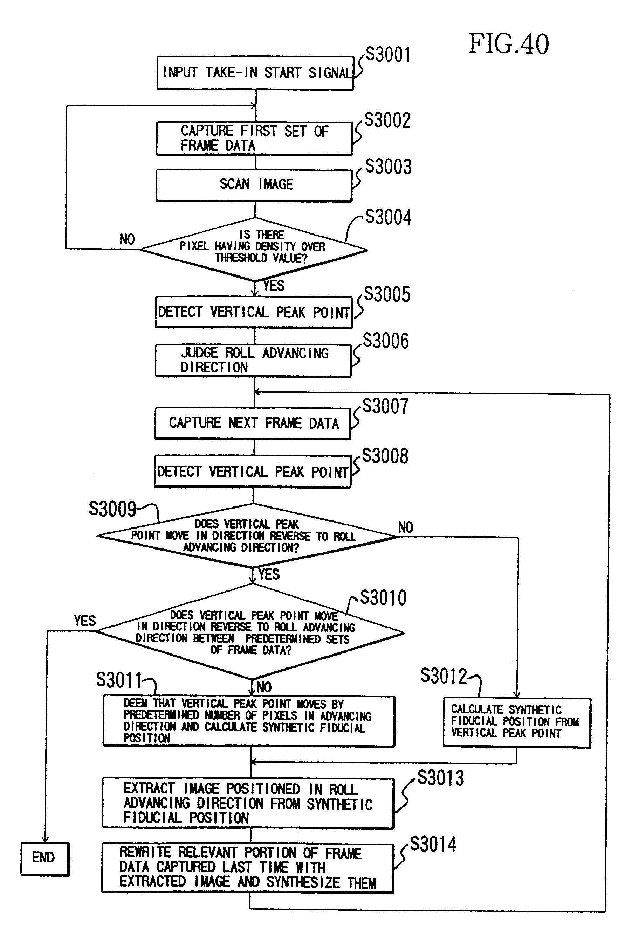

At this time, in the image processing circuit 6, the CPU 65 operates in accordance with an image processing flow shown in FIG. 40.

The CPU 65, to begin with, upon an input of the fingerprint image take-in start signal through the input device (S3001), receives a first set of frame data from the CCD imaging device 5 via the A/D converter 60 and the input port 61, and indicates the image memory 64 to store the same frame data (S3002).

Next, the CPU 65 scans the frame data stored in the image memory 64 (S3003), and judges whether or not the pixels having density values above the predetermined threshold value exist within the frame data (S3004).

When judging in S3004 that the pixels having the density values above the threshold value do not exist within the frame data, the CPU 65 re-executes processes in S3002 and in subsequent steps.

While on the other hand, when judging in S3004 that the pixels having the density values above the threshold value exist within the frame data, the CPU 65, proceeding to S3005, detects a pixel (the vertical peak point) having the maximum Y-coordinate value from the pixels having the density values above the threshold value, and indicates the RAM 69 to store X-Y coordinate values :' (S1, T1) of the vertical peak point in a predetermined area thereof.

Next, the CPU 65 proceeds to S3006 and judges therein a finger roll advancing direction by reading the X-Y coordinate values : (S1, T1) of the vertical peak point that are stored in the predetermined area of the RAM 69.

Subsequently, the CPU 65, proceeding to S3007, transfers the first set of frame data stored in the image memory 64 to the work memory 63, then receives the second set of frame data from the CCD imaging device 5, and indicates the image memory 64 to store the same frame data.

Then, the CPU 65, proceeding to S3008, detects the vertical peak point by scanning the second set of frame data, and indicates the RAM 69 to store the X-Y coordinate values : (S2, T2) of the thus detected vertical peak point in a predetermined area thereof.

Next, the CPU 65, proceeding to S3009, reads from the RAM 69 the X-coordinate value : S1 of the vertical peak point-of the first set of frame data, the X-coordinate value : S2 of the vertical peak point of the second set of frame data, and the data showing the finger roll advancing direction. Then, the CPU 65 judges based on the vertical peak point of the first set of frame data whether or not the vertical peak point of the second set of frame data moves in the direction opposite to the finger roll advancing direction.

When judging in S3009 that the vertical peak point of the second set of frame data does not move in the direction opposite to the roll advancing direction, the CPU 65 proceeds to S3012, wherein the CPU 65 calculates a synthetic fiducial position : X = S2 + d(S2) by use of the X-coordinate value : S2 of the vertical peak point of the second set of frame data and indicates the RAM 69 to store this fiducial position in the predetermined area thereof.

While on the other hand, when judging in S3009 that the vertical peak point of the second set of frame data moves in the direction opposite to the roll advancing direction, the CPU 65 proceeds to S3010 and judges therein whether or not the vertical peak point moves in the direction opposite to the roll advancing direction between the predetermined number of sets of frame data.

When judging in S3010 that the vertical peak point continuously moves in the direction opposite to the roll advancing direction between the predetermined number of sets of frame data, the CPU 65 judges that the roll of the finger placed on the first side surface 2a of the prism 2 is ended, and, after transmitting the synthetic image data stored in the work memory 63 to the external storage device, finishes the execution of the image processing flow.

While on the other hand, when judging in S3010 that the vertical peak point does not move in the direction opposite to the roll advancing direction between the predetermined number of sets of frame data, the CPU 65, proceeding to S3011, deems that the vertical peak point of the second set of frame data moves by a predetermined number of pixels in the roll advancing direction from the vertical point of the first set of frame data. Then, the CPU 65 calculates the synthetic fiducial position : X = S2 + d(S2) by use of the X-coordinate value : S2 of the vertical peak point deemed as being moved, and indicates the RAM 69 to store this fiducial position in a predetermined area thereof.

The CPU 65, after finishing the execution of the process in S3011 or S3012, proceeds to S3013 and extracts therein an image positioned in the finger roll advancing direction on the basis of the synthetic fiducial position out of the second set of frame data stored in the image memory 64.

Next, the CPU 65 proceeds to S3014 and rewrites therein, into the image extracted in S3013, the image positioned in the finger roll advancing direction on the basis of the synthetic fiducial position.

Subsequently, the CPU 65, returning to S3007, clears the second set of frame data stored in the image memory 64, receives a third set of frame data from the CCD imaging device 5, and indicates the image memory 64 to store the same frame data.

Then, with respect to the third set of frame data, the CPU 65 executes the same process as the process relative to the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Further, the CPU 65, when judging in S3010 that the vertical peak point moves in the direction opposite to the roll advancing direction between the predetermined number of sets of consecutive frame data, judges that the input process of the fingerprint image through the optical unit is ended, and, after transmitting the synthetic image data stored in the work memory 63 to the external storage device, finishes the execution of the image processing flow.

As discussed above, the rolled fingerprint image capturing apparatus in accordance with the embodiment 9, is capable of easily judging the stoppage of the rolling or the reverse rolling of the finger in the course of the capturing process or when the capturing process is finished by predicting the finger rolling direction and executing the process based on the pixel (the vertical peak point) representing the uppermost part of the finger as well as of preventing the fingerprint image of the same part from being captured double.

### <Embodiment 10>

In the second embodiment discussed above, when judging the end of rolling of the finger placed on the side surface 2a of the prism 2, the condition is that the horizontal peak point does not move in the roll advancing direction between the predetermined number of sets of frame data. In accordance with an embodiment 10, however, there will be exemplified such a condition that the horizontal peak point continuously moves in the direction opposite to the roll advancing direction between the predetermined number of sets of frame data.

In this case, the end-of-roll judging unit 12 of the image processing circuit 6 compares an X-coordinate value : UN of the horizontal peak point of the latest frame data (an N-th (: a natural number) set of frame data) with an X-coordinate value : UN-1 of the horizontal peak point of the frame data (an (N-1)th set of frame data) inputted just anterior to the N-th set of frame data, and judges whether or not the horizontal peak point moves in the direction opposite to the roll advancing direction.

On this occasion, e.g., the end-of-roll judging unit 12, when the finger roll advancing direction is set from the left side to the right side of the frame, as shown in FIG. 14, compares the X-coordinate value : UN of the horizontal peak point of the N-th set of frame data with the X-coordinate value : UN-1 of the horizontal peak point of the (N-1)th set of frame data, and, if UN-1 > UN, judges that the horizontal peak point of the N-th set of frame data moves in the direction opposite to the roll advancing direction. In this case, the end-of-roll judging unit 12 judges whether or not the horizontal peak point continuously moves reversely between the predetermined number of sets of frame data containing the N-th set of frame data.

Then, the end-of-roll judging unit 12, when judging that the horizontal peak point continuously moves reversely between the predetermined number of sets of frame data, deems that the roll of the finger placed on the first side surface 2a of the prism 2 is ended, and, after transmitting the synthetic image data stored in the work memory 63 to the external storage device, finishes the processes of the respective units described above.

While on the other hand, when judging that the horizontal peak point does not continuously move between the predetermined number of sets of frame data, the end-of-roll judging unit 12 deems that the roll of the finger placed on the first side surface 2a of the prism 2 is continuing.

Other configurations are the same as those in the second embodiment discussed above.

Operations of the rolled fingerprint image capturing apparatus 1 in this embodiment will hereinafter be described.

To start with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger rolled on the first side surface 2a of the prism 2, and transmits the inputted image data to the image processing circuit 6.

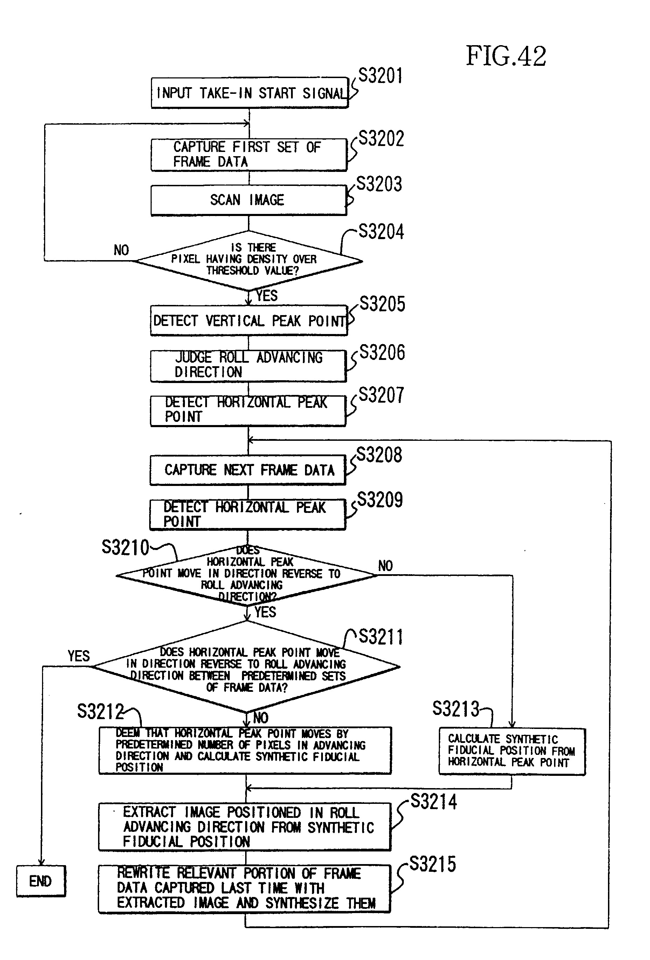

At this time, in the image processing circuit 6, the CPU 65 operates in accordance with an image processing flow shown in FIG. 42.

The CPU 65, to begin with, upon an input of the fingerprint image take-in start signal through the input device (S3201), receives the first set of frame data from the CCD imaging device 5 via the A/D converter 60 and the input port 61, and indicates the image memory 64 to store the same frame data (S3202).

Next, the CPU 65 scans the first set of frame data (S3203), and judges whether or not the pixels having density values above the predetermined threshold value exist within the frame data (S3204).

When judging in S3204 that the pixels having the density values above the threshold value do not exist within the frame data, the CPU 65 reexecute the processes in S3202 and subsequent steps.

While on the other hand, when judging in S3204 that the pixels having the density values above the threshold value exist within the frame data, the CPU 65, proceeding to S3205, detects a pixel (the vertical peak point) having the maximum Y-coordinate value from the pixels having the density values above the threshold value, and indicates the RAM 69 to store X-Y coordinate values : (S1, T1) thereof in a predetermined area thereof.

The CPU 65, after finishing the process in S3205, proceeds to S3206, in which the CPU 65 judges a finger roll advancing direction by reading the X-Y coordinate values : (S1, T1) of the vertical peak point that are stored in the predetermined area of the RAM 69, and indicates the RAM 69 to store the data showing the thus judged roll advancing direction.

Next, the CPU 65, proceeding to S3207, refers to the data showing the roll advancing direction stored in the RAM 69, and, scans the frame data in the roll advancing direction. The CPU 65 then detects a pixel (a horizontal peak point) having the density value above the predetermined threshold value and positioned at the front edge in the roll advancing direction, and indicates the RAM 69 to store X-Y coordinate values : (U1, V1) of the horizontal peak point in a predetermined area thereof.

Then, the CPU 65 transfers the first set of frame data stored in the image memory 64 to the work memory 63, then receives the second set of frame data from the CCD imaging device 5, and indicates the image memory 64 to store the same frame data (S3208).

Subsequently, the CPU 65 proceeds to S3209, in which the CPU 65 detects the vertical peak point by scanning the second set of frame data, and indicates the RAM 69 to store X-Y coordinate values : (U2, V2) of the detected horizontal peak point in a predetermined area thereof.

Next, the CPU 65 reads from the RAM 69 the X-coordinate value : U1 of the horizontal peak point of the first set of frame data, the X-coordinate value : U2 of the horizontal peak point of the second set of frame data, and the data showing the finger roll advancing direction. Then, the CPU 65 judges based on the horizontal peak point of the first set of frame data whether or not the horizontal peak point of the second set of frame data moves in the direction opposite to the roll advancing direction.

When judging in S3210 that the horizontal peak point of the second set of frame data does not move in the direction opposite to the roll advancing direction, the CPU 65 proceeds to S3213 and calculates therein a synthetic fiducial position : X = U2 + e(U2) by use of the X-coordinate value : U2 of the horizontal peak point of the second set of frame data and indicates the RAM 69 to store this fiducial position.

While on the other hand, when judging in S3210 that the horizontal peak point of the second set of frame data does not move in the direction opposite to the roll advancing direction, the CPU 65 proceeds to S3211 and judges therein whether or not the horizontal peak point continuously moves in the direction opposite to the roll advancing direction between the predetermined number of sets of consecutive frame data.

In S3212, the CPU 65 deems that the horizontal peak point of the second set of frame data has moved by a predetermined number of pixels in the roll advancing direction from the horizontal peak point of the first set of frame data. Then, the CPU 65 calculates the synthetic fiducial position : X = U2 + e(U2) by using the X-coordinate value : U2 of the horizontal peak point deemed as being moved, and indicates the RAM 69 to store this position in a predetermined area thereof.

The CPU 65, after finishing the execution of the process in S3212 or S3213, proceeds to S3214 and extracts therein an image positioned in the finger roll advancing direction on the basis of the synthetic fiducial position out of the second set of frame data stored in the image memory 64.

Next, the CPU 65 proceeds to S3215 and rewrites therein the image positioned in the finger roll advancing direction on the basis of the synthetic fiducial position to the image extracted in S3214 with respect to the first set of frame data stored in the work memory 62.

Subsequently, the CPU 65, returning to S3208, clears the second set of frame data stored in the image memory 64, receives a third set of frame data from the CCD imaging device 5, and indicates the image memory 64 to store the same frame data.

Then, with respect to the third set of frame data, the CPU 65 executes the same process as the process for the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, when judging in S3211 that the horizontal peak continuously moves in the direction opposite to the roll advancing direction between the predetermined number of sets of consecutive frame data, judges that the input process of the fingerprint image through the optical unit is ended, and, after transmitting the synthetic image data stored in the work memory 63 to the external storage device, finishes the execution of the image processing flow.

As discussed above, the rolled fingerprint image capturing apparatus in accordance with the embodiment 10, is capable of easily judging the stoppage of the rolling or the reverse rolling of the finger in the course of the capturing process or when the capturing process is finished by predicting the finger rolling direction and executing the process based on the pixel (the horizontal peak point) positioned at the front edge in the finger roll advancing direction as well as of preventing the fingerprint image of the same part from being captured double.

### <Embodiment 11>

The tenth embodiment discussed above has dealt with the example of executing the synthesizing process if the horizontal peak point does not move in the direction opposite to the roll advancing direction with respect to the predetermined number even in the case where the horizontal peak point does not move in the roll advancing direction with respect to the two sets of consecutive frame data. An eleventh embodiment will deal with an example in which it is deemed that the roll of the finger placed on the first side surface 2a of the prism 2 is interrupted in the case given above is interrupted till the roll of the finger resumes.

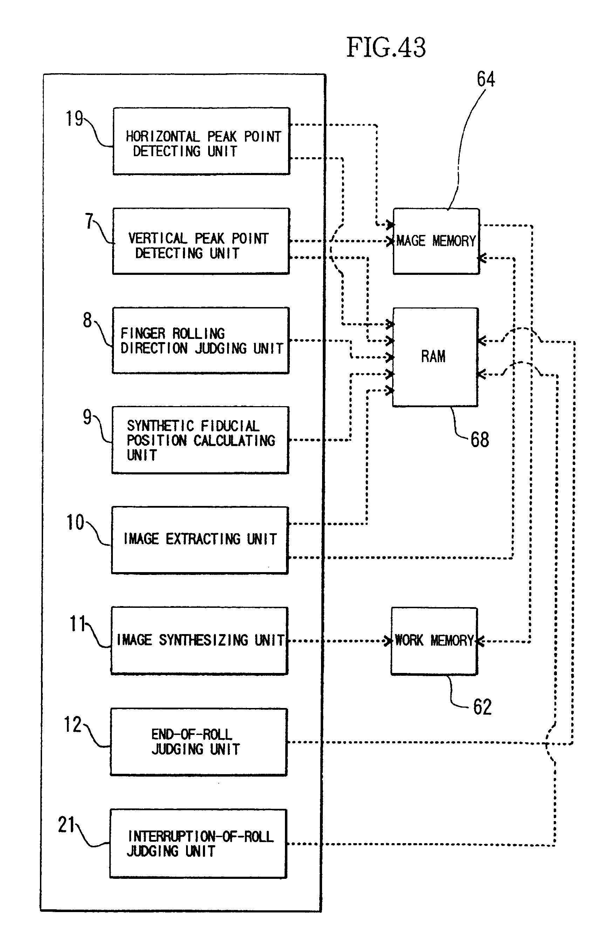

In this case, the image processing circuit 6, as illustrated in FIG. 43, includes the vertical peak point detecting unit 7, the finger rolling direction judging unit 8, the synthetic fiducial position calculating unit 9, the image extracting unit 10, the image synthesizing unit 11, the end-of-roll judging unit 12, the horizontal peak point detecting unit 19 and, in addition, an interruption-of-roll judging unit 21.

The interruption-of-roll judging unit 21 deems that the roll of the finger placed on the first side surface 2a of the prism 2 is interrupted when judging that the horizontal peak point of the latest frame data (an N-th (: a natural number) set of frame data) neither moves in the roll advancing direction from the horizontal peak point of the frame data (an (N-1)th set of frame data) inputted just anterior thereto nor continuously moves in the direction opposite to the roll advancing direction between the predetermined number of sets of frame data containing the N-th set of frame data, and is in a standby status for an (N+1)th set of frame data from the CCD imaging device 5.

Corresponding thereto, when judging that between the predetermined number of sets of frame data, all the horizontal peak points move in the direction opposite to the roll advancing direction from the horizontal peak point of the frame data just anterior thereto, the end-of-roll judging unit 12 judges that the roll of the finger placed on the first side surface 2a of the prism 2 is ended.

Other configurations are the same as those in the tenth embodiment discussed above.

Operations of the rolled fingerprint image capturing apparatus 1 in this embodiment will hereinafter be described.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger rolled on the first side surface 2a of the prism 2, and transmits the inputted image data to the image processing circuit 6.

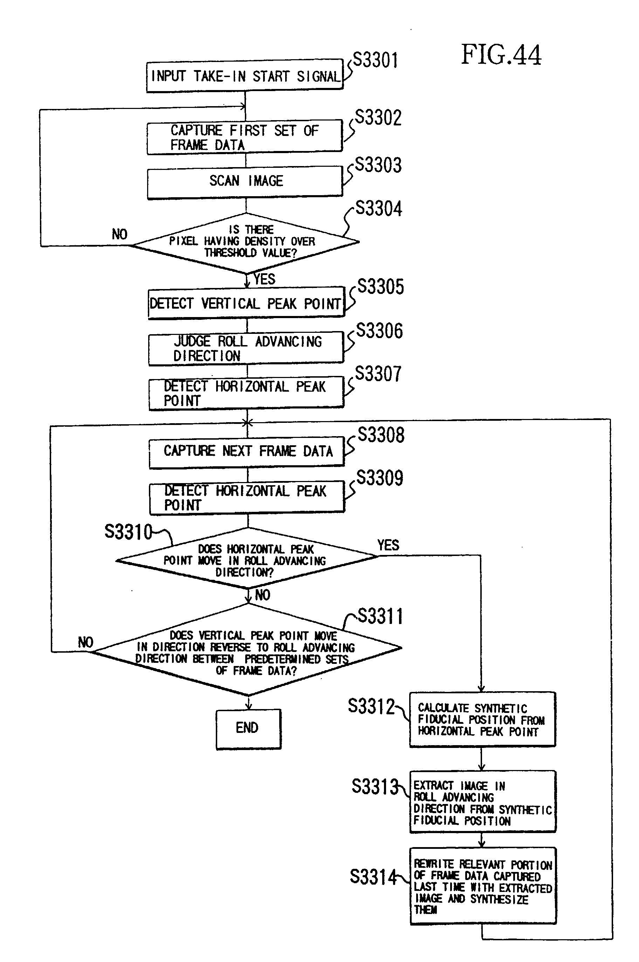

At this time, in the image processing circuit 6, the CPU 65 executes an image processing flow shown in FIG. 44.

The CPU 65, at the first onset, upon an input of the fingerprint image take-in start signal through the input device (S3301), receives a first set of frame data from the CCD imaging device 5 via the A/D converter 60 and the input port 61, and indicates the image memory 64 to store the same frame data (S3302).

Next, the CPU 65 scans the first set of frame data stored in the image memory 64 (S3303), and judges whether or not the pixels having density values above the predetermined threshold value exist within the frame data (S3304).

When judging in S3304 that the pixels having the density values above the threshold value do not exist within the frame data, the CPU 65 reexecute the processes in S3302 and subsequent steps.

While on the other hand, when judging in S3304 that the pixels having the density values above the threshold value exist within the frame data, the CPU 65, proceeding to S3305, detects a pixel (the vertical peak point) having the maximum Y-coordinate value from the pixels having the density values above the threshold value, and indicates the RAM 69 to store X-Y coordinate values : (S1, T1) thereof.

The CPU 65, after finishing the process in S3305, proceeds to S3306, in which the CPU 65 judges a finger roll advancing direction by reading the X-Y coordinate values : (S1, T1) of the vertical peak point that are stored in the predetermined area of the RAM 69, and indicates the RAM 69 to store the data showing the thus judged roll advancing direction in a predetermined area thereof.

Next, the CPU 65, proceeding to S3307, refers to the data showing the roll advancing direction that is stored in the RAM 69, and scans the frame data in the roll advancing direction, thus detecting a pixel (the horizontal peak point) having the density value above the predetermined threshold value and positioned at the front edge in the roll advancing direction. The CPU 65 then indicates the RAM 69 to store the X-Y coordinate values : (U1, V1) in a predetermined area thereof.

Subsequently, the CPU 65, proceeding to S3308, transfers therein the first set of frame data stored in the image memory 64 to the work memory 63, then receives the second set of frame data from the CCD imaging device 5, and indicates the image memory 64 to store the same frame data.

Then, the CPU 65, proceeding to S3309, detects the horizontal peak point by scanning the second set of frame data, and indicates the RAM 69 to store the X-Y coordinate values : (U2, V2) of the detected horizontal peak point in a predetermined area.

Next, the CPU 65 reads from the RAM 69 the X-coordinate value : U1 of the horizontal peak point of the first set of frame data, the X-coordinate value : U2 of the horizontal peak point of the second set of frame data, and the data showing the finger roll advancing direction. Then, the CPU 65 judges based on the horizontal peak point of the first set of frame data whether or not the horizontal peak point of the second set of frame data moves in the roll advancing direction.

When judging in S3310 that the horizontal peak point of the second set of frame data moves in the roll advancing direction, the CPU 65 proceeds to S3312 and calculates therein a synthetic fiducial position : X = U2 + e(U2) by use of the X-coordinate value : U2 of the horizontal peak point of the second set of frame data and indicates the RAM 69 to store this fiducial position.

Subsequently, the CPU 65 proceeds to S3313 and extracts therein an image positioned in the area in the finger roll advancing direction on the basis of the synthetic fiducial position out of the second set of frame data stored in the image memory 64.

Next, the CPU 65 rewrites -the image positioned in the area in the finger roll advancing direction on the basis of the synthetic fiducial position into the image extracted in S3213 with respect to the first set of frame data stored in the work memory 62 (S3314).

The CPU 65 finishing the process in S3314 returns to S3308, clears the second set of frame data stored in the image memory 64, receives a third set of frame data from the CCD imaging device 5, and indicates the image memory 64 to store the same frame data.

Then, with respect to the third set of frame data, the CPU 65 executes the same process as the process for the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, when judging in S3311 that the horizontal peak moves in the direction opposite to the roll advancing direction between the predetermined number of sets of consecutive frame data, judges that the input process of the fingerprint image through the optical unit is ended, and, after transmitting the synthetic image data stored in the work memory 63 to the external storage device, finishes the execution of the image processing flow.

While on the other hand, the CPU 65 deems that the roll of the finger placed on the first side surface 2a of the prism 2 is interrupted when judging that the horizontal peak point of at least one set of frame data among the predetermined number of sets of consecutive frame data does not move in the direction opposite to the roll advancing direction on the basis of the horizontal peak point of the frame data just anterior thereto. The CPU 65 then returns to S3308 and comes into the standby status for the next frame data given from the CCD imaging device 5. Subsequently, the roll of the finger resumes, and the CPU 65, when judging S3310 that the horizontal peak point moves in the roll advancing direction, sequentially executes the processes in S3312, S3313 and S3314, thereby synthesizing the frame data.

As discussed above, the rolled fingerprint image capturing apparatus in the embodiment 11 is capable of judging that the finger rolling is interrupted midways of capturing the fingerprint image, and preventing the finger print image of the same part from being captured double.

### <Embodiment 12>

The eleventh embodiment discussed above has dealt with the example of making use of only the horizontal peak point as a parameter for judging that the roll of the finger on the first side surface 2a of the prism 2 is interrupted. A twelfth embodiment, however, will deal with an example of making use of also the vertical peak point in addition to the horizontal peak point.

In this case, the interruption-of-roll judging unit 21 of the image processing circuit 6 judges that the roll of the finger placed on the first side surface 2a of the prism 2 is interrupted if the vertical and horizontal peak points of the latest frame data (an N-th set of frame data) do not move in the roll advancing direction from the vertical and horizontal peak points of the frame data (an (N-1)th set of frame data) inputted just anterior thereto, and if the vertical or horizontal peak point of at least one set of frame data among the predetermined number of sets of frame data containing the N-th set of frame data, move in the roll advancing direction from the vertical or horizontal peak point of the frame data just anterior thereto.

Corresponding thereto, when judging that the vertical and horizontal peak points of all the frame data do not move in the roll advancing direction from the vertical and horizontal peak points of the frame data just anterior thereto between the predetermined number of sets of frame data, the end-of-roll judging unit 12 deems that the roll of the finger placed on the first side surface 2a of the prism 2 is ended.

Other configurations are the same as those in the eleventh embodiment discussed above.

Operations of the rolled fingerprint image capturing apparatus 1 in this embodiment will hereinafter be described.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger which is rolled and imprinted on the first side surface 2a of the prism 2, and transmits the inputted image data to the image processing circuit 6.

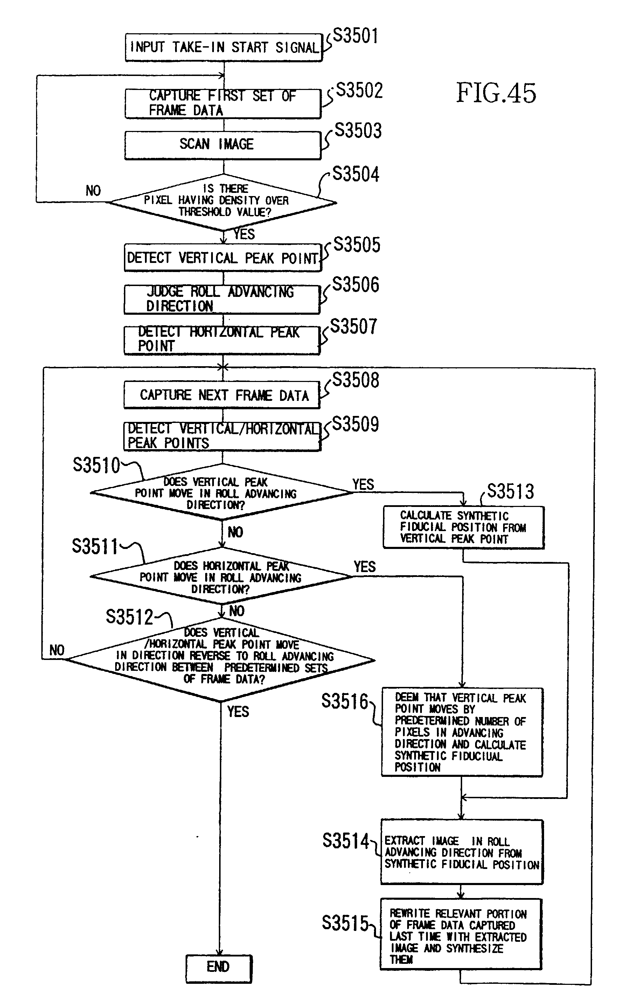

At this time, in the image processing circuit 6, the CPU 65 executes an image processing flow shown in FIG. 45.

The CPU 65, at the first onset, upon an input of the fingerprint image take-in start signal through the input device (S3501), receives a first set of frame data from the CCD imaging device 5 via the A/D converter 60 and the input port 61, and indicates the image memory 64 to store the same frame data (S3502).

Next, the CPU 65 scans the first set of frame data stored in the image memory 64 (S3503), and judges whether or not the pixels having density values above the predetermined threshold value exist within the frame data (S3504).

When judging in S3504 that the pixels having the density values above the threshold value do not exist within the frame data, the CPU 65 reexecute the processes in S3502 and subsequent steps.

While on the other hand, when judging in S3504 that the pixels having the density values above the threshold value exist within the frame data, the CPU 65, proceeding to S3505, detects a pixel (the vertical peak point) having the maximum Y-coordinate value from the pixels having the density values above the threshold value, and indicates the RAM 69 to store X-Y coordinate values : (S1, T1) in a predetermined area thereof.

The CPU 65, after finishing the process in S3505, proceeds to S3506, in which the CPU 65 judges a finger roll advancing direction by reading the X-Y coordinate values : (S1, T1) of the vertical peak point that are stored in the predetermined area of the RAM 69, and indicates the RAM 69 to store a judged result (the data showing the roll advancing direction) in a predetermined area thereof.

Next, the CPU 65 refers to the data showing the roll advancing direction that is stored in the RAM 69, and scans the frame data in the roll advancing direction, thus detecting a pixel (the horizontal peak point) having the density value above the predetermined threshold value and positioned at the front edge in the roll advancing direction. The CPU 65 then indicates the RAM 69 to store the X-Y coordinate values : (U1, V1) in a predetermined area thereof (S3507).

Herein, the CPU 65 transfers the frame data stored in the image memory 64 to the work memory 63, then receives the second set of frame data from the CCD imaging device 5, and indicates the image memory 64 to store the same frame data (S3508).

Subsequently, the CPU 65 detects the vertical and horizontal peak points by scanning the second set of frame data stored in the image memory 64, and indicates the RAM 69 to store the X-Y coordinate values : (S2, T2) and (U2, V2) of the respective peak points in a predetermined area thereof (S3509).

Next, the CPU 65 reads from the RAM 69 the X-coordinate value : S1 of the vertical peak point of the first set of frame data, the X-coordinate value : S2 of the vertical peak point of the second set of frame data, and the data showing the finger roll advancing direction. Then, the CPU 65 judges based on the vertical peak point of the first set of frame data whether or not the vertical peak point of the second set of frame data moves in the roll advancing direction (S3510).

When judging in S3510 that the horizontal peak point of the second set of frame data moves in the roll advancing direction from the vertical peak point of the fits set of frame data, the CPU 65 proceeds to S3513 and calculates therein a synthetic fiducial position : X = S2 + d(S2) by use of the X-coordinate value : S2 of the vertical peak point of the second set of frame data and indicates the RAM 69 to store this fiducial position.

Subsequently, the CPU 65 extracts an image positioned in the finger roll advancing direction on the basis of the synthetic fiducial position out of the second set of frame data stored in the image memory 64 (S3514).

Then, the CPU 65 rewrites the image positioned in the finger roll advancing direction on the basis of the synthetic fiducial position into the image read in S3514 with respect to the first set of frame data stored in the work memory 62 (S3515).

The CPU 65 finishing the process in S3514 returns to S3508, clears the second set of frame data stored in the image memory 64, receives the next frame data (a third set of frame data) from the CCD imaging device 5, and indicates the image memory 64 to store the same frame data.

Then, with respect to the third set of frame data, the CPU 65 executes the same process as the process for the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Further, the CPU 65, when judging in S3510 that the vertical peak of a certain set of frame data (an N-th set of frame data) does not moves in the roll advancing direction from the vertical peak point of the frame data (an (N-1)th set of frame data) just anterior thereto, proceeds to S3511 and reads from the RAM 69 the X-coordinate value : UN-1 of the horizontal peak point of the (N-1)th set of frame data, the X-coordinate value : UN of the horizontal peak point of the N-th set of frame data, and the data showing the finger roll advancing direction. Then, the CPU 65 judges based on the horizontal peak point of the (N-1)th set of frame data whether or not the horizontal peak point of the N-th set of frame data moves in the roll advancing direction.

When judging in S3511 that the horizontal peak point of the N-th set of frame data moves in the roll advancing direction from the horizontal peak point of the (N-1)th set of frame data, the CPU 65 proceeds to S3516 and deems that the vertical peak point of the N-th set of frame data moves by a predetermined number of pixels in the roll advancing direction on the basis of the vertical peak point of the (N-1)th set of frame data. Then, the CPU 65 calculates therein a synthetic fiducial position : X = SN + d(SN) by use of the X-coordinate value : SN of the vertical peak point deemed as being moved, and executes the synthesizing process of the N-th set of frame data by implementing the processes in S3514 and subsequent steps.

While on the other hand, when judging in S3511 that the horizontal peak point of the N-th set of frame data does not move in the roll advancing direction from the horizontal peak point of the (N-1)th set of frame data, the CPU 65 proceeds to S3512 and judges therein whether or not the vertical and horizontal peak points of all the frame data move in the roll advancing direction from the vertical and horizontal peak points of the frame data just anterior thereto between the predetermined number of sets of frame data including the N-th set of frame data.

When judging in S3512 that the vertical and horizontal peak points of all the frame data do not move in the roll advancing direction from the vertical and horizontal peak points of the frame data just anterior thereto between the predetermined number of sets of frame data, the CPU 65 deems that the roll of the finger placed on the first side surface 2a of the prism 2 is ended. The CPU 65 then, after transmitting the synthetic image data stored in the work memory 63 to the external storage device, finishes the execution of the image processing flow.

While on the other hand, when judging in S3512 that the vertical and horizontal peak points of at least one set of frame data move in the roll advancing direction from the vertical and horizontal peak points of the frame data just anterior thereto between the predetermined number of sets of frame data, the CPU 65 deems that the roll of the finger placed on the first side surface 2a of the prism 2 is interrupted, and returns to S3508, wherein the CPU 65 in on standby for the next frame data from the CCD imaging device 5.

Thereafter, the roll of the finger resumes, and, when judging in S3510 that the vertical peak point moves in the roll advancing direction or judging in S3511 that the horizontal peak point moves in the roll advancing direction, the CPU 65 executes sequentially the processes in S3513, S3514 and S3515, or S3516, S3514 and S3515, thus executing the synthesizing process of the frame data.

Note that the CPU may judge in S3512 whether or not the vertical peak point and the horizontal peak point of all the frame data move in the direction opposite to the roll advancing direction from the vertical and horizontal peak points of the frame data just anterior thereto between the predetermined number of sets of frame data, and, if the vertical or horizontal peak point of at least one set of frame data among the predetermined number of sets of frame data moves in the direction reverse to the roll advancing direction on the basis of the vertical or horizontal peak point of the frame data just anterior thereto, may deem that the roll of the finger placed on the first side surface 2a of the prism 2 is interrupted.

As discussed above, the rolled fingerprint image capturing apparatus in accordance with the twelfth embodiment is capable of judging that the rolling of the finger is interrupted midways of capturing the fingerprint image and preventing the image of the fingerprint of the same part from being captured double.

### <Embodiment 13>

The first embodiment discussed above has dealt with the example of judging the end of rolling of the finger and determining the synthetic fiducial position with only the vertical peak point serving as the parameter. A thirteenth embodiment, however, will deal with an example of utilizing the horizontal peak point as far as the vertical peak point does not move in the roll advancing direction.

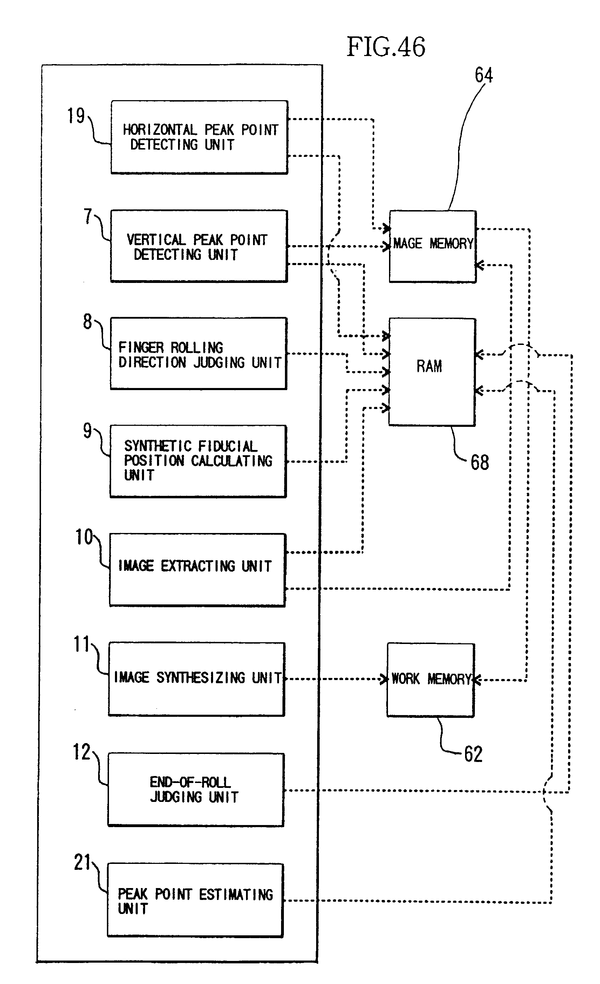

In this case, the image processing circuit 6, as illustrated in FIG. 46, includes the vertical peak point detecting unit 7, the finger rolling direction judging unit 8, the synthetic fiducial position calculating unit 9, the image extracting unit 10, the image synthesizing unit 11, the end-of-roll judging unit 12 and, in addition, the horizontal peak point detecting unit 19 and a peak point estimating unit 20.

The horizontal peak point detecting unit 19, when judging that the vertical peak point of the latest frame data (an N-th (: a natural number) set of frame data) does not move in the roll advancing direction from the vertical peak point of the frame data (an (N-1)th set of frame data) inputted just anterior thereto, detects X-coordinate values : UN and UN-1 of the horizontal peak points of the respective sets of frame data by scanning the N-th set of frame data and the (N-1)th set of frame data.

Then, the end-of-roll judging unit 12 compares the X-coordinate value : UN of the horizontal peak point of the N-th set of frame data that is detected by the horizontal peak point detecting unit 19, with the X-coordinate value : UN-1 of the horizontal peak point of the (N-1)th set of frame data, and, if the horizontal peak point of the N-th set of frame data does not move in the roll advancing direction on the basis of the horizontal peak point of the (N-1) set of frame data, deems that the roll of the finger is ended.

Next, the peak point estimating unit 20, when judging that the horizontal peak point of the N-th set of frame data moves in the roll advancing direction on the basis of the horizontal peak point of the (N-1)th set of frame data, deems that the vertical peak point of the N-th set of frame data moves by a predetermined number of pixels in the roll advancing direction from the vertical peak point of the (N-1)th set of frame data, and then calculates the X-coordinate value : SN of the vertical peak point of the N-th set of frame data.

On this occasion, the peak point estimating unit 20 deems a value, into which a predetermined value is added to the X-coordinate value : UN of the horizontal peak point of the N-th set of frame data, as the X-coordinate value : SN of the vertical peak point of the N-th set of frame data. Herein, the predetermined value given above is a value into which positive and negative signs determined corresponding to the finger roll advancing direction are added to an absolute value determined corresponding to a width of the finger.

Further, the synthetic fiducial position calculating unit 9, if the vertical peak point of the N-th set of frame moves in the roll advancing direction from the vertical peak point of the (N-1)th set of frame data, calculate a synthetic fiducial position : X = SN + d(SN) by use of the X-coordinate value : SN of the vertical peak point as in the first embodiment discussed above.

Then, the synthetic fiducial position calculating unit 9, if the vertical peak point of the N-th set of frame does not move in the roll advancing direction from the vertical peak point of the (N-1)th set of frame data, calculate the synthetic fiducial position : X = SN + d(SN) by use of the X-coordinate value : SN of the vertical peak point that is calculated by the peak point estimating unit 20.

Operations of the rolled fingerprint image capturing apparatus 1 in this embodiment will hereinafter be described.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger which is rolled and imprinted on the first side surface 2a of the prism 2, and transmits the inputted image data to the image processing circuit 6.

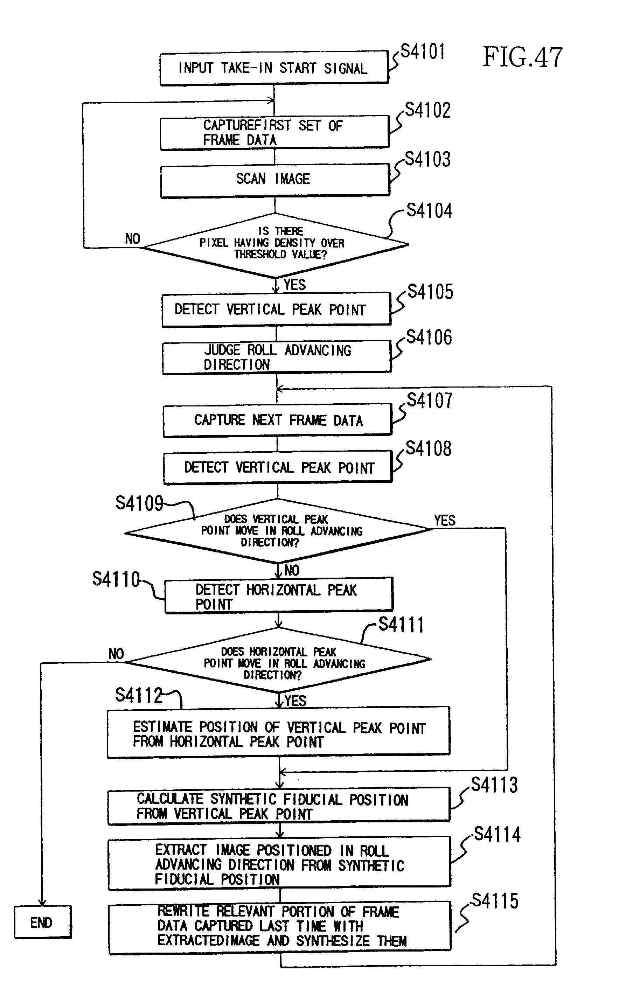

At this time, in the image processing circuit 6, the CPU 65 executes an image processing flow shown in FIG. 47.

The CPU 65, to begin with, upon an input of the fingerprint image take-in start signal through the input device (S4101), receives a first set of frame data from the CCD imaging device 5 via the A/D converter 60 and the input port 61, and indicates the image memory 64 to store the same frame data in a first frame memory thereof (S4102).

Next, the CPU 65 scans the first set of frame data (S4103), and judges whether or not the pixels having density values above the predetermined threshold value exist within the frame data (S4104).

When judging in S4104 that the pixels having the density values above the threshold value do not exist within the frame data, the CPU 65 reexecute the processes in S4102 and subsequent steps.

While on the other hand, when judging in S4104 that the pixels having the density values above the threshold value exist within the frame data, the CPU 65, proceeding to S4105, detects a pixel (the vertical peak point) having the maximum Y-coordinate value from the pixels having the density values above the threshold value, and indicates the RAM 69 to store X-Y coordinate values : (S1, T1) of the vertical peak point in a predetermined area thereof.

The CPU 65, after finishing the process in S4105, proceeds to S4106, in which the CPU 65 judges a roll advancing direction of the finger placed on the first side surface 2a of the prism 2 by reading the X-Y coordinate values : (S1, T1) of the vertical peak point that are stored in the predetermined area of the RAM 69, and indicates the RAM 69 to store the data showing the finger roll advancing direction in a predetermined area of the RAM 69.

Next, the CPU 65 copies the first set of frame data stored in the first frame memory of the image memory 64 into the work memory 63, then receives the second set of frame data from the CCD imaging device 5, and indicates the image memory 64 to store the same frame data in a second frame memory thereof (S4107).

Subsequently, the CPU 65 detects the vertical peak point by scanning the second set of frame data, and indicates the RAM 69 to store the X-Y coordinate values : (S2, T2) of the detected vertical peak point in a predetermined area (S4108).

Next, the CPU 65 reads from the RAM 69 the X-coordinate value : S1 of the vertical peak point of the first set of frame data, the X-coordinate value : S2 of the vertical peak point of the second set of frame data, and the data showing the finger roll advancing direction. Then, the CPU 65 judges based on the vertical peak point of the first set of frame data whether or not the vertical peak point of the second set of frame data moves in the roll advancing direction (S4109).

When judging in S4109 that the vertical peak point of the second set of frame data moves in the roll advancing direction, the CPU 65, proceeding to S4113, calculates therein a synthetic fiducial position : X = S2 + d(S2) by use of the X-coordinate value : S2 of the vertical peak point of the second set of frame data and indicates the RAM 69 to store this fiducial position.

Next, the CPU 65 proceeds to S4114 and extracts therein an image positioned in the area in the finger roll advancing direction on the basis of the synthetic fiducial position out of the second set of frame data stored in the second frame memory of the image memory 64.

Subsequently, the CPU 65 proceeds to S4115 and rewrites therein the image positioned in the area in the finger roll advancing direction on the basis of the synthetic fiducial position into the image read in S4114 with respect to the first set of frame data stored in the work memory 62.

Then, the CPU 65, returning to S4107, clears the first set of frame data stored in the first frame memory of the image memory 64, receives the third set of frame data from the CCD imaging device 5, and indicates the image memory 64 to store the same frame data in the first frame memory thereof.

Subsequently, with respect to the third set of frame data, the CPU 65 executes the same process as the process for the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, on the occasion of processing a certain set of frame data (an N-th set of frame data), when judging in S4109 that the vertical peak of the N-th set of frame data does not moves in the roll advancing direction from the vertical peak point of the frame data (an (N-1)th set of frame data) just anterior thereto, proceeds to S4100 and detects X-Y coordinate values : (UN, VN), (UN-1, VN-1) of the horizontal peak points of the respective sets of frame data by scanning the N-th set of frame data stored in the first (or second) frame memory of the image memory 64 and the (N-1)th set of frame data stored in the second (or first) frame memory of the image memory 64. Then, CPU 65 indicates the RAM 69 to store the same coordinate values in a predetermined area thereof.

Subsequently, the CPU 65 reads from the RAM 69 the X-coordinate value : UN of the horizontal peak point of the N-th set of frame data, and judges based on the horizontal peak point of the (N-1)th set of frame data whether or not the horizontal peak point of the N-th set of frame data moves in the roll advancing direction.

When judging in S4111 that the horizontal peak point of the N-th set of frame data moves in the roll advancing direction on the basis of the horizontal peak point of the (N-1)th set of frame data, the CPU 65 proceeds to S4112 and calculates therein the X-coordinate value : SN of the vertical peak point of the N-th set of frame data by use of the X-coordinate value : UN of the horizontal peak point of the N-th set of frame data. Then, the CPU 65 proceeds to S4113. The processes in S4113 and subsequent steps are the same as those in the second set of frame data.

While on the other hand, when judging in S4111 that the horizontal peak point of the N-th set of frame data does not move in the roll advancing direction on the basis of the horizontal peak point of the (N-1)th set of frame data, the CPU 65 deems that the rolling of the finger placed on the first side surface 2a of the prism 2 is ended, and, after transmitting the synthetic image data stored in the work memory 63 to the external storage device, finishes the execution of the image processing flow.

As discussed above, the horizontal peak point in addition to the vertical peak point is used as the parameter for determining the synthetic fiducial position or judging the end of rolling of the finger, thereby making it feasible to calculate the movement quantity of the vertical peak point using the X-coordinate value of the horizontal peak point even then the vertical peak point does not move in the roll advancing direction in spite of the fact that the finger advances in the advancing direction. As a result, the optimal synthetic fiducial position can be calculated.

### <Embodiment 14>

The second embodiment discussed above has dealt with the example of judging the end of rolling of the finger and determining the synthetic fiducial position with only the horizontal peak point serving as the parameter. A fourteenth embodiment, however, will deal with an example of utilizing the vertical peak point as far as the vertical peak point does not move in the roll advancing direction.

In this case, the image processing circuit 6, as in the embodiment 13 discussed above, includes the vertical peak point detecting unit 7, the finger rolling direction judging unit 8, the synthetic fiducial position calculating unit 9, the image extracting unit 10, the image synthesizing unit 11, the end-of-roll judging unit 12, the horizontal peak point detecting unit 19 and the peak point estimating unit 20.

Then, the vertical peak point detecting unit 7, when judging that the horizontal peak point of the latest frame data (an N-th set of frame data) does not move in the roll advancing direction on the basis of the horizontal peak point of the frame data (an (N-1)th set of frame data) inputted just anterior thereto, detects X-coordinate values : SN and SN-1 of the vertical peak points of the respective sets of frame data by scanning the N-th set of frame data and the (N-1)th set of frame data.

Corresponding thereto, the end-of-roll judging unit 12 compares the X-coordinate value : SN of the vertical peak point of the N-th set of frame data that is detected by the vertical peak point detecting unit 7, with the X-coordinate value : SN-1 of the vertical peak point of the (N-1)th set of frame data, and, if the vertical peak point of the N-th set of frame data does not move in the roll advancing direction on the basis of the vertical peak point of the (N-1) set of frame data, deems that the roll of the finger is ended.

Further, the peak point estimating unit 20, when judging that the vertical peak point of the N-th set of frame data moves in the roll advancing direction on the basis of the vertical peak point of the (N-1)th set of frame data, deems that the horizontal peak point of the N-th set of frame data moves by a predetermined number of pixels in the roll advancing direction from the horizontal peak point of the (N-1)th set of frame data, and then calculates the X-coordinate value : UN of the horizontal peak point of the N-th set of frame data.

On this occasion, the peak point estimating unit 20 deems a value, into which a predetermined value is added to the X-coordinate value : SN of the vertical peak point of the N-th set of frame data, as the X-coordinate value : UN of the horizontal peak point of the N-th set of frame data. Herein, the predetermined value given above is a value into which positive and negative signs determined corresponding to the finger roll advancing direction are added to an absolute value determined corresponding to a width of the finger.

The synthetic fiducial position calculating unit 9, if the horizontal peak point of the N-th set of frame moves in the roll advancing direction from the horizontal peak point of the (N-1)th set of frame data, calculate a synthetic fiducial position : X = UN + e(UN) by use of the X-coordinate value : UN of the horizontal peak point as in the second embodiment discussed above.

Further, the synthetic fiducial position calculating unit 9, if the horizontal peak point of the N-th set of frame does not move in the roll advancing direction from the horizontal peak point of the (N-1)th set of frame data, calculate the synthetic fiducial position : X = UN + e(UN) by use of the X-coordinate value : UN of the horizontal peak point that is calculated by the peak point estimating unit 20.

Other configurations are the same as those in the second embodiment discussed above.

Operations of the rolled fingerprint image capturing apparatus 1 in this embodiment will hereinafter be described.

To begin with, the rolled fingerprint image capturing apparatus 1, when the user of the present apparatus inputs the fingerprint image take-in start command through the input device, applies the drive voltage to the LED 3 and the CCD imaging device 5 of the optical unit. Then, the optical unit starts inputting a fingerprint image of the finger which is rolled and imprinted on the first side surface 2a of the prism 2, and transmits the inputted image data to the image processing circuit 6.

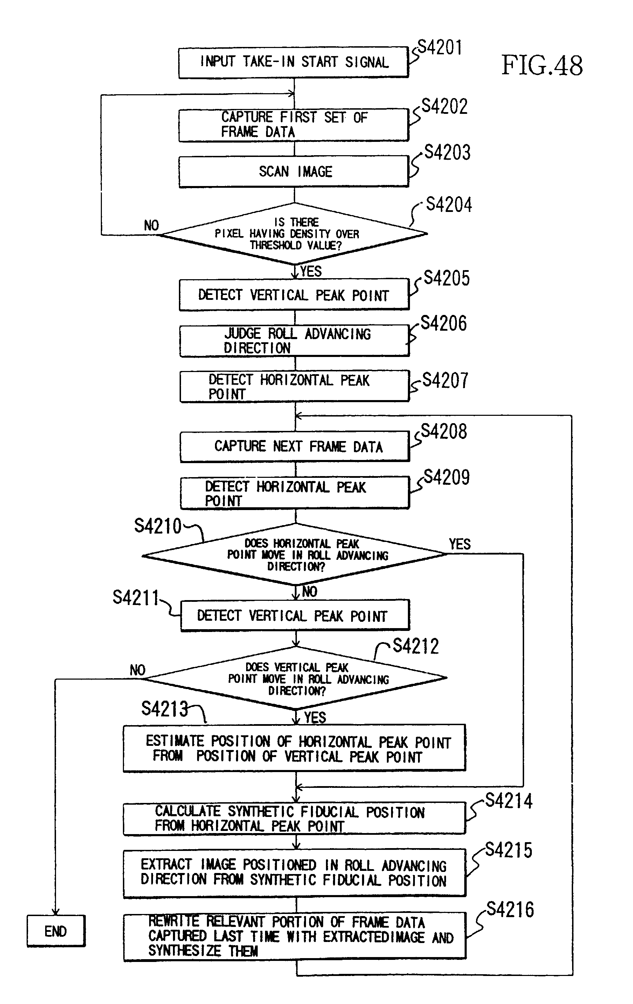

At this time, in the image processing circuit 6, the CPU 65 executes an image processing flow shown in FIG. 48.

The CPU 65, to begin with, upon an input of the fingerprint image take-in start signal through the input device (S4201), receives a first set of frame data from the CCD imaging device 5 via the A/D converter 60 and the input port 61, and indicates the image memory 64 to store the same frame data in a first frame memory thereof (S4202).

Next, the CPU 65 scans the first set of frame data stored in the first frame memory of the image memory 64 (S4103), and judges whether or not the pixels having density values above the predetermined threshold value exist within the frame data (S4204).

When judging in S4204 that the pixels having the density values above the threshold value do not exist within the frame data, the CPU 65 reexecute the processes in S4202 and subsequent steps.

While on the other hand, when judging in S4204 that the pixels having the density values above the threshold value exist within the frame data, the CPU 65, proceeding to S4205, detects a pixel (the vertical peak point) having the maximum Y-coordinate value from the pixels having the density values above the threshold value, and indicates the RAM 69 to store X-Y coordinate values : (S1, T1) of the vertical peak point in a predetermined area thereof.

The CPU 65, after finishing the process in S4205, proceeds to S4206, in which the CPU 65 judges a roll advancing direction of the finger placed on the first side surface 2a of the prism 2 by reading the X-Y coordinate values : (S1, T1) of the vertical peak point that are stored in the predetermined area of the RAM 69, and indicates the RAM 69 to store the data showing the finger roll advancing direction in a predetermined area of the RAM 69.

Next, the CPU 65 detects the horizontal peak point by scanning the first set of frame data stored in the first frame memory of the image memory 64, and indicates the RAM 69 to store the X-Y coordinate values : (U1, V1) of the detected horizontal peak point.

Then, the CPU 65 copies the first set of frame data stored in the first frame memory of the image memory 64 into the work memory 63, then receives the second set of frame data from the CCD imaging device 5, and indicates the image memory 64 to store the same frame data in the second frame memory thereof (S4208).

Subsequently, the CPU 65 detects the vertical peak point by scanning the second set of frame data, and indicates the RAM 69 to store the X-Y coordinate values : (U2, V2) of the detected horizontal peak point (S4209).

Next, the CPU 65, proceeding to S4210, reads therein from the RAM 69 the X-coordinate value : U1 of the horizontal peak point of the first set of frame data, the X-coordinate value : U2 of the horizontal peak point of the second set of frame data, and the data showing the finger roll advancing direction. Then, the CPU 65 judges based on the horizontal peak point of the first set of frame data whether or not the horizontal peak point of the second set of frame data moves in the roll advancing direction.

When judging in S4210 that the horizontal peak point of the second set of frame data moves in the roll advancing direction, the CPU 65, proceeding to S4214, calculates therein a synthetic fiducial position : X = U2 + e(U2) by use of the X-coordinate value : U2 of the horizontal peak point of the second set of frame data and indicates the RAM 69 to store this fiducial position.

Next, the CPU 65 proceeds to S4215 and extracts therein an image positioned in the finger roll advancing direction on the basis of the synthetic fiducial position out of the second set of frame data stored in the second frame memory of the image memory 64.

Subsequently, the CPU 65 proceeds to S4216 and rewrites therein the image positioned in the finger roll advancing direction on the basis of the synthetic fiducial position into the image extracted in S4215 with respect to the first set of frame data stored in the work memory 62.

Then, the CPU 65, returning to S4208, clears the first set of frame data stored in the first frame memory of the image memory 64, receives the third set of frame data from the CCD imaging device 5, and indicates the image memory 64 to store the same frame data in the first frame memory thereof.

Subsequently, with respect to the third set of frame data, the CPU 65 executes the same process as the process for the second set of frame data, and synthesizes the third set of frame data with the frame data (into which the first set of frame data is synthesized with the second set of frame data) stored in the work memory 62.

Similarly, the CPU 65 executes the same process as the one for the third set of frame data with respect to a fourth set of frame data and subsequent frame data.

Then, the CPU 65, on the occasion of processing a certain set of frame data (an N-th set of frame data), when judging in S4210 that the horizontal peak of the N-th set of frame data does not moves in the roll advancing direction on the basis of the horizontal peak point of the frame data (an (N-1)th set of frame data) just anterior thereto, proceeds to S4211 and detects X-Y coordinate values : (SN, TN), (SN-1, TN-1) of the vertical peak points of the respective sets of frame data by scanning the N-th set of frame data stored in the first (or second) frame memory of the image memory 64 and the (N-1)th set of frame data stored in the second (or first) frame memory of the image memory 64. Then, CPU 65 indicates the RAM 69 to store the same coordinate values in a predetermined area thereof.

Subsequently, the CPU 65 reads from the RAM 69 the X-coordinate value : SN of the vertical peak point of the N-th set of frame data and X-coordinate value : SN-1 of the vertical peak point of the (N-1)th set of frame data, and judges based on the vertical peak point of the (N-1)th set of frame data whether or not the vertical peak point of the N-th set of frame data moves in the roll advancing direction.

When judging in S4212 that the vertical peak point of the N-th set of frame data moves in the roll advancing direction on the basis of the vertical peak point of the (N-1)th set of frame data, the CPU 65 proceeds to S4213 and deems a value, into which a predetermined value is added to the X-coordinate value : SN of the vertical peak point of the N-th set of frame data, as the X-coordinate value : UN of the horizontal peak point of the N-th set of frame data. Then, the CPU 65 executes the processes in S4214 and subsequent steps, thereby executing the synthesizing process of the N-th set of frame data.

While on the other hand, when judging in S4212 that the vertical peak point of the N-th set of frame data does not move in the roll advancing direction on the basis of the vertical peak point of the (N-1)th set of frame data, the CPU 65 deems that the rolling of the finger placed on the first side surface 2a of the prism 2 is ended, and, after transmitting the synthetic image data stored in the work memory 63 to the external storage device, finishes the execution of the image processing flow.

As discussed above, the horizontal peak point in addition to the vertical peak point is used as the parameter for determining the synthetic fiducial position or judging the end of rolling of the finger, thereby making it feasible to execute the synthesizing process of the images in the case where only the horizontal peak point moves in the roll advancing direction without any movement of the vertical peak point

### <Embodiment 15>

The first embodiment discussed above has dealt with the example of scanning all the areas of the frame data when detecting the vertical peak points of the second and subsequent sets of frame data. An embodiment 15, however, will deal with an example of scanning only the image in the area positioned in the roll advancing direction on the basis of the X-coordinate value of the vertical peak point of the frame data just anterior thereto when detecting the vertical peak point of a certain set of frame data.

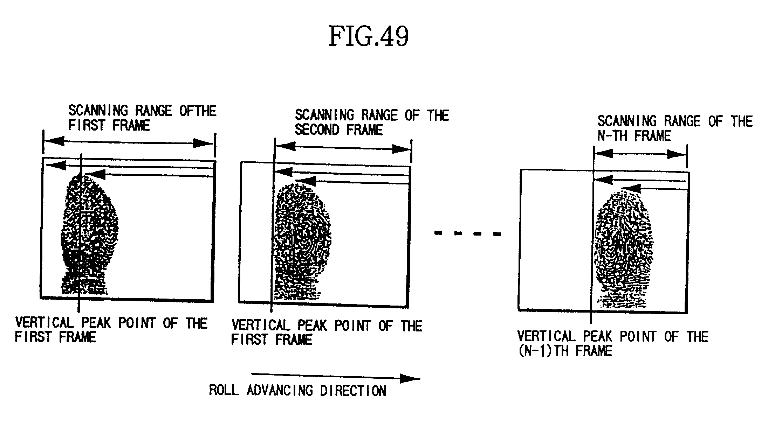

In this case, the vertical peak point detecting unit 7 of the image processing circuit 6, as illustrated in FIG. 49, scans the frame data in the roll advancing direction and in the reverse direction (from the right side to the left side in FIG. 49) of the finger, and scans a range from the proximal edge (a right edge of the frame in FIG. 49) in the roll advancing direction to the vertical line passing through the vertical peak point of the frame data just anterior thereto.

If done in this way, it is feasible to reduce the time required for the process of detecting the vertical peak point.

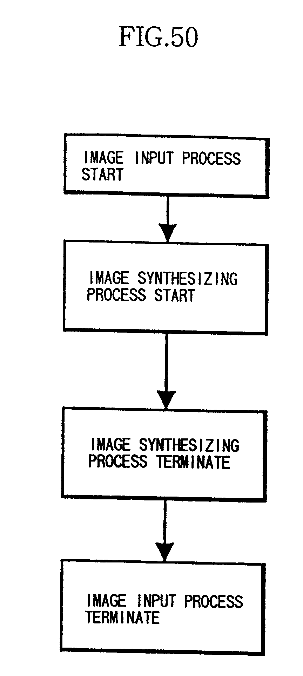

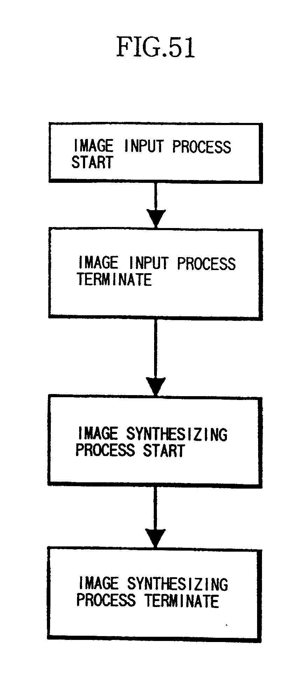

Note that the first through fifteenth embodiments discussed above, as shown in FIG. 50, have dealt with the example in which the image synthesizing process is executed in real time in parallel to the input process of the rolled fingerprint image through the CCD imaging device 5, but may be, as shown in FIG. 51, executed after the end of the input process of the rolled fingerprint image through the CCD imaging device 5.

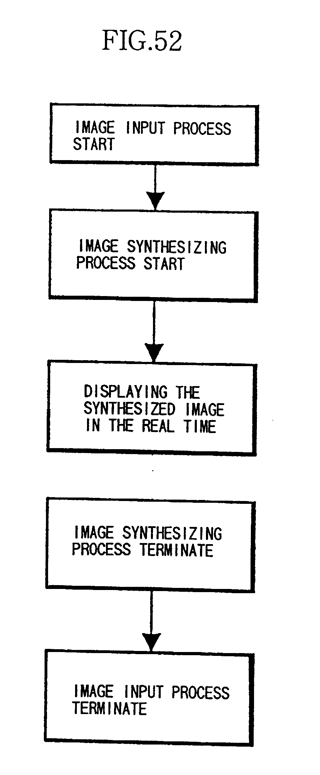

Further, the synthesized frame data (to be processed on the work memory 63) may be, as illustrated in FIG. 52, displayed in real time on the display device.

It is apparent that, in this invention, a wide range of different working modes can be formed based on the invention without deviating from the spirit and scope of the invention. This invention is not restricted by its specific working modes except being limited by the appended claims.

## Claims

1. A rolled fingerprint image capturing system comprising:
image inputting means for inputting a fingerprint image of a finger which is rolled and imprinted on an input surface on a frame unit;
characteristic point detecting means for detecting a position of a characteristic point of the fingerprint image from the frame data;
synthetic area determining means for determining an area to be extracted for synthesization in accordance with the position of the characteristic point;
image extracting means for extracting, from the frame data, image data in the synthetic area determined by said synthetic area determining means; and
image synthesizing means for rewriting image data in the area corresponding to the synthetic area of a synthesized frame obtained by synthesizing the frame data inputted before said image inputting means inputs the frame data, into the image data extracted by said image extracting means.

2. A rolled fingerprint image capturing system according to claim 1, further comprising:
a finger rolling direction judging means for predicting a roll advancing direction of the finger placed on the input surface in accordance with the position of the characteristic point,
wherein said synthetic area determining means includes:
a synthetic fiducial position determining unit for determining a position of a boundary of the area that should be extracted from the frame data in accordance with the position of the characteristic point; and
a synthetic area determining unit for deeming, as a synthetic image area, an area positioned in the roll advancing direction on the basis of the boundary position.

3. A rolled fingerprint image capturing system according to claim 2, wherein said finger rolling direction judging means judges whether or not the characteristic point is positioned within a half of the area on one side of the frame or a half of the area on the other side of the frame, judges that the finger roll advancing direction is set in a direction from one side toward the other side of the frame when the characteristic point is positioned within the half of area on one side of the frame, and judges that the finger roll advancing direction is set in a direction from the other side toward one side of the frame when the characteristic point is positioned in the half of area on the other side of the frame.

4. A rolled fingerprint image capturing system according to claim 2, wherein said synthetic area determining unit deems, as a synthetic area, only an area positioned within a predetermined range in the roll advancing direction on the basis of the boundary position.

5. A rolled fingerprint image capturing system according to claim 4, further comprising:
finger width detecting means for detecting one edge on one side in a lateral direction of the finger and an edge on the other side by scanning the frame data and deeming a distance between these edges in the lateral direction as a width of the finger,
wherein said synthetic area determining unit determines the predetermined range in accordance with the width of the finger.

6. A rolled fingerprint image capturing system according to any of claims 2 to 5, wherein if the position of the characteristic point of a second set of frame data of two sets of consecutive frame data does not move in the finger roll advancing direction on the basis of a position of a characteristic point of a first set of frame data, said synthetic fiducial position determining unit determines a boundary position by deeming, as a characteristic point of the second set of frame data, a position in which the characteristic point of the first set of frame data moves a predetermined distance in the roll advancing direction.

7. A rolled fingerprint image capturing system according to any preceding claim, further comprising:
finger rolling direction judging means for predicting a roll advancing direction fot eh finger placed on the input surface in accordance with the position of the characteristic point; and
end-of-roll judging means for deeming that a roll of the finger placed on the input surface is ended if the characteristic point of each set of frame data of a predetermined number of sets of frame data does not move in the finger roll advancing direction on the basis of the characteristic point of the frame data just anterior thereto.

8. A rolled fingerprint image capturing system according to any of claims 2 to 6, wherein said characteristic point detecting means includes:
a first characteristic point detecting unit for deeming a front edge of the finger in a longitudinal direction as a first characteristic point by scanning the frame data inputted by said fingerprint image inputting means; and
a second characteristic point detecting unit for deeming, as a second characteristic point, an edge of the finger in the lateral direction thereof in the roll advancing direction by scanning the frame data, and
wherein said synthetic fiducial position determining unit, if the first characteristic point of the second set of frame data of the two sets of consecutive frame data does not move in the finger roll advancing direction on the basis of the first characteristic point of the first set of frame data, and if the second characteristic point of the second set of frame data moves in the finger roll advancing direction on the basis of the second characteristic point of the first set of frame data, deems a value obtained by substituting a distance at which the second characteristic point of the second set of frame data moves from the second characteristic point of the first set of frame data into a predetermined function, as a distance at which the first characteristic point of the second set of frame data moves from the first characteristic point of the first set of frame data, determines a position of the first characteristic point of the second set of frame data, and thus determines a boundary position in accordance with the position of the first characteristic point determined.

9. A rolled fingerprint image capturing system according to any preceding claim, wherein said characteristic point detecting means includes:
a first characteristic point detecting unit for deeming a front edge of the finger in a longitudinal direction as a first characteristic point by scanning the frame data inputted by said fingerprint image inputting means; and
a second characteristic point detecting unit for deeming, as a second characteristic point, an edge of the finger in the lateral direction thereof in the roll advancing direction by scanning the frame data, and
wherein said synthetic fiducial position determining unit, if the first characteristic point of the second set of frame data of the two sets of consecutive frame data does not move in the finger roll advancing direction on the basis of the first characteristic point of the first set of frame data, and if the second characteristic point of the second set of frame data moves in the finger roll advancing direction on the basis of the second characteristic point of the first set of frame data, deems a value obtained by substituting a position of the second characteristic point of the second set of frame data into a predetermined function, as a position of the first characteristic point of the second set of frame data, and thus determines a boundary position.

10. A rolled fingerprint image capturing system according to any preceding claim, wherein said characteristic point detecting means scans the frame data in parallel to the finger roll advancing direction, deems as a first characteristic point a position in which a pixel having a pixel value equal to or greater than a predetermined value is detected for the first time, detects a scan line with a shortest distance from the position in which the pixel having the pixel value equal to or greater than the predetermined value is detected for the first time by each scan line to a proximal edge of each scan line, and deems as a second characteristic point a position in which the pixel having the pixel value equal to or greater than the predetermined value is detected for the first time by that scan line.

11. A rolled fingerprint image capturing system according to claim 8 or 9, further comprising:
end-of-roll judging means for deeming that a roll of the finger is ended when detecting that the first characteristic point does not exist within a predetermined area of the frame data.

12. A rolled fingerprint image capturing system according to any preceding claim, further comprising:
end-of-roll judging means for deeming that the roll of the finger is ended when detecting that the characteristic point of each set of frame data in a predetermined number of sets of consecutive frame data does not move in the finger roll advancing direction on the basis of the characteristic point of the frame data just anterior thereto.

13. A rolled fingerprint image capturing system according to claim 8, 9 or 11, further comprising:
end-of-roll judging means for deeming that the roll of the finger is ended when judging that the first characteristic point does not exist within the predetermined area of the frame data, and when judging that the second characteristic point of each set of frame data in the predetermined number of sets of consecutive frame data does not move in the finger roll advancing direction on the basis of the second characteristic point of the frame data just anterior thereto, or when judging that the first characteristic point of the second set of frame data in two sets of consecutive frame data does not move in the finger roll advancing direction on the basis of the first characteristic point of the first set of frame data and judging that the second characteristic point of the second set of frame data does not move in the finger roll advancing direction on the basis of the second characteristic point of the first set of frame data.

14. A rolled fingerprint image capturing system according to claim 8, 9 or 11, further comprising:
end-of-roll judging means for deeming that the roll of the finger is ended when judging that the first characteristic point and the second characteristic point of each set of frame data in the predetermined number of sets of consecutive frame data doe not move in the finger roll advancing direction on the basis of the first characteristic and the second characteristic point of the frame data just anterior thereto.

15. A rolled fingerprint image capturing system according to any preceding claim, further comprising:
end-of-roll judging means for deeming that the roll of the finger is ended when judging that the characteristic point of each set of frame data in the predetermined number of sets of consecutive frame data moves in a direction opposite to the finger roll advancing direction on the basis of the characteristic point of the frame data just anterior thereto.

16. A rolled fingerprint image capturing system according to any of claims 8, 9, 11, 13, or 14, wherein said second characteristic point detecting unit detects the second characteristic points of the first set of frame data and the second set of frame data as far as the first characteristic point of the second set of frame data in the two sets of consecutive frame data does not move in the finger roll advancing direction on the basis of the first characteristic point of the first set of frame data.

17. A rolled fingerprint image capturing system according to claim 2 or any of claims 3 to 16 as appended to claim wherein said characteristic point detecting means, when detecting the characteristic point of the frame data, scans only an area positioned in the finger roll advancing direction on the basis of the boundary position determined by the frame data just anterior to the above frame data.

18. A rolled fingerprint image capturing system according to claim 2 or any of claims 3 to 17 as appended to claim further comprising: interruption-of-roll judging means for, when judging that the characteristic points of the two sets of consecutive frame data do not move in the roll advancing direction and judging that all the characteristic points of the predetermined number of sets of frame data containing the two sets of frame data doe not move in the direction reverse to the roll advancing direction on the basis of the characteristic point of the frame data just anterior thereto, deeming that the roll of the finger is interrupted, and being set on standby for next frame data.

19. A storage medium storing a program carrying out the following steps:
an inputting step of inputting a fingerprint image of a finger which is rolled and imprinted on an input surface on a frame unit;
a characteristic point detecting step of detecting a position of a characteristic point of the finger from the frame data;
a synthetic area determining step for determining an area to be extracted for synthesization in accordance with the position of the characteristic point;
an image extracting step of extracting image data in the synthetic area from the frame data; and
an image synthesizing step of rewriting the image data in an area corresponding to the synthetic area of a synthesized frame obtained by synthesizing the frame data inputted just anterior to the above frame data, into the image data extracted in said image extracting step.
